# EUROPEAN PATENT APPLICATION

(11) **EP 4 797 409 A1**
(43) Date of publication of application: **26.08.2026**
(21) Application number: 24879175.8
(22) Date of filing: 21.10.2024
(51) Int. Cl.: H01M 50/247, H01M 50/503, H01M 50/264, B25F 5/02, B25F 5/00

(54) **ELECTRIC TOOL AND UNLOCKING METHOD FOR BATTERY PACK FITTED WITH ELECTRIC TOOL**

(30) Priority: 19.10.2023 CN 202311360371
(71) Applicant: Positec Power Tools (Suzhou) Co., Ltd., Suzhou, Jiangsu 215123 (CN)
(72) Inventor: SUN, Jianbo, Suzhou, Jiangsu 215123 (CN); CAI, Hong, Suzhou, Jiangsu 215123 (CN); YU, Xuefeng, Suzhou, Jiangsu 215123 (CN)
(74) Representative: Kilburn & Strode LLP
(86) International application number: PCT/CN2024/126211
(87) International publication number: WO 2025/082535

(57) **Abstract**

The present disclose relates to a power tool and an unlocking method for a battery pack matched with the power tool. The power tool includes a housing and a locking assembly. The housing is provided with a battery pack mounting portion, the battery pack mounting portion is detachably connected to a battery pack, and the battery pack is configured to provide electrical energy to the power tool. The locking assembly includes a locking tongue, a locking tongue receiving portion, and a trigger member. The locking tongue and the trigger member are movably disposed at one of the housing and the battery pack, and the locking tongue receiving portion is disposed at the other of the housing and the battery pack. The locking tongue is engaged with the locking tongue receiving portion to lock the battery pack relative to the housing; the locking tongue is disengaged from the locking tongue receiving portion to unlock the battery pack relative to the housing. The power tool is configured for an external force to be applied on the trigger member, and at least two different actions generated by the trigger member directly or indirectly drive the locking tongue to move relative to the locking tongue receiving portion to unlock the battery pack relative to the housing.

## Description

### Technical Field

The present disclose relates to a power tool and an unlocking method for a battery pack matched with the power tool.

### Related Art

Compared with fuel-powered tools, power tools have advantages of being environmentally friendly and clean, and also generate relatively less noise. Therefore, power tools are increasingly favored by power tool users. A power tool is powered by a battery pack, and the battery pack often has a short duration. Therefore, to improve work efficiency, the battery pack is usually configured to be detachably mounted relative to the power tool for replacement when power of the battery pack is insufficient.

A power tool usually includes a battery pack mounting portion, and a battery pack is detachably mounted to the battery pack mounting portion. To prevent the battery pack from disengaging from the power tool, causing injury to surrounding people or animals, or causing damage to objects, which creating a major safety hazard when the power tool is in use. To this end, in related art, an interlocking mechanism is provided between the battery pack and a housing of the power tool, and an unlocking method of the interlocking mechanism is usually to apply a single unlocking action to an unlock button of a battery pack to unlock the battery pack.

### SUMMARY

Based on this, it is necessary to provide a power tool that can prevent a battery pack from being unlocked due to accidental triggering, reduce a risk of abnormal disengagement of the battery pack from the power tool, and improve safety when the power tool is in use.

The present disclose provides a power tool, comprising: a housing, provided with a battery pack mounting portion, the battery pack mounting portion being detachably connected to a battery pack, the battery pack being configured to provide electrical energy to the power tool; a locking assembly, including a locking tongue, a locking tongue receiving portion and a trigger member; the locking tongue and the trigger member are movably disposed at one of the housing and the battery pack, and the locking tongue receiving portion is disposed at the other of the housing and the battery pack; the locking tongue is engaged with the locking tongue receiving portion to cause the battery pack to be locked relative to the housing; the locking tongue is disengaged from the locking tongue receiving portion to cause the battery pack to be unlocked relative to the housing; the power tool is configured for an external force to be applied on the trigger member, and at least two different actions generated by the trigger member directly or indirectly drive the locking tongue to move relative to the locking tongue receiving portion, and the number of the trigger member is one or more; in a direction perpendicular to an insertion direction of the battery pack, one trigger member or a plurality of trigger members are configured to be located at one side of the battery pack.

The present disclose provides a power tool, comprising: a housing, provided with a battery pack mounting portion, the battery pack mounting portion being detachably connected to a battery pack, the battery pack being configured to provide electrical energy to the power tool; a locking assembly, including a locking tongue, a locking tongue receiving portion and a trigger member; the locking tongue and the trigger member are movably disposed at one of the housing and the battery pack, and the locking tongue receiving portion is disposed at the other of the housing or the battery pack; the locking tongue is engaged with the locking tongue receiving portion to cause the battery pack to be locked relative to the housing; the locking tongue is disengaged from the locking tongue receiving portion to cause the battery pack to be unlocked relative to the housing; the power tool is configured for an external force to be applied on the trigger member, and at least two different actions generated by the trigger member directly or indirectly drive the locking tongue to move relative to the locking tongue receiving portion, and the number of the trigger member is one or more; the battery pack comprises a battery pack housing, the battery pack housing extends along three orthogonal spatial directions (x, y, z) in directions of a width axis W, a thickness axis T, and a height axis H of the battery pack housing, the battery pack housing comprises a width extending on the width axis W, a thickness extending on the thickness axis T, and a height extending on the height axis H;
one trigger member or a plurality of trigger members are located at one side of a plane perpendicular to the thickness axis and passing through a midpoint of the thickness; or one trigger member or a plurality of trigger members are located at one side of a plane perpendicular to the width axis and passing through a midpoint of the width.

The present disclose provides a power tool, comprising: a housing, provided with a battery pack mounting portion, the battery pack mounting portion being detachably connected to a battery pack, the battery pack being configured to provide electrical energy to the power tool; a locking assembly, including a locking tongue, a locking tongue receiving portion and a trigger member; the locking tongue and the trigger member are movably disposed at one of the housing and the battery pack, and the locking tongue receiving portion is disposed at the other of the housing and the battery pack; the locking tongue is engaged with the locking tongue receiving portion to cause the battery pack to be locked relative to the housing; the locking tongue is disengaged from the locking tongue receiving portion to cause the battery pack to be unlocked relative to the housing;
the power tool is configured for an external force to be applied on the trigger member, and at least two different actions generated by the trigger member directly or indirectly drive the locking tongue to move relative to the locking tongue receiving portion; the battery pack comprises a battery pack housing, the battery pack housing extends along three orthogonal spatial directions (x, y, z) in directions of a width axis W, a thickness axis T, and a height axis H of the battery pack housing, the battery pack housing comprises a width extending on the width axis W, a thickness extending on the thickness axis T, and a height extending on the height axis H;
all of the trigger member are located at one side of a plane perpendicular to the thickness axis and passing through a midpoint of the thickness; or
all of the trigger member are located at one side of a plane perpendicular to the width axis and passing through a midpoint of the width.

The present disclose provides a power tool, comprising: a housing, provided with a battery pack mounting portion, the battery pack mounting portion being capable of allowing a battery pack to be inserted and connected, the battery pack being configured to provide electrical energy to the power tool; a locking assembly, including a locking tongue, a locking tongue receiving portion and a trigger member; the locking tongue and the trigger member are movably disposed at one of the housing and the battery pack, and the locking tongue receiving portion is disposed at the other of the housing and the battery pack; the locking tongue is engaged with the locking tongue receiving portion to cause the battery pack to be locked relative to the housing; the locking tongue is disengaged from the locking tongue receiving portion to cause the battery pack to be unlocked relative to the housing; the power tool is configured for an external force to be applied on the trigger member, and at least two different actions generated by the trigger member directly or indirectly drive the locking tongue to move relative to the locking tongue receiving portion, and the number of the trigger member is one or more;
the battery pack comprises a battery pack housing, the battery pack housing comprises a first outer contour surface 71 and a second outer contour surface 72, the first outer contour surface 71 and the second outer contour surface 72 are oppositely disposed in a direction perpendicular to an insertion direction of the battery pack, at least a portion of the locking tongue or the locking tongue receiving portion is disposed at the first outer contour surface 71, and one trigger member or a plurality of trigger members are located at one side of the second outer contour surface 72.

The present disclose provides a power tool, comprising: a housing, provided with a battery pack mounting portion, the battery pack mounting portion being capable of allowing a battery pack to be inserted and connected, the battery pack being configured to provide electrical energy to the power tool; a locking assembly, including a locking tongue, a locking tongue receiving portion and a trigger member; the locking tongue and the trigger member are movably disposed at one of the housing and the battery pack, and the locking tongue receiving portion is disposed at the other of the housing and the battery pack; the locking tongue is engaged with the locking tongue receiving portion to cause the battery pack to be locked relative to the housing; the locking tongue is disengaged from the locking tongue receiving portion to cause the battery pack to be unlocked relative to the housing; the power tool is configured for an external force to be applied on the trigger member, and at least two different actions generated by the trigger member directly or indirectly drive the locking tongue to move relative to the locking tongue receiving portion; the battery pack comprises a battery pack housing, the battery pack housing comprises a first outer contour surface 71 and a second outer contour surface 72, the first outer contour surface 71 and the second outer contour surface 72 are oppositely disposed in a direction perpendicular to an insertion direction of the battery pack, at least a portion of the locking tongue or the locking tongue receiving portion is disposed at the first outer contour surface 71, and all of the trigger member are located at one side of the second outer contour surface 72.

The present disclose provides a power tool, comprising a housing, provided with a battery pack mounting portion, the battery pack mounting portion being capable of allowing a battery pack to be inserted and connected, the battery pack being configured to provide electrical energy to the power tool; a locking assembly, including a locking tongue, a locking tongue receiving portion and a trigger member; the locking tongue and the trigger member are movably disposed at one of the housing and the battery pack, and the locking tongue receiving portion is disposed at the other of the housing and the battery pack; the locking tongue is engaged with the locking tongue receiving portion to cause the battery pack to be locked relative to the housing; the locking tongue is disengaged from the locking tongue receiving portion to cause the battery pack to be unlocked relative to the housing; the number of the trigger member is only one, and the power tool is configured for an external force to be applied on the trigger member, and at least two different actions generated by the trigger member directly or indirectly drive the locking tongue to move relative to the locking tongue receiving portion.

In one embodiment, the at least two different actions comprise one action generated by the trigger member, which realizes a movement of the trigger member and the battery pack is not unlocked relative to the housing; and another action generated by the trigger member, which realizes a movement of the trigger member and drives the locking tongue to move, so as to unlock the battery pack relative to the housing.

In one embodiment, one action generated by the trigger member realizes a movement of the trigger member along a first stroke trajectory; another action generated by the trigger member realizes a movement of the trigger member along a second stroke trajectory different from the first stroke trajectory; the first stroke trajectory of the trigger member and the second stroke trajectory of the trigger member are not on a straight line, or a direction of movement of the first stroke trajectory of the trigger member and a direction of movement of the second stroke trajectory of the trigger member are different.

In one embodiment, one action generated by the trigger member realizes a movement of the trigger member along a first stroke trajectory; another action generated by the trigger member realizes a movement of the trigger member along a second stroke trajectory different from the first stroke trajectory; the power tool is configured to, at least based on the first stroke trajectory and the second stroke trajectory, unlock the battery pack relative to the housing.

In one embodiment, the number of the trigger member is only one, and the first stroke trajectory and the second stroke trajectory are generated by a sequential movement of the trigger member; or the number of the trigger member is at least two, and the first stroke trajectory and the second stroke trajectory are generated by a movement of different the trigger members.

In one embodiment, the at least two different actions comprise one action generated by the trigger member, which realizes a movement of the trigger member and the locking tongue does not move; and another action generated by the trigger member, which realizes a movement of the trigger member and drives the locking tongue to move to disengage from the locking tongue receiving portion.

In one embodiment, the number of the trigger member is only one, one action generated by the trigger member realizes a movement of the trigger member and the battery pack is not unlocked relative to the housing; and another action generated by the trigger member realizes a movement of the trigger member and drives the locking tongue to move to disengage from the locking tongue receiving portion.

In one embodiment, the number of the trigger member is only one, and the at least two different actions are sequentially generated on same the trigger member.

In one embodiment, the locking assembly further comprises a locking tongue linkage member, one action generated by the trigger member realizes that the locking tongue is at a position allowed to move; another action generated by the trigger member realizes a movement of the locking tongue linkage member and drives the locking tongue to move relative to the locking tongue receiving portion.

In one embodiment, the trigger member further comprises a first trigger member, and a restraining member for locking the first trigger member, the restraining member comprises a first position and a second position that generates a movement relative to the housing; at the first position, the restraining member does not allow the first trigger member to drive the locking tongue to move; at the second position, the first trigger member is configured to drive the locking tongue to move.

In one embodiment, one action generated by the trigger member is configured as a movement trajectory generated by the restraining member, and another action generated by the trigger member is configured as a movement trajectory generated by the first trigger member; the movement trajectory generated by the restraining member realizes a movement of the restraining member from the first position to the second position, so as to allow the first trigger member to be configured to drive the locking tongue to move; the movement trajectory generated by the first trigger member realizes that the first trigger member drives the locking tongue to disengage from the locking tongue receiving portion.

In one embodiment, the trigger member comprises a first trigger member and a second trigger member, the locking tongue comprises a first locking tongue and a second locking tongue that are independently movable, the first trigger member is configured to drive the first locking tongue to move, and the second trigger member is configured to drive the second locking tongue to move.

In one embodiment, the first trigger member and the second trigger member are independent from each other.

In one embodiment, one action generated by the first trigger member is configured as a movement trajectory generated by the first trigger member, which realizes that the first trigger member drives the first locking tongue to disengage from the locking tongue receiving portion, and another action generated by the second trigger member is configured as a movement trajectory generated by the second trigger member, which realizes that the second trigger member drives the second locking tongue to disengage from the locking tongue receiving portion.

In one embodiment, the trigger member comprises a first trigger member and a second trigger member, the number of the locking tongue is only one, the locking assembly further comprises a first moving member and a second moving member that are independently movable, the first moving member and the second moving member each comprise a locking position and an unlocking position, the first trigger member is configured to drive the first moving member to move between the locking position and the unlocking position, the second trigger member is configured to drive the second moving member to move between the locking position and the unlocking position, when at least one of the first moving member or the second moving member is at the locking position, the locking tongue is engaged with the locking tongue receiving portion; when both the first moving member and the second moving member are at the unlocking position, the locking tongue is disengaged from the locking tongue receiving portion.

In one embodiment, one action generated by the trigger member is configured as a movement of the first trigger member, so as to realize driving the first moving member to move to the unlocking position; another action generated by the trigger member is configured as a movement of the second trigger member, so as to realize driving the second moving member to move to the unlocking position.

In one embodiment, all of the trigger member and all of the locking tongue are located at one side of a plane perpendicular to the thickness axis and passing through a midpoint of the thickness; or
all of the trigger member and all of the locking tongue are located at one side of a plane perpendicular to the width axis and passing through a midpoint of the width.

In one embodiment, all of the trigger member, all of the locking tongue, and all of the locking tongue receiving portion are located at one side of a plane perpendicular to the thickness axis and passing through a midpoint of the thickness; or
all of the trigger member, all of the locking tongue, and all of the locking tongue receiving portion are located at one side of a plane perpendicular to the width axis and passing through a midpoint of the width.

In one embodiment, all of the trigger member and all of the locking tongue are located at one side of the second outer contour surface 72.

In one embodiment, all of the trigger member, all of the locking tongue, and all of the locking tongue receiving portion are located at one side of the second outer contour surface 72.

In one embodiment, the locking tongue and the trigger member are movably disposed at the housing, the locking tongue receiving portion is disposed at the battery pack, the number of the locking tongue receiving portion is only one, and the locking tongue receiving portion is configured to be engaged with at least one of the locking tongue.

In one embodiment, the battery pack further comprises a battery pack terminal base, the battery pack terminal base comprises a plurality of terminals electrically connected to the power tool, in a direction perpendicular to an insertion direction of the battery pack, the battery pack terminal base is disposed close to the first outer contour surface 71, and is disposed away from the second outer contour surface 72.

In one embodiment, the power tool is a chainsaw, the chainsaw comprising: a cutting assembly, mounted to the housing, the cutting assembly comprising a guide bar and a saw chain surrounding the guide bar, the guide bar providing a support and guiding for the saw chain; and a top handle, for a user to hold; the cutting assembly is disposed at front side of the housing in a longitudinal direction of the chainsaw; the battery pack mounting portion is disposed at a rear side of the housing in the longitudinal direction of the chainsaw; the top handle is disposed above the housing in a height direction of the chainsaw.

In one embodiment, the power tool is configured to, based on an external force applied to the trigger member, drive a same the locking tongue to sequentially move a first movement stroke and a second movement stroke; or, based on an external force applied to the trigger member, drive two locking tongues to respectively move a first movement stroke and a second movement stroke.

In one embodiment, the locking tongue and the trigger member are disposed at the housing, and the locking tongue receiving portion is disposed at the battery pack; or
the locking tongue and the trigger member are disposed at the battery pack housing, and the locking tongue receiving portion is disposed at the housing.

In one embodiment, the battery pack mounting portion is configured to allow a battery pack to be inserted and connected, in a direction perpendicular to an insertion direction of the battery pack, a straight-line distance between the first trigger member and the second trigger member is not greater than 12 cm.

In one embodiment, the trigger member is movably disposed relative to the locking tongue linkage member and is configured to abut against the locking tongue linkage member.

In one embodiment, the locking tongue linkage member is movably disposed relative to the locking tongue and is configured to abut against the locking tongue; or, the locking tongue linkage member is fixedly connected relative to the locking tongue.

In one embodiment, the restraining member is movably disposed relative to the housing; in a locked state, the restraining member locks the trigger member or blocks an operating end of the trigger member, so as to not allow the trigger member to drive the locking tongue to move.

In one embodiment, the first trigger member is directly connected, or indirectly connected, or abutted to the first locking tongue; the second trigger member is directly connected, or indirectly connected, or abutted to the second locking tongue.

The present disclose provides a power tool, comprising: a housing, provided with a battery pack mounting portion, the battery pack mounting portion being detachably connected to a battery pack, the battery pack being configured to provide electrical energy to the power tool; a locking assembly, including a locking tongue, a locking tongue receiving portion and a trigger member, the trigger member acts on the locking tongue and drives the locking tongue to move; wherein the locking tongue and the trigger member are movably disposed at one of the housing and the battery pack, and the locking tongue receiving portion is disposed at the other of the housing and the battery pack; the locking tongue is engaged with the locking tongue receiving portion to cause the battery pack to be locked relative to the housing; the locking tongue is disengaged from the locking tongue receiving portion to cause the battery pack to be unlocked relative to the housing; the power tool is configured for an external force to be applied on the trigger member, and at least two different actions generated by the trigger member directly or indirectly drive the locking tongue to move relative to the locking tongue receiving portion, the trigger member comprises a first trigger member and a second trigger member;
the battery pack comprises a battery pack housing, the battery pack housing extends along three orthogonal spatial directions (x, y, z) in directions of a width axis W, a thickness axis T, and a height axis H of the battery pack housing, the battery pack housing comprises a width extending on the width axis W, a thickness extending on the thickness axis T, and a height extending on the height axis H;
the first trigger member and the second trigger member are both located at one side of a plane perpendicular to the thickness axis and passing through a midpoint of the thickness; or the first trigger member and the second trigger member are both located at one side of a plane perpendicular to the width axis and passing through a midpoint of the width.

The present disclose provides a power tool, comprising: a housing, provided with a battery pack mounting portion, the battery pack mounting portion being capable of allowing a battery pack to be inserted and connected, the battery pack being configured to provide electrical energy to the power tool; a locking assembly, including a locking tongue, a locking tongue receiving portion and a trigger member; wherein the locking tongue and the trigger member are movably disposed at one of the housing and the battery pack, and the locking tongue receiving portion is disposed at the other of the housing and the battery pack; the locking tongue is engaged with the locking tongue receiving portion to cause the battery pack to be locked relative to the housing; the locking tongue is disengaged from the locking tongue receiving portion to cause the battery pack to be unlocked relative to the housing;
the power tool is configured for an external force to be applied on the trigger member, and at least two different actions generated by the trigger member directly or indirectly drive the locking tongue to move relative to the locking tongue receiving portion, the trigger member comprises a first trigger member and a second trigger member; the battery pack comprises a battery pack housing, the battery pack housing comprises a first outer contour surface 71 and a second outer contour surface 72, the first outer contour surface 71 and the second outer contour surface 72 are oppositely disposed in a direction perpendicular to an insertion direction of the battery pack, at least a portion of the locking tongue or the locking tongue receiving portion is disposed at the first outer contour surface 71, and the first trigger member and the second trigger member are both located at one side of the second outer contour surface 72.

The present disclose provides a power tool, comprising: a housing, provided with a battery pack mounting portion, the battery pack mounting portion being detachably connected to a battery pack, the battery pack being configured to provide electrical energy to the power tool; a locking assembly, including a locking tongue, a locking tongue receiving portion and a trigger member, the trigger member acts on the locking tongue and drives the locking tongue to move; wherein the locking tongue and the trigger member are movably disposed at one of the housing and the battery pack, and the locking tongue receiving portion is disposed at the other of the housing and the battery pack; the locking tongue is engaged with the locking tongue receiving portion to cause the battery pack to be locked relative to the housing; the locking tongue is disengaged from the locking tongue receiving portion to cause the battery pack to be unlocked relative to the housing;
the power tool is configured for an external force to be applied on the trigger member, and at least two different actions generated by the trigger member directly or indirectly drive the locking tongue to move relative to the locking tongue receiving portion, the trigger member comprises a first trigger member and a second trigger member; in a direction perpendicular to an insertion direction, the first trigger member and the second trigger member are both located at one side of the battery pack.

In one embodiment, the at least two different actions comprise one action generated by the first trigger member, which realizes a movement of the first trigger member and the battery pack is not unlocked relative to the housing; and another action generated by the second trigger member, which realizes a movement of the second trigger member and drives the locking tongue to move, so as to unlock the battery pack relative to the housing.

In one embodiment, the one action generated by the first trigger member realizes a movement of the first trigger member along a first stroke trajectory; the another action generated by the second trigger member realizes a movement of the second trigger member along a second stroke trajectory different from the first stroke trajectory; the first stroke trajectory and the second stroke trajectory are not on a straight line, or a direction of movement of the first stroke trajectory and a direction of movement of the second stroke trajectory are different.

In one embodiment, one action generated by the first trigger member realizes a movement of the first trigger member along a first stroke trajectory; another action generated by the second trigger member realizes a movement of the second trigger member along a second stroke trajectory different from the first stroke trajectory;
the power tool is configured to, at least based on the first stroke trajectory and the second stroke trajectory, unlock the battery pack relative to the housing.

In one embodiment, the locking tongue comprises a first locking tongue and a second locking tongue that are independently movable from each other, the first trigger member is configured to drive the first locking tongue to move, and the second trigger member is configured to drive the second locking tongue to move.

In one embodiment, one action generated by the first trigger member is configured as a movement trajectory generated by the first trigger member, which realizes that the first trigger member drives the first locking tongue to disengage from the locking tongue receiving portion, and another action generated by the second trigger member is configured as a movement trajectory generated by the second trigger member, which realizes that the second trigger member drives the second locking tongue to disengage from the locking tongue receiving portion.

In one embodiment, the trigger member comprises a first trigger member and a second trigger member, the number of the locking tongue is only one, the locking assembly further comprises a first moving member and a second moving member that are independently movable, the first moving member and the second moving member each comprise a locking position and an unlocking position, the first trigger member is configured to drive the first moving member to move between the locking position and the unlocking position, the second trigger member is configured to drive the second moving member to move between the locking position and the unlocking position, when at least one of the first moving member or the second moving member is at the locking position, the locking tongue is engaged with the locking tongue receiving portion; when both the first moving member and the second moving member are at the unlocking position, the locking tongue is disengaged from the locking tongue receiving portion.

In one embodiment, one action generated by the trigger member is configured as a movement of the first trigger member, so as to realize driving the first moving member to move to the unlocking position; another action generated by the trigger member is configured as a movement of the second trigger member, so as to realize driving the second moving member to move to the unlocking position.

In one embodiment, the trigger member further comprises a first trigger member, and a second trigger member for locking the first trigger member, the second trigger member comprises a first position and a second position that generates a movement relative to the housing;
at the first position, the second trigger member does not allow the first trigger member to drive the locking tongue to move;
at the second position, the first trigger member is configured to drive the locking tongue to move.

In one embodiment, one action generated by the trigger member is configured as a movement trajectory generated by the second trigger member, and another action generated by the trigger member is configured as a movement trajectory generated by the first trigger member;
the movement trajectory generated by the second trigger member realizes a movement of the second trigger member from the first position to the second position, so as to allow the first trigger member to be configured to drive the locking tongue to move; the movement trajectory generated by the first trigger member realizes that the first trigger member drives the locking tongue to disengage from the locking tongue receiving portion.

The present disclose provides an unlocking method for a battery pack configured with a power tool, the power tool comprising: a housing and a locking assembly provided on the housing, the housing being provided with a battery pack mounting portion, the battery pack mounting portion for the battery pack to be inserted and connected, the battery pack being configured to provide electrical energy to the power tool; the locking assembly comprising a locking tongue, a locking tongue receiving portion and a trigger member, the locking tongue and the trigger member being movably disposed at one of the housing and the battery pack, the locking tongue receiving portion being provided on the other of the housing and the battery pack, the unlocking method comprising at least following steps:
a first step: an external force is applied to the trigger member, the trigger member moves to generate a first stroke trajectory, to achieve the battery pack not unlocking relative to the housing;
a second step: the external force continues to be applied to the trigger member, the trigger member moves to generate a second stroke trajectory, to achieve the trigger member moving and driving the locking tongue to move, the second stroke trajectory being different from the first stroke trajectory;
the number of the trigger member is only one, the trigger member in the first step and the second step being a same trigger member.

In one embodiment, in the second step, the trigger member drives the locking tongue to move, and the battery pack unlocks relative to the housing.

In one embodiment, a direction of movement of the first stroke trajectory of the trigger member and a direction of movement of the second stroke trajectory of the trigger member are different, or the first stroke trajectory and the second stroke trajectory are not on a same straight line.

In one embodiment, the first stroke trajectory and the second stroke trajectory are generated by a sequential movement of the trigger member.

In one embodiment, the locking tongue and the trigger member are both movably disposed at the housing, the locking tongue receiving portion is disposed at the battery pack, the number of the locking tongue receiving portion is only one, the locking tongue receiving portion being configured to engage with the locking tongue.

In one embodiment, the power tool is a chainsaw, the chainsaw comprising: a cutting assembly, mounted to the housing, the cutting assembly comprising a guide bar and a saw chain disposed around the guide bar, the guide bar providing support for and guiding the saw chain; and a top handle, for a user to hold; the cutting assembly is disposed at a front side of the housing in a longitudinal direction of the chainsaw; the battery pack mounting portion is disposed at a rear side of the housing in the longitudinal direction of the chainsaw; the top handle is disposed above the housing in a height direction of the chainsaw.

In one embodiment, the power tool is a chainsaw, the chainsaw comprising: a cutting assembly, mounted to the housing, the cutting assembly comprising a guide bar and a saw chain disposed around the guide bar, the guide bar providing support for and guiding the saw chain; and a top handle, for a user to hold; the cutting assembly is disposed at a front side of the housing in a longitudinal direction of the chainsaw; the battery pack mounting portion is disposed at a rear side of the housing in the longitudinal direction of the chainsaw; the top handle is disposed above the housing in a height direction of the chainsaw;
the battery pack is inserted and mounted to the battery pack mounting portion in a manner that a first outer contour surface 71 and a second outer contour surface 72 of the battery pack are spaced apart and oppositely disposed in a first direction perpendicular to a plane where the guide bar is located, at least a portion of the locking tongue or the locking tongue receiving portion is disposed at the first outer contour surface 71, and one said trigger member or multiple said trigger members are located at one side of the second outer contour surface 72, or
the battery pack is inserted and mounted to the battery pack mounting portion in a manner that the first outer contour surface 71 and the second outer contour surface 72 of the battery pack are spaced apart and oppositely disposed in a second direction parallel to a plane where the guide bar is located, at least a portion of the locking tongue or the locking tongue receiving portion is disposed at the first outer contour surface 71, and one trigger member or a plurality of trigger members are located at one side of the second outer contour surface 72.

In one embodiment, the power tool is a chainsaw, the chainsaw comprising: a cutting assembly, mounted to the housing, the cutting assembly comprising a guide bar and a saw chain disposed around the guide bar, the guide bar providing support for and guiding the saw chain; there exists an intermediate cross-section parallel to a plane where the guide bar is located, the battery pack is inserted and mounted to the battery pack mounting portion in a manner that a first outer contour surface 71 and a second outer contour surface 72 of the battery pack are spaced apart and oppositely disposed in a first direction perpendicular to the plane where the guide bar is located, at least a portion of the locking tongue or the locking tongue receiving portion is disposed at the first outer contour surface 71, and one trigger member or a plurality of trigger members are located at one side of the second outer contour surface 72, or
the battery pack is inserted and mounted to the battery pack mounting portion in a manner that the first outer contour surface 71 and the second outer contour surface 72 of the battery pack are spaced apart and oppositely disposed in a second direction parallel to a plane where the guide bar is located, at least a portion of the locking tongue or the locking tongue receiving portion is disposed at the first outer contour surface 71, and one trigger member or a plurality of trigger members are located at one side of the second outer contour surface 72.

The present disclose provides a power tool, comprising: a housing, the housing being provided with a battery pack mounting portion, the battery pack mounting portion for a battery pack to be inserted and connected, the battery pack being configured to provide electrical energy to the power tool; a locking assembly, comprising a locking tongue, a locking tongue receiving portion and a trigger member, the trigger member being capable of driving the locking tongue to move relative to the locking tongue receiving portion; wherein the locking tongue receiving portion comprises a first receiving portion and a second receiving portion disposed front and rear in an insertion direction; the locking tongue engages with at least one of the first receiving portion or the second receiving portion to cause the battery pack to be locked relative to the housing; the locking tongue disengages from the first receiving portion and the second receiving portion to cause the battery pack to be unlocked relative to the housing;
the locking tongue and the trigger member are movably disposed at one of the housing and the battery pack, the locking tongue receiving portion being provided on the other of the housing and the battery pack.

In one embodiment, the battery pack comprises a battery pack housing, the battery pack housing extends in directions of a width axis W, a thickness axis T, and a height axis H of the battery pack housing along three orthogonal spatial directions (x, y, z), the battery pack housing comprising a width extending on the width axis W, a thickness extending on the thickness axis T, and a height extending on the height axis H, the trigger member and the locking tongue are both located at one side of a plane perpendicular to the thickness axis and passing through a midpoint of the thickness; or, the trigger member and the locking tongue are both located at one side of a plane perpendicular to the width axis and passing through a midpoint of the width.

In one embodiment, the battery pack comprises a battery pack housing, the battery pack housing comprising a first outer contour surface 71 and a second outer contour surface 72 disposed at intervals, the first outer contour surface 71 and the second outer contour surface 72 are oppositely disposed in a direction perpendicular to an insertion direction of the battery pack, at least a portion of the locking tongue or the locking tongue receiving portion is disposed at the first outer contour surface 71, and the trigger member and the locking tongue are both located at one side of the second outer contour surface 72.

In one embodiment, the power tool is configured to, based on an external force applied to the trigger member, drive the locking tongue to move a first stroke and a second stroke; the locking tongue moves the first stroke to cause the locking tongue to disengage from the first receiving portion, and the battery pack does not unlock relative to the housing; the locking tongue moves the second stroke to cause the locking tongue to disengage from the second receiving portion, thereby causing the battery pack to unlock relative to the housing.

In one embodiment, based on an external force applied to the trigger member, the locking tongue is driven to sequentially move the first moving stroke and the second moving stroke.

In one embodiment, the locking assembly comprises only one said locking tongue; the locking tongue engages with the first receiving portion to cause the battery pack to be locked in a first position relative to the housing; the locking tongue engages with the second receiving portion to cause the battery pack to be locked in a second position relative to the housing.

In one embodiment, only when the locking tongue engages with the first receiving portion, the battery pack and the power tool form an electrical connection.

In one embodiment, the number of the trigger member is only one, and the trigger member drives the locking tongue to move the first stroke or move the second stroke.

In one embodiment, the locking tongue and the trigger member are movably disposed at the housing, and the first receiving portion and the second receiving portion are provided on the battery pack.

In one embodiment, the power tool is a chainsaw, the chainsaw further comprising: a cutting assembly, mounted to the housing, the cutting assembly comprising a guide bar and a saw chain disposed around the guide bar, the guide bar providing support for and guiding the saw chain; and a top handle, for a user to hold; the cutting assembly is disposed at a front side of the housing in a longitudinal direction of the chainsaw; the battery pack mounting portion is disposed at a rear side of the housing in the longitudinal direction of the chainsaw; the top handle is disposed above the housing in a height direction of the chainsaw.

The present disclose provides a power tool, comprising: a housing, the housing being provided with a battery pack mounting portion; a battery pack, detachably attached to the battery pack mounting portion, for providing electrical energy to the power tool, the battery pack comprising a battery pack housing; and a locking assembly, comprising a locking tongue, a locking tongue receiving portion and a trigger member; the locking tongue and the trigger member being movably disposed at one of the housing and the battery pack housing, the locking tongue receiving portion being disposed at the other of the housing and the battery pack housing, the locking tongue being capable of engaging with the locking tongue receiving portion to cause the battery pack to be locked relative to the housing; the trigger member being capable of acting on the locking tongue and linking the locking tongue to move, and the trigger member being configured to: based on at least two unlocking actions applied to the trigger member, control the locking tongue to disengage from the locking tongue receiving portion, to cause the battery pack to be unlocked relative to the housing.

In one embodiment, the at least two unlocking actions are configured to: apply an acting force to the trigger member and enable the trigger member to generate a moving stroke; the at least two unlocking actions applied to the trigger member comprise at least two unlocking actions with different directions of acting forces applied to the trigger member corresponding to at least a portion of the moving stroke, or two unlocking actions with a same direction of acting force and intermittently applied.

In one embodiment, the locking tongue receiving portion comprises at least one stopping space capable of engaging with the locking tongue and providing stopping for the locking tongue; applying the at least two unlocking actions to the trigger member can drive the locking tongue to generate a moving stroke and disengage from a stopping of the stopping space of the locking tongue receiving portion, to cause the battery pack to be unlocked relative to the housing.

In one embodiment, the locking assembly comprises a locking tongue linkage member, the locking tongue linkage member being capable of driving the locking tongue to move; the at least two unlocking actions applied to the trigger member comprise a first unlocking action and a second unlocking action, the first unlocking action and the second unlocking action respectively causing the trigger member to generate a first stroke and a second stroke;
the first stroke is configured to cause the trigger member to move to a position where the locking tongue linkage member can be triggered; the second stroke is configured to cause the locking tongue linkage member to move and drive the locking tongue to move until the locking tongue disengages from the locking tongue receiving portion, to cause the battery pack to be unlocked relative to the housing; the first stroke and the second stroke have different directions of acting forces applied to the trigger member corresponding to at least a portion of a moving stroke.

In one embodiment, the first unlocking action and the second unlocking action are both applied to the trigger member;
the first stroke is configured to cause the trigger member to move to abut against the locking tongue linkage member;
the second stroke is configured to cause the trigger member to move further and drive the locking tongue linkage member to move, the locking tongue linkage member driving the locking tongue to move until the locking tongue disengages from the locking tongue receiving portion, to cause the battery pack to be unlocked relative to the housing.

In one embodiment, the locking tongue linkage member is movably disposed relative to the locking tongue and can abut against the locking tongue.

In one embodiment, the locking tongue linkage member and the locking tongue are connected in a relatively fixed manner.

In one embodiment, the locking assembly further comprises a locking tongue elastic reset member, the locking tongue elastic reset member acting on the locking tongue to apply an acting force that causes the locking tongue to move toward the locking tongue receiving portion.

In one embodiment, the locking tongue linkage member is pivotally disposed about a first pivot axis on the housing or the battery pack housing, the locking tongue linkage member comprises a locking tongue abutting portion and a trigger member abutting portion, and the trigger member abutting portion and the locking tongue abutting portion synchronously pivot about the first pivot axis, the trigger member is movably disposed at the housing or the battery pack housing, and can move to abut against the trigger member abutting portion and drive the trigger member abutting portion to pivot about the first pivot axis, the locking tongue abutting portion is used to abut against the locking tongue and pivot about the first pivot axis with the trigger member abutting portion to thereby drive the locking tongue to move in a direction away from the locking tongue receiving portion.

In one embodiment, the trigger member further comprises a trigger member elastic reset member, the trigger member comprises an initial position in a state where the unlocking action is not applied, the trigger member elastic reset member acting on the trigger member to apply an acting force that causes the trigger member to move toward the initial position.

In one embodiment, the trigger member is pivotally connected to the housing or the battery pack housing about a second pivot axis, or, the trigger member is pivotally connected to the locking tongue linkage member about a second pivot axis;
the first unlocking action is configured to flip the trigger member to cause the trigger member to pivot about the second pivot axis to abut against the locking tongue linkage member; the second unlocking action is configured to further push the trigger member, to cause the trigger member to move and drive the locking tongue linkage member to pivot about the first pivot axis, the locking tongue linkage member driving the locking tongue to move until the locking tongue disengages from the locking tongue receiving portion, to cause the battery pack to be unlocked relative to the housing.

In one embodiment, the trigger member is pivotally connected to the trigger member abutting portion of the locking tongue linkage member about the second pivot axis.

In one embodiment, the trigger member elastic reset member is a torsion spring clamped between the trigger member and the housing or the battery pack housing.

In one embodiment, the housing or the battery pack housing is provided with a trigger member mounting slot, the trigger member is mounted to the trigger member mounting slot, and does not protrude from the housing or the battery pack housing.

In one embodiment, the trigger member mounting slot is provided with a limiting slot wall for limiting a movement range of the trigger member and a slot hole for the trigger member to extend into the housing or the battery pack housing so that the trigger member abuts against the locking tongue linkage member, and an operating gap is left between an end of the trigger member for applying an unlocking action and the trigger member mounting slot.

In one embodiment, the trigger member is arranged to move guided along a first direction through a guiding structure; the first unlocking action is configured to press the trigger member to cause the trigger member to move along the first direction to abut against the locking tongue linkage member; the second unlocking action is configured to push the trigger member along a second direction, to cause the trigger member to move and drive the locking tongue linkage member to pivot about the first pivot axis, the locking tongue linkage member driving the locking tongue to move until the locking tongue disengages from the locking tongue receiving portion, to cause the battery pack to be unlocked relative to the housing.

In one embodiment, the guiding structure comprises a guiding block pivotally disposed about the first pivot axis and a guiding groove provided on the trigger member and cooperating with the guiding block; the second unlocking action is configured to push the trigger member along the second direction, to cause the trigger member to move with the guiding block to pivot about the first pivot axis, and drive the locking tongue linkage member to pivot about the first pivot axis, the locking tongue linkage member driving the locking tongue to move until the locking tongue disengages from the locking tongue receiving portion, to cause the battery pack to be unlocked relative to the housing.

In one embodiment, the trigger member elastic reset member is a spring disposed between the guiding block and the guiding groove.

In one embodiment, the housing or the battery pack housing is provided with a trigger member mounting slot, the trigger member mounting slot is provided with a limiting wall, the trigger member is provided with a blocking surface cooperating with the limiting wall, the limiting wall is used to block the blocking surface, so that the trigger member moves along a first direction and cannot move along a second direction before disengaging from a stopping of the limiting wall.

In one embodiment, the housing or the battery pack housing is further provided with a guiding wall, the guiding wall is used to guide the trigger member to move along the second direction.

In one embodiment, the trigger member comprises a pressing surface disposed substantially perpendicular to the first direction and a pushing surface disposed substantially perpendicular to the second direction.

In one embodiment, the locking tongue is provided with a reset member mounting portion, one end of the locking tongue elastic reset member is attached to the reset member mounting portion, and another end abuts against the housing or the battery pack housing.

In one embodiment, the locking tongue and the trigger member are disposed at the housing, the locking tongue receiving portion is provided on the battery pack; the housing is provided with a through hole for the locking tongue to extend into the battery pack mounting portion;
or, the locking tongue and the trigger member are disposed at the battery pack housing, the locking tongue receiving portion is disposed at the housing; the battery pack housing is provided with a through hole for the locking tongue to extend out.

In one embodiment, the locking tongue receiving portion comprises a locking slot or a locking hole disposed at the housing or the battery pack housing.

In one embodiment, the locking tongue comprises at least one protrusion, the locking tongue receiving portion comprises at least one recess, the protrusion of the locking tongue engages with the recess of the locking tongue receiving portion, to enable the battery pack to be locked relative to the housing; the protrusion of the locking tongue disengages from the recess of the locking tongue receiving portion, to enable the battery pack to be unlocked relative to the housing.

In one embodiment, the locking tongue comprises one said protrusion, the locking slot comprises one said recess cooperating with the one said protrusion; or, the locking tongue comprises multiple said protrusions, the locking slot comprises one or multiple said recesses cooperating with the multiple said protrusions.

In one embodiment, a sliding guide mechanism is disposed between the battery pack and the battery pack mounting portion, the sliding guide mechanism comprises a sliding groove and a sliding rail that cooperates with the sliding groove for guidance, one of the battery pack and the battery pack mounting portion is provided with the sliding groove, and the other is provided with the sliding rail that cooperates with the sliding groove for guidance, the battery pack is connected to the battery pack mounting portion through guided movement cooperation between the sliding groove and the sliding rail.

In one embodiment, the battery pack and the battery pack mounting portion comprise multiple sets of cooperating surfaces located at different sides of the battery pack, and the locking assembly is disposed at one set of the cooperating surfaces.

In one embodiment, the power tool is a chainsaw.

In one embodiment, the chainsaw is a top-handle chainsaw, comprising a body, a cutting assembly, a main handle and the battery pack mounting portion, the cutting assembly is disposed at a front side of the body, the battery pack mounting portion is disposed at a rear side of the body, the main handle is disposed above the body and located at a front side of the battery pack mounting portion.

In one embodiment, the main handle comprises a main handle housing, the housing comprises the main handle housing, and the locking assembly is at least partially disposed within the main handle housing.

In one embodiment, the top-handle chainsaw further comprises an auxiliary handle, one end of the auxiliary handle is connected to the body and another end is connected to the main handle, and is located at a side of the body.

The power tool and the unlocking method for a battery pack matched with the power tool provided by the present disclose can at least prevent the battery pack from being unlocked due to accidental triggering, reduce a risk of the battery pack abnormally disengaging from the power tool and harming people or objects around a working environment, effectively reduce safety hazards, and improve safety when the power tool is in use.

### BRIEF DESCRIPTION OF THE DRAWINGS

The drawings that constitute a part of the present disclose are used to provide further understanding of the present disclose, and illustrative embodiments of the present disclose and descriptions of the illustrative embodiments are used to explain the present disclose and do not constitute an improper limitation of the present disclose.

In order to more clearly illustrate technical solutions in embodiments of the present disclose, the drawings that need to be used in a description of the embodiments will be briefly introduced below. Obviously, the drawings in the following description are only some embodiments of the present disclose. For a person of ordinary skill in the art, other drawings can also be obtained based on these drawings without creative work.
FIG. 1 is an overall structural perspective view of a power tool according to an embodiment of the present disclose;
FIG. 2 is a partial structural perspective view of a power tool according to an embodiment of the present disclose;
FIG. 3 is a partial structural front view of a power tool according to an embodiment of the present disclose;
FIG. 4 is an enlarged view of a portion A in FIG. 2;
FIG. 5 is an enlarged view of a portion B in FIG. 3;
FIG. 6 is a partial structural cross-sectional view of a power tool according to an embodiment of the present disclose when a locking assembly is in a first state;
FIG. 7 is a partial structural cross-sectional view of a power tool according to an embodiment of the present disclose when a locking assembly is in a second state;
FIG. 8 is a partial structural cross-sectional view of a power tool according to an embodiment of the present disclose when a locking assembly is in a third state;
FIG. 9 is a structural schematic diagram of a locking assembly according to an embodiment of the present disclose;
FIG. 10 is a structural schematic diagram of a locking tongue and a locking tongue elastic return member according to an embodiment of the present disclose;
FIG. 11 is a structural schematic diagram of a power tool according to another embodiment of the present disclose in a state with a battery pack installed;
FIG. 12 is a structural schematic diagram of a power tool according to another embodiment of the present disclose in a state without a battery pack installed;
FIG. 13 is a partial structural perspective view of a power tool according to another embodiment of the present disclose;
FIG. 14 is a partial structural front view of a power tool according to another embodiment of the present disclose;
FIG. 15 is an enlarged view of a portion C in FIG. 13;
FIG. 16 is an enlarged view of a portion D in FIG. 14;
FIG. 17 is a partial structural cross-sectional view of a power tool according to another embodiment of the present disclose when a locking assembly is in a first state;
FIG. 18 is a partial structural cross-sectional view of a power tool according to another embodiment of the present disclose when a locking assembly is in a second state;
FIG. 19 is a partial structural cross-sectional view of a power tool according to another embodiment of the present disclose when a locking assembly is in a third state;
FIG. 20 is a structural schematic diagram of a locking assembly according to another embodiment of the present disclose;
FIG. 21 is a partial structural schematic diagram of a locking assembly according to another embodiment of the present disclose;
FIG. 22 is a structural schematic diagram of a trigger member according to another embodiment of the present disclose in a first perspective view;
FIG. 23 is a structural schematic diagram of a trigger member according to another embodiment of the present disclose in a second perspective view;
FIG. 24 is an overall structural front view of a locking assembly of a power tool according to a further embodiment of the present disclose in a first state;
FIG. 25 is an enlarged view of a portion E in FIG. 24 of the present disclose;
FIG. 26 is an enlarged view of a locking assembly according to a further embodiment of the present disclose in a second state;
FIG. 27 is an overall structural top view of a power tool according to a second further embodiment of the present disclose;
FIG. 28 is an overall structural rear view of a power tool according to the second further embodiment of the present disclose;
FIG. 29 is a partial structural cross-sectional view of a power tool according to the second further embodiment of the present disclose;
FIG. 30 is an enlarged view of a portion F in FIG. 27;
FIG. 31 is an enlarged view of a portion G in FIG. 29;
FIG. 32 is a partial structural cross-sectional view of a locking assembly of a power tool according to a third further embodiment of the present disclose in a first state;
FIG. 33 is an enlarged view of a portion J in FIG. 32;
FIG. 34 is an enlarged view of a locking assembly according to the third further embodiment of the present disclose in a second state;
FIG. 35 is an enlarged view of a locking assembly according to the third further embodiment of the present disclose in a second state;
FIG. 36 is a structural schematic diagram of a battery pack according to the third further embodiment of the present disclose;
FIG. 37 is an overall structural perspective view of a power tool according to a fourth further embodiment of the present disclose;
FIG. 38 is an overall structural perspective view of a rotary hammer according to a fifth further embodiment of the present disclose;
FIG. 39 is a schematic diagram of an unlocking assembly according to a sixth further embodiment of the present disclose;
FIG. 40 is a schematic diagram of an unlocking assembly according to a seventh further embodiment of the present disclose.

### DETAILED DESCRIPTION

To make the above objectives, features and advantages of the present disclose more obvious and understandable, specific embodiments of the present disclose will be described in detail below with reference to the drawings. Many specific details are set forth in the following description to facilitate a full understanding of the present disclose. However, the present disclose can be implemented in many other ways different from those described herein, and a person skilled in the art can make similar improvements without departing from an inner meaning of the present disclose. Therefore, the present disclose is not limited by the specific embodiments disclosed below.

To reduce disengagement of a battery pack 2 from a power tool, in related art, an interlocking mechanism is usually provided between the battery pack 2 and a housing 1 of the power tool. An unlocking method of the interlocking mechanism is usually to apply one unlocking action to an unlock button of the battery pack 2 to unlock the battery pack 2. When a working environment is complex, a risk of the battery pack 2 being unlocked due to accidental triggering is high, especially in an aerial work scenario, for example when working in a tree, the unlock button of the battery pack 2 may be touched by a branch or an operator, causing the battery pack 2 to disengage from the power tool, causing injury to surrounding people or animals, or causing damage to objects, resulting in a major safety hazard when the power tool is in use.

To solve a technical problem that a battery pack 2 of a power tool is easily unlocked by accidental triggering, which then leads to abnormal disengagement of the battery pack 2 from the power tool, the present disclose provides a power tool that can effectively reduce a risk of the battery pack 2 being unlocked due to accidental triggering. The power tool of the present disclose may be a chainsaw 100, a rotary hammer 200, an electric drill, etc., but is not limited thereto. The present disclose is particularly suitable for a power tool for aerial work, such as a chainsaw 100 for tree work, etc. Below, a chainsaw 100 is taken as an example to describe the power tool of the present disclose in detail, but it should be noted that the power tool of the present disclose is not limited thereto.

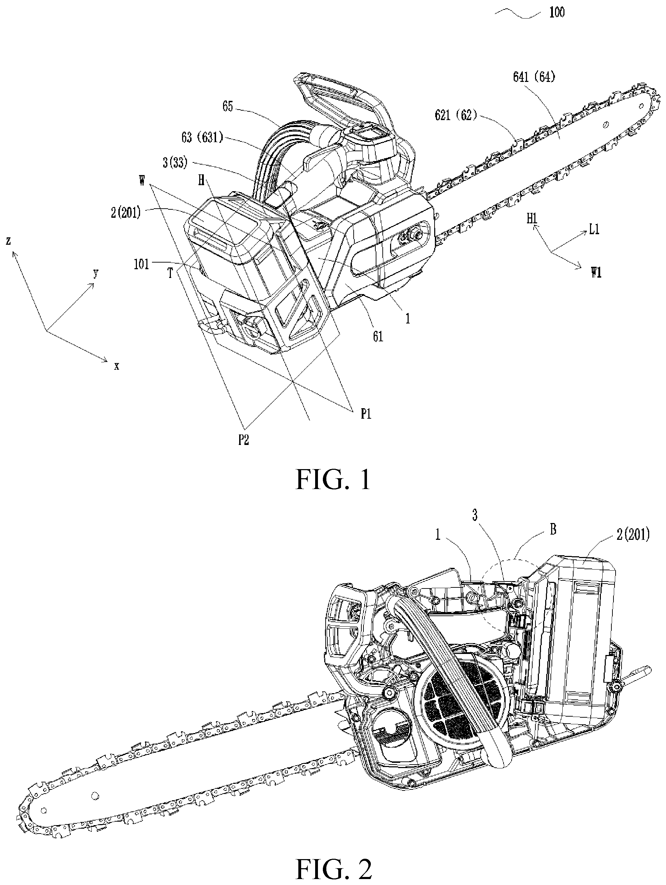

Referring to FIG. 1 to FIG. 3, a power tool comprises a housing 1 and a locking assembly 3. The housing 1 is provided with a battery pack mounting portion 101, the battery pack mounting portion 101 is detachably connected to a battery pack 2, and the battery pack 2 is configured to provide electrical energy to the power tool. The locking assembly 3 comprises a locking tongue 31, a locking tongue receiving portion 32, and a trigger member 33 (also referred to as a trigger mechanism).

The locking tongue 31 and the trigger member 33 are movably disposed at one of the housing 1 and the battery pack 2, and the locking tongue receiving portion 32 is disposed at the other of the housing 1 and the battery pack 2. The locking tongue 31 is engaged with the locking tongue receiving portion 32 to cause the battery pack 2 to be locked relative to the housing 1; the locking tongue 31 is disengaged from the locking tongue receiving portion 32 to cause the battery pack 2 to be unlocked relative to the housing 1. Specifically, the locking tongue 31 and the trigger member 33 are movably disposed at the housing 1, and the locking tongue receiving portion 32 is disposed at the battery pack 2; or, the locking tongue 31 and the trigger member 33 are movably disposed at the battery pack 2, and the locking tongue receiving portion 32 is disposed at the housing 1.

The power tool is configured for an external force to be applied on the trigger member 33, and at least two different actions (also referred to as unlocking actions) generated by the trigger member 33 directly or indirectly drive the locking tongue 31 to move relative to the locking tongue receiving portion 32, to realize unlocking of the battery pack 2 relative to the housing 1. Wherein, the number of the trigger member 33 is configured to be one or more.

It can be understood that the at least two different actions generated by the trigger member 33 are actions generated by the trigger member 33 when an external force is applied on the trigger member 33, for example, a movement made by the trigger member 33 when an operator applies a force to the trigger member 33. The trigger member 33 is an object on which the external force is applied, and of course, a force-applying object includes but is not limited to an operator, and may also be other force-applying objects. A method of applying force includes direct contact operation, indirect operation to transmit an acting force to the trigger member 33, etc., but is not limited thereto.

In some embodiments, when one trigger member 33 is configured, based on an external force applied on the trigger member 33, the trigger member 33 generates at least two different actions to directly or indirectly drive the locking tongue 31 to move relative to the locking tongue receiving portion 32, to realize unlocking of the battery pack 2 relative to the housing 1. In some embodiments, a plurality of trigger members 33 are configured, and based on a disclose of an external force, the plurality of trigger members 33 generate at least two different actions to directly or indirectly drive the locking tongue 31 to move relative to the locking tongue receiving portion 32, to realize unlocking of the battery pack 2 relative to the housing 1. For example, the number of the plurality of trigger members 33 may be two.

At least two different actions generated by the trigger member 33 are required to realize unlocking of the battery pack 2 relative to the housing 1, that is to say, a single action is not sufficient to cause the battery pack 2 to be unlocked relative to the housing 1, and an external force causing an accidental triggering can usually only cause the trigger member 33 to generate a single action. Therefore, realizing unlocking of the battery pack 2 relative to the housing 1 through at least two different actions of the trigger member 33 can effectively reduce a risk of the battery pack 2 being unlocked due to accidental triggering.

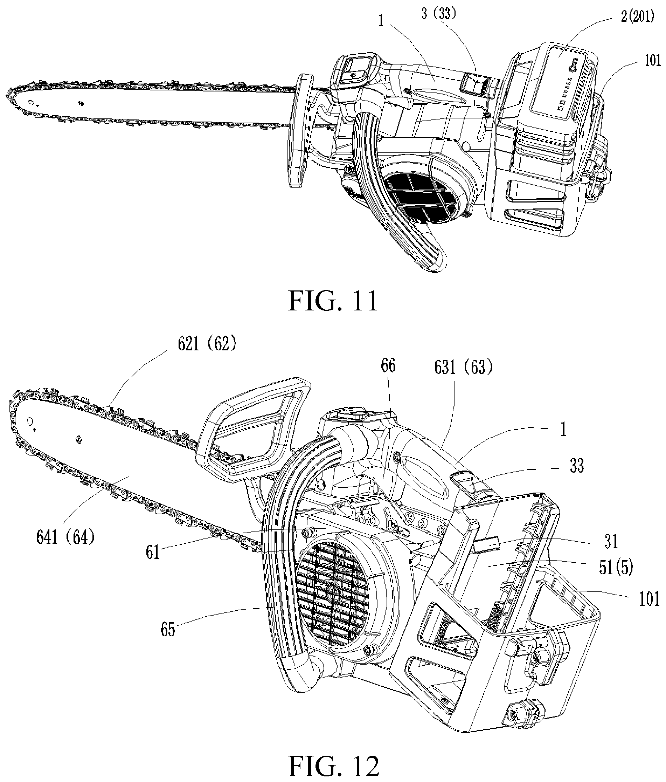

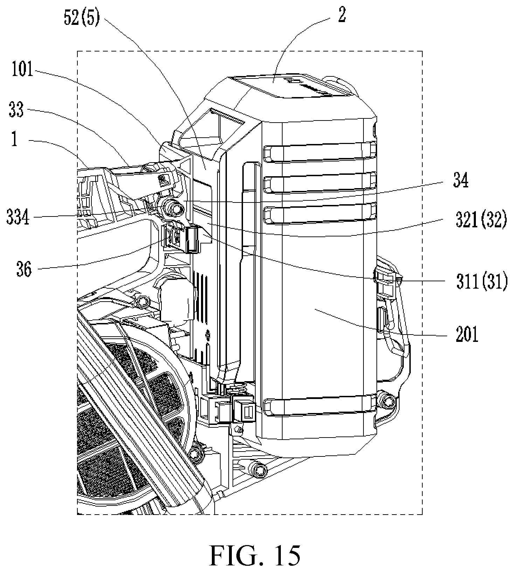

Referring to FIG. 12 and FIG. 15, the battery pack 2 comprises a battery pack housing 201, the battery pack housing 201 comprises a first slide rail and a second slide rail disposed in parallel, for guiding the battery pack 2 to be inserted and connected to the power tool.

In an embodiment, one trigger member 33 or a plurality of trigger members 33 are all configured on one side of the battery pack 2. All trigger members 33 subjected to an external force are disposed at a same side of the battery pack 2. Optionally, the trigger member 33 and the locking tongue 31 are disposed at the housing 1, and the locking tongue receiving portion 32 is disposed at the battery pack 2. The battery pack housing 201 has a top portion and a bottom portion that are oppositely disposed, and a first side portion and a second side portion that are oppositely disposed, and the locking tongue receiving portion 32 is disposed at the top portion. The first slide rail and the second slide rail, the top portion and the bottom portion all extend along an insertion direction of the battery pack 2. One trigger member 33 or a plurality of trigger members 33 are all located at one side of the top portion or the bottom portion.

With such a design, on one hand, when an operator unlocks the battery pack 2, fingers of the operator only need to operate within a limited area, reducing a need for the fingers of the operator to shift over a large area when unlocking the battery pack 2, or when a plurality of fingers are needed for an operation, a need for two fingers to be spread apart by a large distance. An implementation provided by the present disclose also has a more compact structural design and a more aesthetic appearance.

Considering that a straight-line distance between a plurality of trigger members 33 dispersed on a plurality of sides is longer, a difficulty for an operator to complete unlocking of the battery pack 2 by relying on fingers of a single hand is increased. To achieve that an operator can comfortably trigger a plurality of trigger members 33 (for example, two trigger members 33) with fingers of a single hand, there must be stricter requirements for a size design of the battery pack 2, for example, a dimension of the battery pack 2 in a front-rear direction or a dimension in a left-right direction should be as small as possible, so that a distance between the plurality of trigger members 33 is shorter, facilitating an unlocking operation by the operator. This will inevitably impose a limitation on a design of the battery pack 2, which is not conducive to an expansion of diversified design scenarios for the battery pack 2. In addition, for an embodiment where only one trigger member 33 is disposed at the housing 1, only one locking tongue 31 may be provided, making a structure simpler, and the locking tongue 31 can be directly engaged with the locking tongue receiving portion 32 of an existing battery pack 2 platform, to be better compatible with the existing battery pack 2 platform.

In an embodiment, as shown in FIG. 1, the battery pack housing 201 extends along three orthogonal spatial directions (x, y, z) in directions of a width axis W, a thickness axis T, and a height axis H of the battery pack housing 201. The battery pack housing 201 comprises a width extending on the width axis W, a thickness extending on the thickness axis T, and a height extending on the height axis H. One trigger member 33 or a plurality of trigger members 33 are located at one side of a plane P1 perpendicular to the thickness axis and passing through a midpoint of the thickness; or, one trigger member 33 or a plurality of trigger members 33 are located at one side of a plane P2 perpendicular to the width axis and passing through a midpoint of the width.

It should be noted that, the battery pack housing 201 extends in the directions of the width axis W, the thickness axis T, and the height axis H, wherein the battery pack housing 201 is not limited to a standard rectangular parallelepiped, and may be other irregular shapes, for example, with chamfered edges, partial surface depressions or protrusions, etc. The width axis W direction, the thickness axis T direction, and the height axis H direction are only used to illustrate general extension directions of the battery pack housing 201. Wherein, the width of the battery pack housing 201 is a line segment between perpendicular feet on a same width axis W from two outermost points on two opposite surfaces of the battery pack 2 in the width axis W direction; the midpoint of the width is a midpoint of the line segment. The thickness of the battery pack housing 201 is a line segment between perpendicular feet on a same thickness axis T from two outermost points on two opposite surfaces of the battery pack 2 in the thickness axis T direction; the midpoint of the thickness is a midpoint of the line segment. The height of the battery pack housing 201 is a line segment between perpendicular feet on a same height axis H from two outermost points on two opposite surfaces of the battery pack 2 in the height axis H direction.

In an embodiment, all trigger members 33 are located at one side of a plane P1 perpendicular to the thickness axis and passing through a midpoint of the thickness, or, all trigger members 33 are located at one side of a plane P2 perpendicular to the width axis and passing through a midpoint of the width.

It can be understood that, one trigger member 33 or a plurality of trigger members 33 being located at one side of a plane P1 perpendicular to the thickness axis and passing through a midpoint of the thickness, or, one trigger member 33 or a plurality of trigger members 33 being located at one side of a plane P2 perpendicular to the width axis and passing through a midpoint of the width, reduces a need for fingers of an operator to shift over a large area when unlocking the battery pack 2, making it more convenient for the operator to operate the trigger member 33 with a single hand and control unlocking of the battery pack 2 relative to the housing 1. And a structural design is more compact, and an appearance of a machine is more aesthetic.

Optionally, all trigger members 33 and all locking tongues 31 are located at a same side of the battery pack 2.

Optionally, all trigger members 33 and all locking tongues 31 are located at one side of a plane P1 perpendicular to the thickness axis and passing through a midpoint of the thickness, or, all trigger members 33 and all locking tongues 31 are located at one side of a plane P2 perpendicular to the width axis and passing through a midpoint of the width.

Further optionally, all trigger members 33, all locking tongues 31, and all locking tongue receiving portions 32 are located at one side of a plane P1 perpendicular to the thickness axis and passing through a midpoint of the thickness, or, all trigger members 33, all locking tongues 31, and all locking tongue receiving portions 32 are located at one side of a plane P2 perpendicular to the width axis and passing through a midpoint of the width.

It can be understood that, among all the trigger members 33, all the locking tongues 31, and all the locking tongue receiving portions 32, when more components are located at a same side of the battery pack 2 or on a same side of the plane P1 or the plane P2, a structural design of the locking assembly 3 becomes simpler and more compact, which is beneficial for reducing a volume of the power tool, and an appearance of a machine is more aesthetic.

Further, the number of the locking tongue 31 may be one or more, and the number of the locking tongue receiving portion 32 cooperating with the one or more locking tongues 31 may also be one or more; correspondingly, the number of the trigger member 33 may also be one or more.

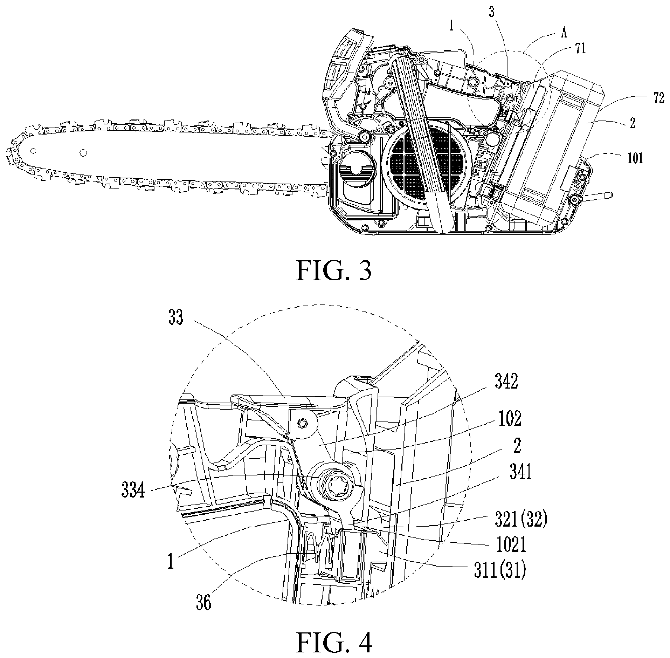

As an example, referring to FIG. 3 to FIG. 8, the locking assembly 3 comprises one locking tongue 31, one locking tongue receiving portion 32, and one trigger member 33, the locking tongue 31 and the trigger member 33 are movably disposed at the housing 1, and the locking tongue receiving portion 32 is disposed at the battery pack 2. In this embodiment, the one trigger member 33, the one locking tongue 31, and the one locking tongue receiving portion 32 are all located at one side of a plane P1 perpendicular to the thickness axis T and passing through a midpoint of the thickness.

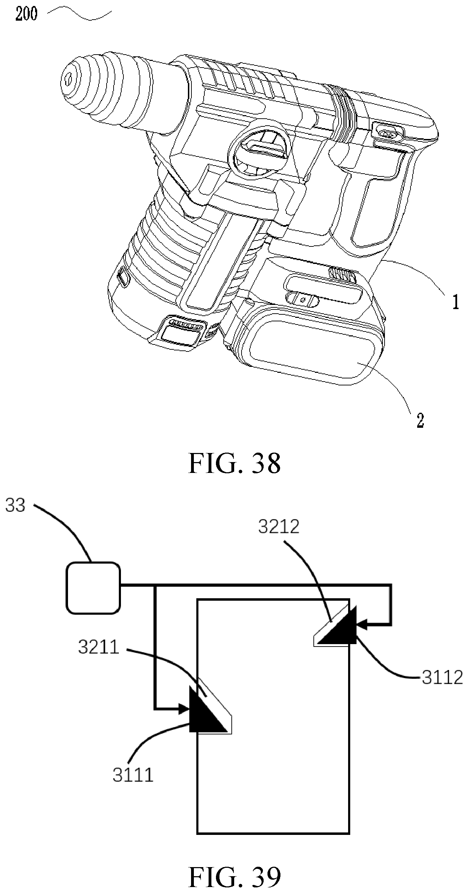

As another example, referring to FIG. 39, the locking assembly 3 comprises two locking tongues 31, two locking tongue receiving portions 32, and one trigger member 33, the two locking tongues 31 are respectively a first locking tongue 3111 and a second locking tongue 3112, and the two locking tongue receiving portions 32 are respectively a first locking tongue 3111 receiving portion 32 cooperating with the first locking tongue 3111 and a second locking tongue 3112 receiving portion 32 cooperating with the second locking tongue 3112. The locking tongue 31 and the trigger member 33 are movably disposed at the housing 1, and the locking tongue receiving portion 32 is disposed at the battery pack 2. In this embodiment, the one trigger member 33 is located at one side of a plane P1 perpendicular to the thickness axis and passing through a midpoint of the thickness; the first locking tongue 3111 and the second locking tongue 3112 are respectively located at two sides of a plane P1 perpendicular to the thickness axis and passing through a midpoint of the thickness; the first locking tongue 3111 receiving portion 32 and the second locking tongue 3112 receiving portion 32 are respectively located at two sides of a plane P1 perpendicular to the thickness axis T and passing through a midpoint of the thickness.

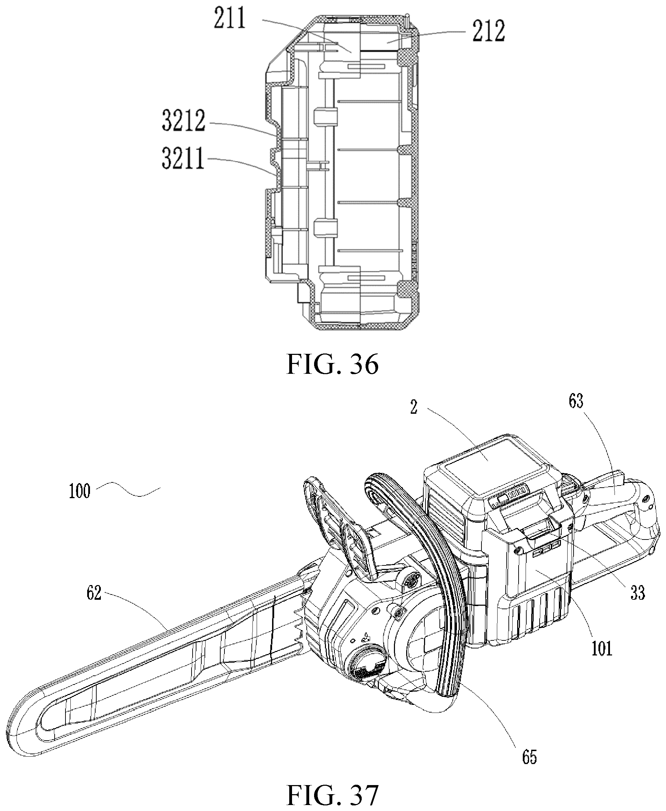

As yet another example, referring to FIG. 37, the locking assembly 3 comprises one locking tongue 31, one locking tongue receiving portion 32, and one trigger member 33, the locking tongue 31 and the trigger member 33 are movably disposed at the housing 1, and the locking tongue receiving portion 32 is disposed at the battery pack 2. In this embodiment, the one trigger member 33, the one locking tongue 31, and the one locking tongue receiving portion 32 are all located at one side of a plane P2 perpendicular to the width axis W and passing through a midpoint of the width.

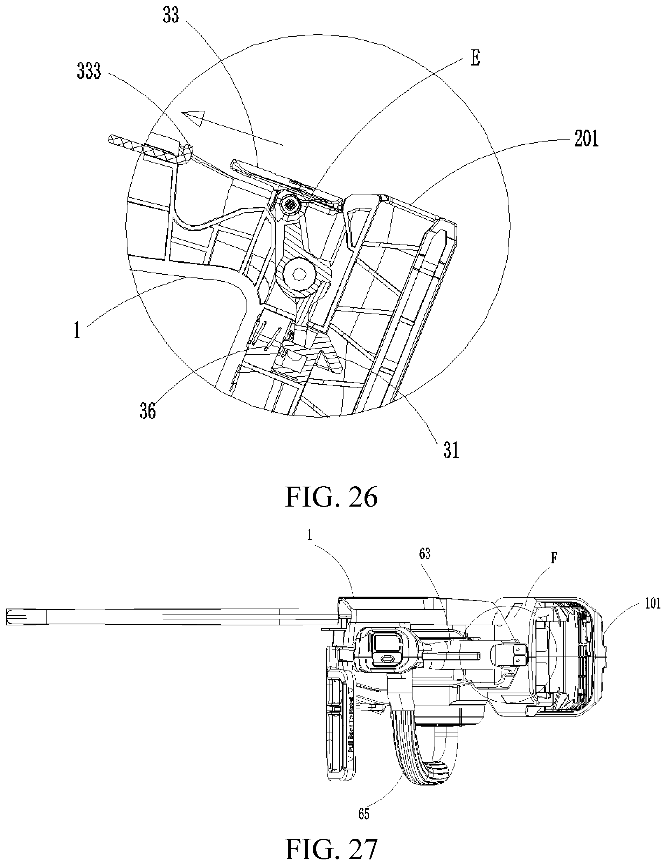

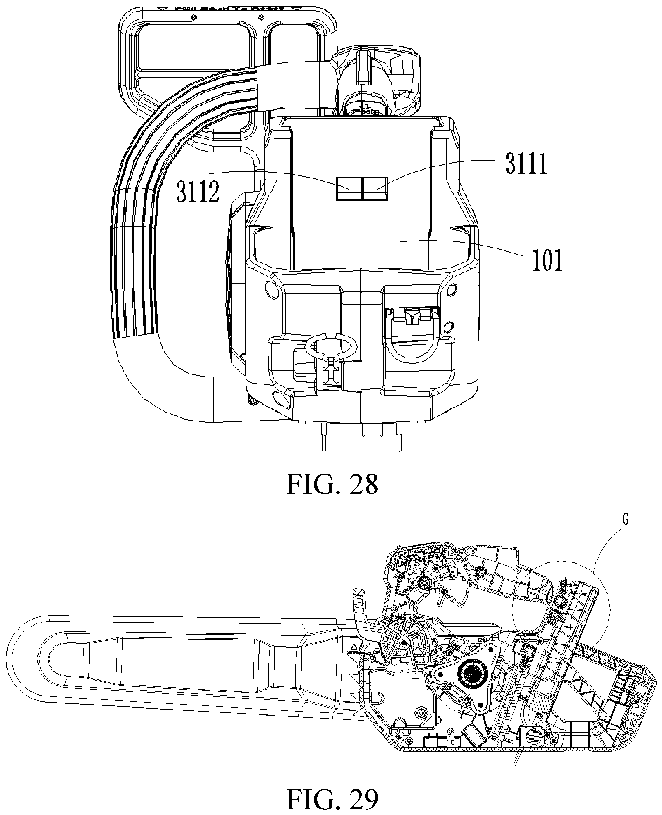

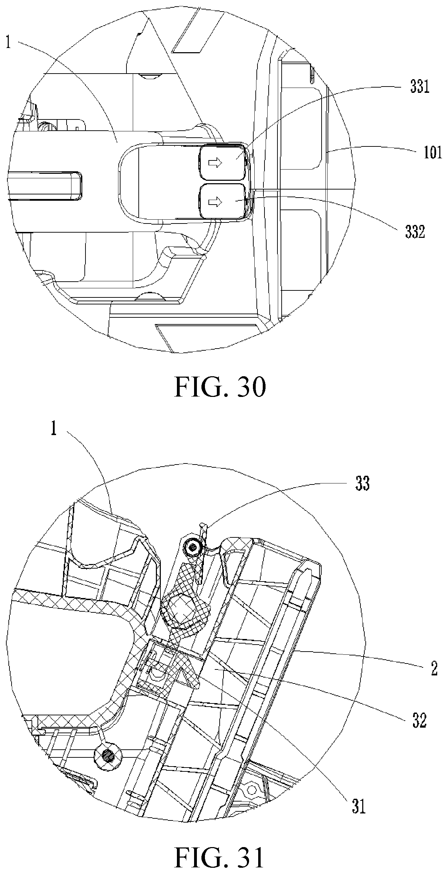

As a still further example, referring to FIG. 27 to FIG. 31, the locking assembly 3 comprises two locking tongues 31, one locking tongue receiving portion 32 cooperating with the two locking tongues 31, and two trigger members 33, the two locking tongues 31 are respectively a first locking tongue 3111 and a second locking tongue 3112. The locking tongue 31 and the trigger member 33 are movably disposed at the housing 1, and the locking tongue receiving portion 32 is disposed at the battery pack 2. In this embodiment, the two trigger members 33, the two locking tongues 31, and the one locking tongue receiving portion 32 are all located at one side of a plane P1 perpendicular to the thickness axis and passing through a midpoint of the thickness.

Based on an external force applied on the trigger member 33, the at least two different actions generated by the trigger member 33 comprise: one action generated by the trigger member 33, which realizes a movement of the trigger member 33, and the battery pack 2 is not unlocked relative to the housing 1; and another action generated by the trigger member 33, which realizes a movement of the trigger member 33 and drives the locking tongue 31 to move, so as to unlock the battery pack 2 relative to the housing 1. For convenience of description, the one action is referred to as a first action, and the other action is referred to as a second action.

It should be noted that, the first action and the second action are only used to represent two different actions, wherein "first" and "second" do not limit a sequence of the two actions, nor do they limit a continuity of the two actions, for example, there may be other actions between the two actions.

It can be understood that, with the first action of the trigger member 33, the battery pack 2 is not unlocked relative to the housing 1, and with the second action of the trigger member 33, the battery pack 2 is unlocked relative to the housing 1. That is to say, at least based on the first action and the second action of the trigger member 33, the battery pack 2 can be unlocked relative to the housing 1.

In an embodiment, based on an external force applied on the trigger member 33, the at least two different actions generated by the trigger member 33 comprise: one action generated by the trigger member 33, i.e., the first action, which realizes a movement of the trigger member 33, and the locking tongue 31 does not move; and another action generated by the trigger member 33, i.e., the second action, which realizes a movement of the trigger member 33 and drives the locking tongue 31 to move. By applying an external force on the trigger member 33, at least two different actions generated by the trigger member 33 are realized, thereby driving the battery pack 2 to be successfully unlocked and configured to be detached from the power tool.

As an example, as shown in FIG. 3 to FIG. 8, the locking assembly 3 further comprises a locking tongue linkage member 34, one action generated by the trigger member 33, i.e., the first action, realizes that the trigger member 33 is at a position allowed to drive the locking tongue 31 to move; another action generated by the trigger member 33, i.e., the second action, realizes a movement of the locking tongue linkage member 34 and drives the locking tongue 31 to move relative to the locking tongue receiving portion 32, so as to unlock the battery pack 2 relative to the power tool. In this example, when the trigger member 33 does not perform the first action, the trigger member 33 cannot link the locking tongue linkage member 34 to move. Through the first action of the trigger member 33, a movement of the trigger member 33 to a position capable of driving the locking tongue 31 to move is realized.

It should be noted that, the trigger member 33 being at a position allowed to drive the locking tongue 31 to move should be understood as: a user can directly apply a force to the trigger member 33 to cause the trigger member 33 to move without other actions, and a movement of the trigger member 33 can drive the locking tongue 31 to move.

Specifically, the locking tongue linkage member 34 is configured to: move under a drive of the trigger member 33, and then drive the locking tongue 31 to move. Further, the trigger member 33 is movably disposed relative to the locking tongue linkage member 34 and is configured to abut against the locking tongue linkage member 34. The locking tongue linkage member 34 is movably disposed relative to the locking tongue 31 and is configured to abut against the locking tongue 31; or, the locking tongue linkage member 34 is fixedly connected relative to the locking tongue 31. The locking tongue linkage member 34 performs a pivotal movement around a fixed pivot.

In an example, as shown in FIG. 3 to 8, the locking assembly 3 comprises one locking tongue 31, one locking tongue receiving portion 32, one trigger member 33, and further comprises a locking tongue linkage member 34. The trigger member 33 performs a pivotal movement around a pivot, the first action of the trigger member 33 realizes a movement of the trigger member 33 to a position abutting against the locking tongue linkage member 34, and the second action of the trigger member 33 realizes that the trigger member 33 drives the locking tongue linkage member 34 to move and then drives the locking tongue 31 to move and disengage from the locking tongue receiving portion 32. In this embodiment, the first action of the trigger member 33 realizes a movement of the trigger member 33, and the locking tongue 31 does not move.

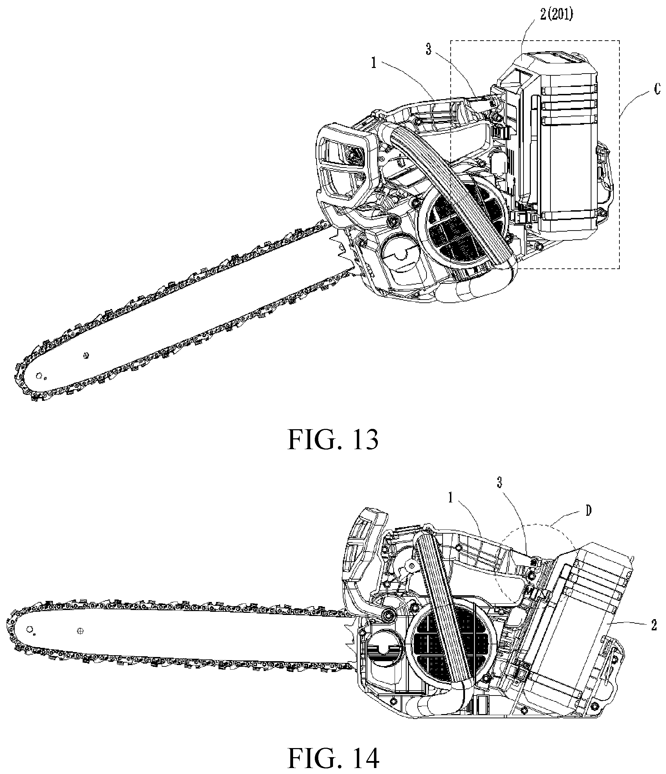

In another example, as shown in FIG. 14 to FIG. 19, the trigger member 33 moves along a straight line guiding direction, the first action of the trigger member 33 realizes a movement of the trigger member 33 to a position capable of driving the locking tongue linkage member 34 to move, and the second action of the trigger member 33 realizes that the trigger member 33 drives the locking tongue linkage member 34 to move and then drives the locking tongue 31 to move and disengage from the locking tongue receiving portion 32. In this embodiment, the first action of the trigger member 33 realizes a movement of the trigger member 33, and the locking tongue 31 does not move.

In another example, the trigger member 33 comprises a first trigger member 331 and a second trigger member 332. Optionally, the first trigger member 331 and the second trigger member 332 are disposed independently from each other. The first trigger member 331 and the second trigger member 332 move independently from each other.

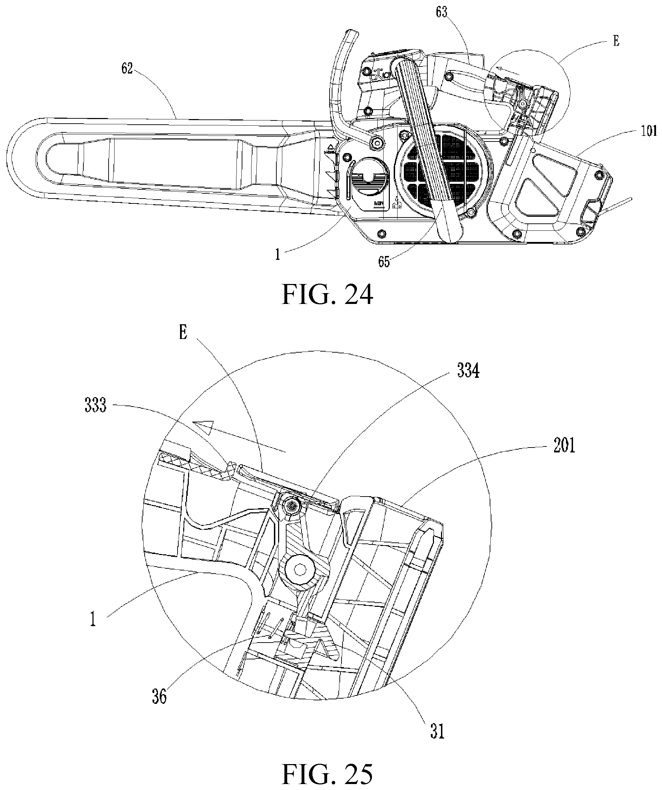

For the above-mentioned embodiment where there are two trigger members 33, as another example, as shown in FIG. 24 to FIG. 26, the trigger member 33 further comprises a first trigger member 331, and a restraining member 333 for locking the first trigger member 331 (the restraining member may be referred to as a second trigger member 332), the restraining member 333 comprises a first position and a second position that generates a movement relative to the housing 1; at the first position, the restraining member 333 does not allow the first trigger member 331 to drive the locking tongue 31 to move; at the second position, the first trigger member 331 is configured to drive the locking tongue 31 to move.

It should be noted that, the restraining member 333 not allowing the first trigger member 331 to drive the locking tongue 31 to move should be understood as: if a user does not apply an operation to the restraining member 333, then the trigger member 33 cannot be operated to perform an unlocking movement of the battery pack 2. Specifically, an arrangement of the restraining member 333 includes locking the trigger member 33 or blocking an operating end 3311 of the trigger member 33, so as to not allow the trigger member 33 to perform an unlocking movement of the battery pack 2, but is not limited thereto. For ease of understanding, an end of the trigger member 33 for applying an external force is defined as the operating end 3311 of the trigger member 33.

In this embodiment, one action generated by the trigger member 33, i.e., the first action, is configured as a movement trajectory generated by the restraining member 333, and another action generated by the trigger member 33, i.e., the second action, is configured as a movement trajectory generated by the first trigger member 331; the movement trajectory generated by the restraining member 333 realizes a movement of the restraining member 333 from the first position to the second position, so as to allow the first trigger member 331 to be configured to drive the locking tongue 31 to move; the movement trajectory generated by the trigger member 33 realizes that the first trigger member 331 drives the locking tongue 31 to disengage from the locking tongue receiving portion 32. In this embodiment, the first action of the trigger member 33 realizes a movement of the trigger member 33, and the locking tongue 31 does not move.

Specifically, the restraining member 333 is guidingly slidably or pivotally connected to the housing 1, the restraining member 333 is interlocked with the trigger member 33, or the restraining member 333 covers the operating end 3311 of the trigger member 33, all of which constitute a locking of the first trigger member 331 by the restraining member 333, so as to not allow a user to directly operate the trigger member 33 to perform an unlocking movement of the battery pack 2.

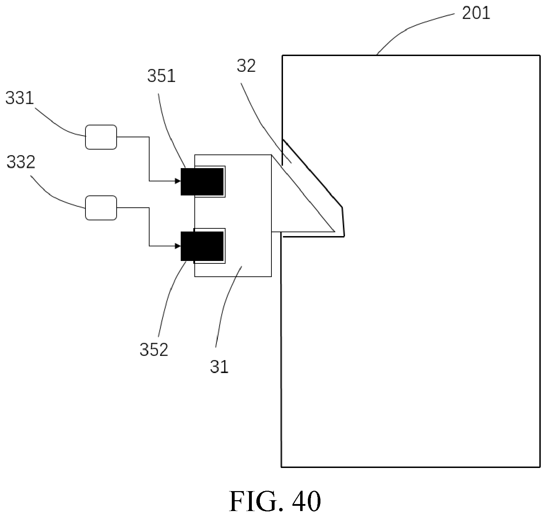

For the above example where there are two trigger members 33, as a still further example, as shown in FIG. 40, the trigger member 33 comprises a first trigger member 331 and a second trigger member 332, only one locking tongue 31 is provided, and the locking assembly 3 further comprises a first moving member 351 and a second moving member 352 that move independently. The first moving member 351 is located between the first trigger member 331 and the locking tongue 31. The second moving member 352 is located between the second trigger member 332 and the locking tongue 31. Both the first moving member 351 and the second moving member 352 comprise an initial locking position, and an unlocking position after moving a certain trajectory relative to the locking position. Wherein the first trigger member 331 is configured to drive the first moving member 351 to move between the locking position and the unlocking position, and the second trigger member 332 is configured to drive the second moving member 352 to move between the locking position and the unlocking position. In this example, when at least one of the first moving member 351 and the second moving member 352 is at the locking position, the locking tongue 31 is engaged with the locking tongue receiving portion 32; when both the first moving member 351 and the second moving member 352 are at the unlocking position, the locking tongue 31 is disengaged from the locking tongue receiving portion 32.

In this embodiment, one action generated by the trigger member 33, i.e., the first action, is configured as a movement of the first trigger member 331, so as to realize driving the first moving member 351 to move to the unlocking position; another action generated by the trigger member 33, i.e., the second action, is configured as a movement of the second trigger member 332, so as to realize driving the second moving member 352 to move to the unlocking position.

In another embodiment, based on an external force applied on the trigger member 33, the at least two different actions generated by the trigger member 33 comprise: one action generated by the trigger member 33, which realizes a movement of the trigger member 33 and drives at least a portion of the locking tongue 31 to move, but the battery pack 2 is not unlocked relative to the housing 1; and another action generated by the trigger member 33, which realizes a movement of the trigger member 33 and drives the locking tongue 31 to move, to cause the battery pack 2 to be unlocked relative to the housing 1. Further, there are at least two situations for driving at least a portion of the locking tongue 31 to move. One situation is that one action of the trigger member 33 can only drive the locking tongue 31 to move through a section of trajectory, at which time, the locking tongue 31 has not completely disengaged from the locking tongue receiving portion 32. Another situation is that a movement of the trigger member 33 drives one locking tongue 31 to move and disengage from the locking tongue receiving portion 32. At this time, there are still other locking tongues 31 engaged with the locking tongue receiving portion 32. In this type of embodiment, the number of the locking tongue 31 is at least two.

As an example, as shown in FIG. 27 to FIG. 31, the trigger member 33 comprises a first trigger member 331 and a second trigger member 332, the locking tongue 31 comprises a first locking tongue 3111 and a second locking tongue 3112 that are independently movable, the first trigger member 331 is configured to drive the first locking tongue 3111 to move, and the second trigger member 332 is configured to drive the second locking tongue 3112 to move.

In this embodiment, one action generated by the first trigger member 331, i.e., the first action, is configured as a movement trajectory generated by the first trigger member 331, which realizes that the first trigger member 331 drives the first locking tongue 3111 to disengage from the locking tongue receiving portion 32, and another action generated by the second trigger member 332, i.e., the second action, is configured as a movement trajectory generated by the second trigger member 332, which realizes that the second trigger member 332 drives the second locking tongue 3112 to disengage from the locking tongue receiving portion 32. That is, in this embodiment, the first action of the trigger member 33 realizes a movement of the first trigger member 331 and a movement of the first locking tongue 3111.

In an embodiment, the number of the trigger member 33 is only one, one action generated by one trigger member 33, i.e., the first action, realizes a movement of the trigger member 33, and the battery pack 2 is not unlocked relative to the housing 1; another action generated by the one trigger member 33, i.e., the second action, realizes a movement of the trigger member 33 and drives the locking tongue 31 to move, so as to unlock the battery pack 2 relative to the housing 1. In this embodiment, a same trigger member 33 needs to perform at least two different actions to drive the locking tongue 31 to move and realize unlocking of the battery pack 2.

In an embodiment, only one trigger member 33 is provided, and at least two different actions are sequentially generated on the one trigger member 33.

It should be noted that, "sequentially" in "at least two different actions are sequentially generated on the trigger member 33" is only used to define that the two actions occur one after another and are progressive, and a subsequent unlocking action can only be applied after a preceding unlocking action is completed. It does not limit a continuity of the two actions, and there may be other actions between the two actions.

As an example, as shown in FIG. 3 to 8, the locking assembly 3 comprises one locking tongue 31, one locking tongue receiving portion 32, and one trigger member 33. In this embodiment, the first action of the trigger member 33 realizes a movement of the trigger member 33, the locking tongue 31 does not move, and the battery pack 2 is not unlocked relative to the housing 1; the second action of the trigger member 33 realizes a movement of the trigger member 33 driving the locking tongue 31 to move and disengage from the locking tongue receiving portion 32, to cause the battery pack 2 to be unlocked relative to the housing 1. And the first action and the second action are sequentially generated on one trigger member 33.

As another example, as shown in FIG. 39, the locking assembly 3 comprises two locking tongues 31, two locking tongue receiving portions 32, and one trigger member 33, the two locking tongues 31 are respectively a first locking tongue 3111 and a second locking tongue 3112, and the two locking tongue receiving portions 32 are respectively a first locking tongue 3111 receiving portion 32 cooperating with the first locking tongue 3111 and a second locking tongue 3112 receiving portion 32 cooperating with the second locking tongue 3112. In this embodiment, the first action of the trigger member 33 realizes a movement of the trigger member 33, driving the first locking tongue 3111 to move and disengage from the first locking tongue 3111 receiving portion 32, and the battery pack 2 is not unlocked relative to the housing 1; the second action of the trigger member 33 realizes a movement of the trigger member 33, driving the second locking tongue 3112 to move and disengage from the second locking tongue 3112 receiving portion 32, to cause the battery pack 2 to be unlocked relative to the housing 1. And the first action and the second action are sequentially generated on one trigger member 33.

In an embodiment, the trigger member 33 comprises a first trigger member 331 and a second trigger member 332, one action generated by the first trigger member 331 realizes a movement of the first trigger member 331, and the battery pack 2 is not unlocked relative to the housing 1; another action generated by the second trigger member 332 realizes a movement of the second trigger member 332 and drives the locking tongue 31 to move, so as to unlock the battery pack 2 relative to the housing 1.

It can be understood that, by respectively applying a force to the first trigger member 331 and the second trigger member 332, to cause the first trigger member 331 and the second trigger member 332 to each generate one action, unlocking of the battery pack 2 relative to the housing 1 can be realized, which can effectively reduce a risk of the battery pack 2 being unlocked due to accidental triggering.

As an example, as shown in FIG. 27 to FIG. 31, the trigger member 33 includes a first trigger member 331 and a second trigger member 332, and the lock tongue 31 includes a first lock tongue 3111 and a second lock tongue 3112 respectively and independently moving. The first trigger member 331 is configured to drive the first lock tongue 3111 to move, and the second trigger member 332 is configured to drive the second lock tongue 3112 to move.

In an embodiment, an action generated by the trigger member 33 is configured as a movement trajectory generated by the first trigger member 331 to realize the first trigger member 331 to drive the first lock tongue 3111 to detach from the lock tongue receiving portion 32, and another action generated by the trigger member 33 is configured as a movement trajectory occurred by the second trigger member 332 to realize the second trigger member 332 to drive the second lock tongue 3112 to detach from the lock tongue receiving portion 32.

As another example, as shown in FIG. 40, the trigger member 33 includes the first trigger member 331 and the second trigger member 332. The lock tongue 31 is merely provided with one. The locking assembly 3 further includes a first moving member 351 and a second moving member 352 respectively and independently moving. The first moving member 351 and the second moving member 352 respectively include a locking position and an unlocking position. The first trigger member 331 is configured to drive the first moving member 351 to move between the locking position and the unlocking position. The second trigger member 332 is configured to drive the second moving member 352 to move between the locking position and the unlocking position. When at least one of the first moving member 351 and the second moving member 352 is in the locking position, the lock tongue 31 and the lock tongue receiving portion 32 are engaged with each other; when both the first moving member 351 and the second moving member 352 are in the unlocking position, the lock tongue 31 and the lock tongue receiving portion 32 are detached from each other.

In an embodiment, an action generated by the trigger member 33 is configured as a movement of the first trigger member 331, to realize driving the first moving member 351 to move to the unlocking position; another action generated by the trigger member 33 is configured as a movement of the second trigger member 332, to realize driving the second moving member 352 to move to the unlocking position.

In an embodiment, an action generated by the trigger member 33 realizes the trigger member 33 to move a first stroke trajectory (also referred to as a first stroke); another action generated by the trigger member 33 realizes the trigger member 33 to move a second stroke trajectory (also referred to as a second stroke) different from the first stroke trajectory. The power tool is configured as: at least based on the first stroke trajectory and the second stroke trajectory, the battery pack 2 is unlocked relative to the housing 1. The first stroke trajectory and the second stroke trajectory of the trigger member 33 are not in a straight line. Further, a direction of the first stroke trajectory and a direction of the second stroke trajectory are different or parallel.

It needs to be explained that, the stroke trajectory may be a moving trajectory of any point on the trigger member 33. The first stroke trajectory and the second stroke trajectory are not in a straight line, which may be that the first stroke trajectory and the second stroke trajectory are not a straight line; may be that the first stroke trajectory and the second stroke trajectory are both a straight line, and the direction of the first stroke trajectory and the direction of the second stroke trajectory are different; may also be that the first stroke trajectory and the second stroke trajectory are both a straight line, and the first stroke trajectory and the second stroke trajectory are parallel to each other and not overlapped with each other, and may also be other forms, and is not limited thereto.

It can be understood that, the first stroke trajectory and the second stroke trajectory are not in a straight line, meaning that applying an acting force of a single direction on the trigger member 33 cannot make the battery pack 2 be unlocked relative to the housing 1, and an external force causing a false touch usually can merely apply the acting force of the single direction, therefore, a risk of the battery pack 2 being unlocked caused by the false touch can be effectively reduced.

Further, the number of the trigger member 33 is merely provided with one, and the first stroke trajectory and the second stroke trajectory are generated by a sequential movement of a same trigger member 33; or the number of the trigger member 33 is configured as at least two, and the first stroke trajectory and the second stroke trajectory are generated by a movement of different trigger members 33.

As an example, as shown in FIG. 3 to FIG. 8, the locking assembly 3 merely includes one trigger member 33, and the first stroke trajectory and the second stroke trajectory are generated by the sequential movement of one trigger member 33. Specifically, the trigger member 33 makes a pivotal motion around a pivot shaft, the trigger member 33 moves the first stroke trajectory and reaches a position capable of driving the lock tongue 31 to move, the trigger member 33 continues to move the second stroke trajectory and drives the lock tongue 31 to move to detach from the lock tongue receiving portion 32. In an embodiment, since the trigger member 33 makes the pivotal motion, the first stroke trajectory and the second stroke trajectory are both an arc line, and the two are not overlapped with each other.

As another example, as shown in FIG. 14 to FIG. 19, the locking assembly 3 merely includes one trigger member 33, and the first stroke trajectory and the second stroke trajectory are generated by the sequential movement of one trigger member 33. Specifically, the trigger member 33 moves the first stroke trajectory along a straight-line guiding direction and reaches the position capable of driving the lock tongue 31 to move, the trigger member 33 continues to make the pivotal motion around a pivot shaft and moves the second stroke trajectory, to drive the lock tongue 31 to move to detach from the lock tongue receiving portion 32. In an embodiment, the first stroke trajectory is a straight line, and the second stroke trajectory is an arc line.

As yet another example, as shown in FIG. 27 to FIG. 31, the number of the trigger member 33 is two, and are respectively the first trigger member 331 and the second trigger member 332, and the first trigger member 331 and the second trigger member 332 respectively drive the first lock tongue 3111 and the second lock tongue 3112 to move. The first stroke trajectory and the second stroke trajectory are respectively generated by the movement of the first trigger member 331 and the second trigger member 332. In an embodiment, a structure of the first trigger member 331 and a structure of the second trigger member 332 are same, and a motion mode is same, and the first stroke trajectory and the second stroke trajectory are parallel to each other.

As still another example, as shown in FIG. 24 to FIG. 26, the trigger member 33 includes the first trigger member 331 and a restricting member 333 for locking the first trigger member 331, and the restricting member 333 includes a first position and a second position generating a motion relative to the housing 1; in the first position, the restricting member 333 does not allow the first trigger member 331 to drive the lock tongue 31 to move; in the second position, the first trigger member 331 is configured to drive the lock tongue 31 to move.

The first stroke trajectory is generated by the movement of the restricting member 333 to realize the restricting member 333 to move from the first position to the second position, to allow the first trigger member 331 to be configured to drive the lock tongue 31 to move, wherein the first stroke trajectory is that the restricting member 333 makes a guiding slide or makes the pivotal motion towards a direction far away from the first trigger member 331; the second stroke trajectory is generated by the first trigger member 331 to realize the first trigger member 331 to drive the lock tongue 31 to detach relative to the lock tongue receiving portion 32. In an embodiment, the first stroke trajectory and the second stroke trajectory are respectively generated by the movement of the restricting member 333 and the first trigger member 331, that is, generated by the sequential movement of different trigger members 33, and the direction of the first stroke trajectory and the direction of the second stroke trajectory are different.

In related art, in order to solve a technical problem that the battery pack 2 of the power tool is easily unlocked caused by the false touch, and then the battery pack 2 is caused to detach from the power tool abnormally, two pairs of interlock mechanisms are provided between the battery pack 2 and the housing 1 of the power tool, that is, the power tool is provided with two lock tongues 31, two lock tongue receiving portions 32 respectively matched with the two lock tongues 31, and two trigger members 33 respectively used to control the two lock tongues 31 to move. However, a conventional battery pack 2 is usually merely provided with one lock tongue receiving portion 32, which causes the power tool unable to be compatible with an existing battery pack 2 platform and unable to realize a function of preventing the battery pack 2 from being unlocked caused by the false touch.

In order to be compatible with the existing battery pack 2 merely provided with one lock tongue receiving portion 32, and realize the function of preventing the battery pack 2 from being unlocked caused by the false touch, in an embodiment, the lock tongue 31 and the trigger member 33 are both movably disposed at the housing 1, and the lock tongue receiving portion 32 is both disposed at the battery pack 2, and the number of the lock tongue receiving portion 32 is merely one, and the lock tongue receiving portion 32 is configured to be engaged with at least one lock tongue 31.

As an example, as shown in FIG. 3 to FIG. 8, the locking assembly 3 includes one lock tongue 31, one lock tongue receiving portion 32, and one trigger member 33. In an embodiment, based on the external force applied on the trigger member 33, a first action generated by the trigger member 33 realizes the trigger member 33 to move, the lock tongue 31 does not move, and the battery pack 2 is not unlocked relative to the housing 1; based on the external force applied on the trigger member 33, a second action generated by the trigger member 33 realizes the trigger member 33 to move to drive the lock tongue 31 to move to detach from the lock tongue receiving portion 32, to make the battery pack 2 unlocked relative to the housing 1. In an embodiment, merely one lock tongue receiving portion 32 is provided, and through applying the force on the trigger member 33, making the trigger member 33 generate at least two different actions can realize the battery pack 2 unlocked relative to the housing 1, and the risk of the battery pack 2 being unlocked caused by the false touch can be effectively reduced.

As another example, as shown in FIG. 27 to FIG. 31, the locking assembly 3 includes two lock tongues 31, one lock tongue receiving portion 32 matched with the two lock tongues 31, and two trigger members 33, and the two lock tongues 31 are respectively the first lock tongue 3111 and the second lock tongue 3112. In an embodiment, the two lock tongues 31 share one lock tongue receiving portion 32, and through providing the two trigger members 33, applying the force on the two trigger members 33 can realize the battery pack 2 unlocked relative to the housing 1, and the risk of the battery pack 2 being unlocked caused by the false touch can be effectively reduced.

The power tool of an embodiment can be compatible with the existing battery pack 2 merely provided with one lock tongue receiving portion 32, and meanwhile realizes the function of preventing the battery pack 2 from being unlocked caused by the false touch based on the battery pack 2 platform.

A chain saw 100 for an operation on a tree is usually provided for a user to use when operating on the tree, and an operation environment is relatively complex, and the user usually hangs the chain saw 100 on a body when climbing the tree, and the chain saw 100 may shake in a process of climbing the tree, therefore, in the process of the user climbing the tree and performing the operation on the tree, an unlocking button of the battery pack 2 may touch a branch or generate a touch with a body of the user, thereby may cause the battery pack 2 to be unlocked caused by the false touch, make the battery pack 2 abnormally detach from the chain saw 100, cause an injury to surrounding people or animals, or cause a damage to an item, and a relatively large potential safety hazard exists.

In an embodiment, referring to FIG. 1, the power tool is the chain saw 100, and the chain saw 100 includes a cutting assembly 62 and a top handle 63. The cutting assembly 62 is mounted to the housing 1, the cutting assembly 62 includes a guide bar 641 and a saw chain 621 (also referred to as a cutting chain) disposed around the guide bar 641, and the guide bar 641 provides support and a guide for the saw chain 621. The top handle 63 is provided for the user to hold. The cutting assembly 62 is disposed at a front side of the housing 1 in a length extending direction of the chain saw 100; the battery pack mounting portion 101 is disposed at a rear side of the housing 1 in the length extending direction of the chain saw 100; the top handle 63 is disposed above the housing 1 in a height extending direction of the chain saw 100.

It needs to be explained that, as shown in FIG. 1, the length extending direction L1 of the chain saw 100 is a length extending direction of the guide bar 641, the height extending direction H1 of the chain saw 100 is a height extending direction of the guide bar 641, and the width extending direction W1 of the chain saw 100 is a thickness extending direction of the guide bar 641.

The top handle 63 includes a top handle housing 631, and the trigger member 33 and at least a part of the lock tongue 31 are disposed at the top handle housing 631. It can be understood that, movably disposing the lock tongue 31 and the trigger member 33 on the housing 1, and disposing the lock tongue receiving portion 32 on the battery pack 2, can dispose the trigger member 33 on the top handle housing 631, which facilitates the user to hold by a single hand and simultaneously operate unlocking of the battery pack 2.

As shown in FIG. 12, the chain saw 100 further includes a trigger 66 for controlling the chain saw 100 to work or stop. The trigger 66 is disposed at an upper side or a lower side of the top handle housing 631. The trigger member 33 and the trigger 66 are respectively disposed at a same side or opposite sides of the top handle housing 631, which is convenient for the user to operate.

The chain saw 100 further includes an auxiliary handle 65, and the auxiliary handle 65 is disposed at a lateral side of the housing 1. Optionally, the auxiliary handle 65 is located at a left side of the housing 1.

The top handle 63 of the chain saw 100 for the tree is disposed at a front side of the battery pack 2, making a volume of the chain saw 100 smaller and a structure more compact, and being used in coordination with the auxiliary handle 65 disposed at the lateral side of the housing 1 facilitates an arm of an operator to operate in a narrow space, and is especially suitable for being used under a complex operation environment such as the operation on the tree.

In some embodiments, the locking assembly 3 includes the lock tongue 31, the lock tongue receiving portion 32, the trigger member 33, and a lock tongue linkage member 34.

In some embodiments, the lock tongue receiving portion 32 includes at least one stopping space capable of being engaged with the lock tongue 31 and stopping the lock tongue 31; the lock tongue 31 detaches from stopping of the stopping space of the lock tongue receiving portion 32, making the battery pack 2 unlocked relative to the housing 1. It can be understood that, unlocking of the lock tongue 31 and the lock tongue receiving portion 32 may be that the lock tongue 31 detaches from stopping of all stopping spaces of the lock tongue receiving portion 32.

The lock tongue receiving portion 32 is a lock groove or a lock hole disposed at the housing 1 or the battery pack housing 201. It can be understood that, the lock groove or the slot hole constitutes the stopping space of the lock tongue receiving portion 32 capable of stopping the lock tongue 31.

As shown in FIG. 4 to FIG. 8, the lock tongue 31 includes at least one convex portion 311, the lock tongue receiving portion 32 includes at least one concave portion 321, the convex portion 311 of the lock tongue 31 and the concave portion 321 of the lock tongue receiving portion 32 are engaged with each other, which can make the battery pack 2 locked relative to the housing 1; the convex portion 311 of the lock tongue 31 detaches from the concave portion 321 of the lock tongue receiving portion 32, which can make the battery pack 2 unlocked relative to the housing 1.

As an example, the lock tongue receiving portion 32 includes the lock groove disposed at the housing 1 or the battery pack housing 201. The lock tongue 31 includes one convex portion 311, the lock groove includes one concave portion 321 matched with the one convex portion 311, and the one convex portion 311 of the lock tongue 31 and the one concave portion 321 of the lock groove are engaged with each other, which can make the battery pack 2 locked relative to the housing 1. That is, the one convex portion 311 extends into the one concave portion 321, making the battery pack 2 and the housing 1 relatively locked and unable to move. The lock tongue 31 and the lock tongue receiving portion 32 are unlocked, that is, the convex portion 311 of the lock tongue 31 detaches from the concave portion 321 of the lock groove, making the battery pack 2 able to move relative to the housing 1.

As another example, the lock tongue receiving portion 32 includes the lock groove disposed at the housing 1 or the battery pack housing 201. The lock tongue 31 includes a plurality of convex portions 311, and the lock groove includes a plurality of concave portions 321 in a one-to-one correspondence match with the plurality of convex portions 311. It can be understood that, the lock tongue 31 may be an integral structure, such as extending on a main body to form the plurality of convex portions 311, and the plurality of convex portions 311 all synchronously move with the main body; the lock tongue 31 may also include a plurality of discrete structures, one convex portion 311 is respectively formed on each discrete structure, and the plurality of discrete structures all synchronously link with a movement of the trigger member 33, that is, the convex portions 311 of the plurality of discrete structures synchronously engage with the plurality of concave portions 321 of the lock groove to realize locking of the battery pack 2, or synchronously detach from the plurality of concave portions 321 of the lock groove to realize unlocking of the battery pack 2.

As still another example, the lock tongue receiving portion 32 includes the lock groove disposed at the housing 1 or the battery pack housing 201. The lock tongue 31 includes one or more convex portions 311, the lock groove includes one or more concave portions 321 matched with the one or more convex portions 311, and the convex portion 311 and the concave portion 321 are not matched in a one-to-one correspondence. For example, it may be a structure that the lock tongue 31 includes a plurality of pawls, and the lock groove includes one ratchet groove matched with the plurality of pawls; it may also be that one convex portion 311 sequentially engages with a plurality of lock grooves, etc., which are not enumerated one by one herein.

In an embodiment, a longitudinal cross section of the concave portion 321 of the lock groove is a trumpet shape gradually narrowing from an outer side to an inner side, and an outer side part of a longitudinal cross section of the convex portion 311 of the lock tongue 31 gradually narrows along a direction close to the lock groove, and such structure is beneficial for aligning the lock tongue 31 and the lock groove, and an accuracy requirement for the lock tongue 31 in a moving direction is low. A limiting surface mutually matched and abutted with an outer end surface of the concave portion 321 of the lock groove is disposed around the convex portion 311 of the lock tongue 31, to make the lock tongue 31 and the lock groove able to stably engage with each other, and able to reduce a relative movement between the battery pack 2 and the housing 1.

The trigger member 33 is guidingly and movably disposed at the housing 1, and the trigger member 33 makes a guiding movement relative to the housing 1, to drive the lock tongue 31 to engage with or detach from the lock tongue receiving portion 32. The trigger member 33 is directly connected to, or indirectly connected to, or abutted against the lock tongue 31.

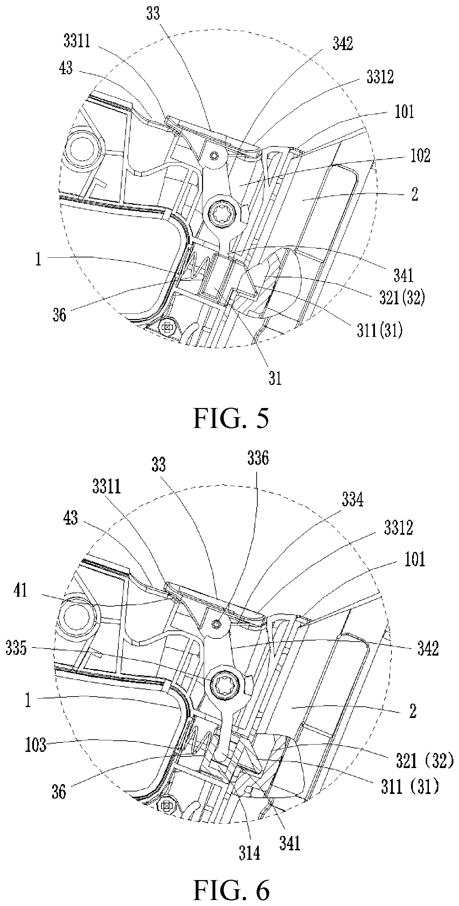

As shown in FIG. 6, the locking assembly 3 further includes a trigger member elastic reset member 334; the trigger member 33 includes an initial position in a state without an external applied acting force, and the trigger member elastic return member 334 acts on the trigger member 33 for applying an acting force making the trigger member 33 move towards the initial position.

As shown in FIG. 6, the locking assembly 3 further includes a lock tongue elastic reset member 36; the lock tongue elastic reset member 36 acts on the lock tongue 31 for applying an acting force making the lock tongue 31 move towards a direction of the lock tongue receiving portion 32. A return member mounting portion is disposed at the lock tongue 31, and one end of the lock tongue elastic reset member 36 is attached to the return member mounting portion, and another end abuts against the housing 1 or the battery pack housing 201.

In an embodiment, the lock tongue 31 and the trigger member 33 are disposed at the housing 1, and the lock tongue receiving portion 32 is disposed at the battery pack 2; a through hole is disposed at the housing 1 for the lock tongue 31 to extend into the battery pack mounting portion 101. In another embodiment, the lock tongue 31 and the trigger member 33 are disposed at the battery pack housing 201, and the lock tongue receiving portion 32 is disposed at the housing 1; a through hole is disposed at the battery pack housing 201 for the lock tongue 31 to extend out.

In an embodiment, referring to FIG. 6 to FIG. 8, the lock tongue linkage member 34 is pivotally disposed at the housing 1 or the battery pack housing 201 around a first pivot shaft 335, the lock tongue linkage member 34 includes a lock tongue abutting portion 341 and a trigger member abutting portion 342, the trigger member 33 is movably disposed at the housing 1 or the battery pack housing 201, and can move to abut against the trigger member abutting portion 342 and drive the trigger member abutting portion 342 to make the pivotal motion around the first pivot shaft 335, and the lock tongue abutting portion 341 is configured to abut against the lock tongue 31 and drive the lock tongue 31 to move towards a direction far away from the lock tongue receiving portion 32.

Specifically, the lock tongue linkage member 34 has a through shaft hole 343 allowing the first pivot shaft 335 to pass through, and the lock tongue linkage member 34 is pivotally disposed at the first pivot shaft 335 through the through shaft hole 343. The trigger member elastic return member 334 is a torsion spring snapped between the trigger member 33 and the housing 1.

It can be understood that, the lock tongue linkage member 34 may be an integral structure, and the lock tongue abutting portion 341 and the trigger member abutting portion 342 are formed on the integral structure along different directions. The lock tongue linkage member 34 may also include two discrete elements, the lock tongue abutting portion 341 and the trigger member abutting portion 342 are respectively formed on the two discrete elements, and the two discrete elements are made to realize a synchronous linkage in a manner of abutting match.

Further, the lock tongue abutting portion 341 and the trigger member abutting portion 342 are located at two sides of a plane passing through a pivot axis of the first pivot shaft 335 and parallel to a direction of the movement of the lock tongue 31. Preferably, an included angle between an extending direction of the lock tongue abutting portion 341 and an extending direction of the trigger member abutting portion 342 is 90°~180°. More preferably, the included angle between the extending direction of the lock tongue abutting portion 341 and the extending direction of the trigger member abutting portion 342 is 150°~180°.

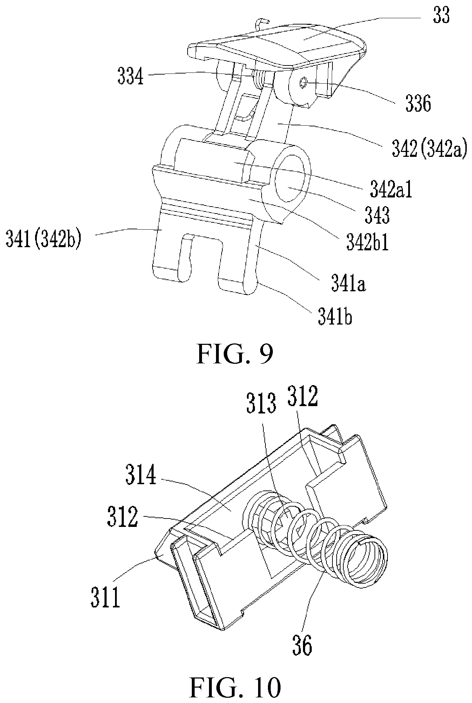

Referring to FIG. 9, the lock tongue abutting portion 341 includes an extending portion 341a disposed roughly along the extending direction thereof and an abutting portion 341b connected to an outer end of the extending portion 341a, and the abutting portion 341b has a smoothly transitioned outer contour in a pivot direction of the lock tongue abutting portion 341. As an example, the lock tongue abutting portion 341 may include two abutting portions 341b symmetrically disposed, and the two abutting portions 341b are connected as a whole through the extending portion 341a.

In an embodiment, the lock tongue linkage member 34 includes two discrete elements, which are respectively an upper linkage member 342a and a lower linkage member 342b, the trigger member abutting portion 342 is formed on the upper linkage member 342a, the lock tongue abutting portion 341 is formed on the lower linkage member 342b, and the upper linkage member 342a and the lower linkage member 342b realize the synchronous linkage in the manner of abutting match. Specifically, the upper linkage member 342a and the lower linkage member 342b are respectively and pivotally connected to the first pivot shaft 335, an upper boss 342a1 is formed on an outer edge of the upper linkage member 342a, a lower boss 342b1 is formed on an outer edge of the lower linkage member 342b, and the upper boss 342a1 and the lower boss 342b1 abut against each other through an abutting surface disposed along a radial direction of the first pivot shaft 335, to realize the synchronous linkage of the upper linkage member 342a and the lower linkage member 342b.

In an embodiment, the lock tongue linkage member 34 is movably disposed relative to the lock tongue 31 and can abut against the lock tongue 31. It can be understood that, the lock tongue linkage member 34 and the lock tongue 31 are two independent components.

Referring to FIG. 10, the lock tongue 31 is provided with an embedded groove 314 allowing the lock tongue abutting portion 341 of the lock tongue linkage member 34 to extend in to limit it in the pivot direction of the lock tongue abutting portion 341, and is further provided with the eset member mounting portion 313, and one end of the lock tongue elastic return member 36 is attached to the reset member mounting portion 313, and another end abuts against the housing 1. The lock tongue abutting portion 341 of the lock tongue linkage member 34 includes two abutting portions 341b. The reset member mounting portion 313 is at least partially disposed in the embedded groove 314, a middle part of a side wall of the embedded groove 314 far away from the convex portion 311 opens for the lock tongue elastic return member 36 to extend out, and two stopping walls 312 for respectively abutting against the two abutting portions 341b of the lock tongue linkage member 34 are formed on two sides of the side wall. Specifically, the lock tongue elastic reset member 36 is a spring, the reset member mounting portion 313 is a column fixed in the embedded groove 314 and having a gradually narrowing head, to make one end of the spring able to sleeve and snap on a front end of the column, and a cross section of the column is a cross shape. A spring limiting groove 103 is disposed at a corresponding position on the housing 1, for limiting another end of the spring. By disposing the reset member mounting portion 313 in the embedded groove 314, the structure of the lock tongue 31 is made more compact, and the volume is smaller.

In an embodiment, as shown in FIG. 4 to FIG. 8, the trigger member 33 is pivotally connected to the housing 1 or the battery pack housing 201 around a second pivot shaft 336; or the trigger member 33 is pivotally connected to the lock tongue linkage member 34 around a second pivot shaft 336. Further, the trigger member 33 is pivotally connected to the lock tongue linkage member 34 around the second pivot shaft 336. Specifically, the trigger member 33 is pivotally connected to the trigger member abutting portion 342 of the lock tongue linkage member 34 around the second pivot shaft 336.

Further, the trigger member elastic return member 334 is the torsion spring snapped between the trigger member 33 and the housing 1 or the battery pack housing 201.

The housing 1 or the battery pack housing 201 is provided with a trigger member mounting notch 4, and the trigger member 33 is mounted to the trigger member mounting notch 4, and does not protrude from the housing 1 or the battery pack housing 201. Such structure makes the trigger member 33 not easy to be falsely touched. Further, the trigger member mounting notch 4 is provided with a limiting groove wall 41 for limiting a moving range of the trigger member 33 and a slot hole 42 for the trigger member 33 to extend into the housing 1 or the battery pack housing 201, and an operating gap 43 is left between the operation end 3311 of the trigger member 33 and the trigger member mounting notch.

In another embodiment, referring to FIG. 11 to FIG. 16, the trigger member 33 is movably guided along a first direction through a guide structure 337. A first unlocking action is configured to press the trigger member 33 to make it move along the first direction to abut against the lock tongue linkage member 34; a second unlocking action is configured to push and press the trigger member 33 along a second direction, to make the trigger member 33 move and drive the lock tongue linkage member 34 to pivot around the first pivot shaft 335, and the lock tongue linkage member 34 drives the lock tongue 31 to move until the lock tongue 31 and the lock tongue receiving portion 32 are disengaged from each other, making the battery pack 2 unlocked relative to the housing 1.

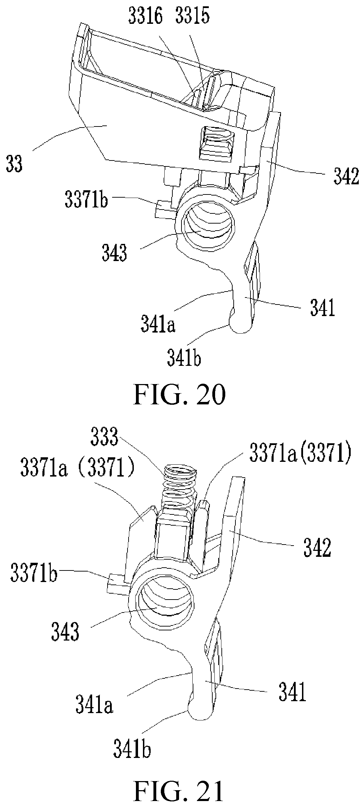

Further, referring to FIG. 20 to FIG. 22, the guide structure 337 includes a guide block 3371 pivotally disposed around the first pivot shaft 335 and a guide groove 3372 disposed at the trigger member 33 and matched with the guide block 3371. At this time, the first unlocking action is configured to press the trigger member 33 to make it move along the first direction to abut against the lock tongue linkage member 34; the second unlocking action is configured to push and press the trigger member 33 along the second direction, to make the trigger member 33 make the pivotal motion along with the guide block 3371 around the first pivot shaft 335, and drive the lock tongue linkage member 34 to pivot around the first pivot shaft 335, and the lock tongue linkage member 34 drives the lock tongue 31 to move until the lock tongue 31 and the lock tongue receiving portion 32 are disengaged from each other, making the battery pack 2 unlocked relative to the housing 1.

The trigger member elastic reset member 334 is a spring disposed between the guide block 3371 and the guide groove 3372.

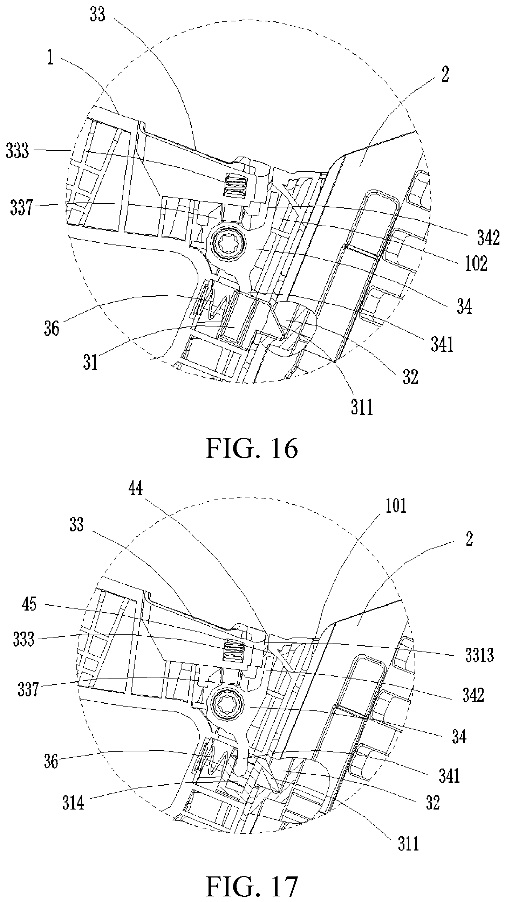

Referring to FIG. 17 to FIG. 19, the housing 1 or the battery pack housing 201 is provided with the trigger member mounting notch 4, a limiting wall 44 is disposed at the trigger member mounting notch 4, the trigger member 33 is provided with a stopping surface 3313 matched with the limiting wall 44, and the limiting wall 44 is used for stopping the stopping surface 3313, to make the trigger member 33 move along the first direction and unable to move along the second direction before detaching from stopping of the limiting wall 44.

A guide wall 45 is further disposed at the housing 1 or the battery pack housing 201, and the guide wall 45 is used for guiding the trigger member 33 to move along the second direction. As an example, the guide wall 45 extends roughly along the second direction. The guide wall 45 can play a certain guiding role for the trigger member 33, making it easier for the user to find a force-applying angle matched with the second direction, and making the unlocking action of the battery pack 2 easier to operate.

In an embodiment, the lock tongue linkage member 34 is the integral structure, and the lock tongue abutting portion 341 and the trigger member abutting portion 342 are formed on the integral structure along different directions.

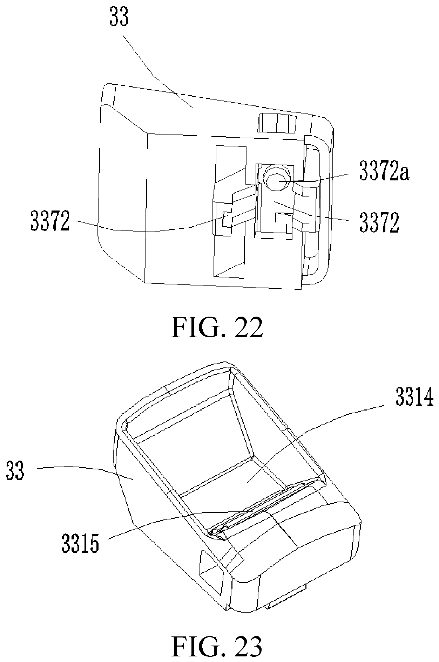

Referring to FIG. 23, the trigger member 33 includes a pressing surface 3314 disposed roughly perpendicularly to the first direction and a pushing-pressing surface 3315 disposed roughly perpendicularly to the second direction. An anti-slip pattern 3316 is disposed at the pushing-pressing surface 3315. Specifically, an upper surface of the trigger member 33 is provided with a groove, a bottom wall of the groove forms the pressing surface 3314, and a side wall of the groove forms the pushing-pressing surface 3315. The pressing surface 3314 is disposed roughly perpendicularly to the first direction, which is beneficial for the user to apply an acting force on the trigger member 33 to make it move along the first direction, the pushing-pressing surface 3315 is disposed roughly perpendicularly to the second direction, which is beneficial for the user to apply an acting force on the trigger member 33 to make it move along the second direction, and it is easier for the user to find the force-applying angle making the trigger member 33 generate the first action and the second action, making unlocking the battery pack 2 easier to operate.

Referring to FIG. 12 and FIG. 15, in an embodiment, a sliding guide mechanism 5 is provided between the battery pack 2 and the battery pack mounting portion 101, and the sliding guide mechanism 5 includes a sliding groove 52 and a sliding rail 51 in a guiding match with the sliding groove 52. The sliding groove 52 is disposed at one of the battery pack 2 and the battery pack mounting portion 101, the sliding rail 51 in the guiding match with the sliding groove 52 is disposed at the other one, and the battery pack 2 is movably guided and connected to the battery pack mounting portion 101 through a match of the sliding groove 52 and the sliding rail 51.

As an example, the sliding groove 52 is disposed at the battery pack mounting portion 101, the sliding rail 51 in the guiding match with the sliding groove 52 is disposed at the battery pack 2, the battery pack 2 is movably guided and connected to the battery pack mounting portion 101 through the match of the sliding rail 51 and the sliding groove 52, to realize a mutual guiding limitation between the battery pack 2 and the battery pack mounting portion 101. An upper side of the battery pack mounting portion 101 opens, and the battery pack 2 is inserted into the battery pack mounting portion 101 from top to bottom along a longitudinal direction.

A mounting portion electrode terminal is disposed in the battery pack mounting portion 101, the mounting portion electrode terminal is electrically connected to the power tool, the battery pack 2 is provided with a battery pack electrode terminal, and when the battery pack 2 is reliably mounted in the battery pack mounting portion 101, the mounting portion electrode terminal and the battery pack electrode terminal are matched, which can realize an electrical connection between the battery pack 2 and the power tool.

For the power tool of an embodiment, when the user mounts the battery pack 2, makes the sliding rail 51 and the sliding groove 52 aligned, and inserts the battery pack 2 into the battery pack mounting portion 101, when the battery pack 2 is inserted in place, the lock tongue 31 can be engaged with the lock groove on the battery pack 2 under an action of the lock tongue elastic reset member 36, that is, the convex portion 311 of the lock tongue 31 extends into the concave portion 321 of the lock groove, to make the battery pack 2 locked relative to the housing 1. When the user needs to detach the battery pack 2, the user firstly needs to unlock the battery pack 2, and then pulls out the battery pack 2 along a guiding direction.

In order to solve the technical problem that the battery pack 2 of the power tool is easily unlocked caused by the false touch, and then the battery pack 2 is caused to detach from the power tool abnormally, the present disclose further provides a power tool, including the housing 1 and the locking assembly 3. The housing 1 is provided with the battery pack mounting portion 101, the battery pack mounting portion 101 can be provided for the battery pack 2 to be inserted and connected, and the battery pack 2 is configured to provide electric energy to the power tool. The locking assembly 3 includes the lock tongue 31, the lock tongue receiving portion 32 and the trigger member 33.

The lock tongue 31 and the trigger member 33 are movably disposed at one of the housing 1 and the battery pack 2, and the lock tongue receiving portion 32 is disposed at another of the housing 1 and the battery pack 2. The lock tongue 31 and the lock tongue receiving portion 32 are engaged with each other to make the battery pack 2 locked relative to the housing 1; the lock tongue 31 and the lock tongue receiving portion 32 are detached from each other to make the battery pack 2 unlocked relative to the housing 1.

The power tool is configured to be applied with the external force on the trigger member 33, and at least two different actions generated by the trigger member 33 directly or indirectly drive the lock tongue 31 to move relative to the lock tongue receiving portion 32, to realize the battery pack 2 unlocked relative to the housing 1.

The battery pack 2 includes the battery pack housing 201, the battery pack housing 201 includes a first outer contour surface 71 and a second outer contour surface 72, the first outer contour surface 71 and the second outer contour surface 72 are relatively disposed in a direction perpendicular to an insertion direction of the battery pack 2, at least a part of the lock tongue 31 or the lock tongue receiving portion 32 is disposed at the first outer contour surface 71, and the trigger member 33 is located at one side of the second outer contour surface 72.

In an embodiment, all trigger members 33 are located at one side of the second outer contour surface.

The number of the lock tongue 31 may be one or more, and the number of the lock tongue receiving portion 32 matched with the one or more lock tongues 31 may also be one or more; correspondingly, the number of the trigger member 33 may also be one or more.

As an example, referring to FIG. 3 to FIG. 8, the locking assembly 3 includes one lock tongue 31, one lock tongue receiving portion 32, and one trigger member 33. The lock tongue 31 and the trigger member 33 are movably disposed at the housing 1, and the lock tongue receiving portion 32 is disposed at the battery pack 2. In an embodiment, the first outer contour surface 71 and the second outer contour surface 72 are relatively disposed in a thickness direction of the battery pack 2, the lock tongue receiving portion 32 is disposed at the first outer contour surface 71, and the trigger member 33 is located at the one side of the second outer contour surface 72.

As another example, referring to FIG. 27 to FIG. 31, the locking assembly 3 includes two lock tongues 31, one lock tongue receiving portion 32 matched with the two lock tongues 31, and two trigger members 33, the two lock tongues 31 are respectively the first lock tongue 3111 and the second lock tongue 3112, the lock tongue 31 and the trigger member 33 are movably disposed at the housing 1, and the lock tongue receiving portion 32 is disposed at the battery pack 2. In an embodiment, the first outer contour surface 71 and the second outer contour surface 72 are relatively disposed in the thickness direction of the battery pack 2, the lock tongue receiving portion 32 is disposed at the first outer contour surface 71, and the two trigger members 33 are located at the one side of the second outer contour surface 72.

In an embodiment, all trigger members 33 and all lock tongues 31 are located at one side of a plane P1 perpendicular to a thickness axis T and passing through a midpoint of a thickness, or all trigger members 33 and all lock tongues 31 are located at the one side of the second outer contour surface. Specific examples of an embodiment have been mentioned in the foregoing embodiments, and details are not described herein again.

In an embodiment, all trigger members 33, all lock tongues 31, and all lock tongue receiving portions 32 are all located at the one side of the plane P1 perpendicular to the thickness axis and passing through the midpoint of the thickness, or all trigger members 33, all lock tongues 31, and all lock tongue receiving portions 32 are all located at the one side of the second outer contour surface 72. Specific examples of an embodiment have been mentioned in the foregoing embodiments, and details are not described herein again.

In an embodiment, as shown in FIG. 1, the battery pack 2 includes the battery pack housing 201, and the battery pack housing 201 extends along three orthogonal spatial directions (x, y, z) in directions of a width axis W, the thickness axis T, and a height axis H of the battery pack housing 201. The trigger member 33 and the lock tongue 31 are all located at a same side of a plane passing through a center of gravity of the battery pack 2 and perpendicular to the thickness axis T; or, the trigger member 33 and the lock tongue 31 are all located at a same side of a plane passing through the center of gravity of the battery pack 2 and perpendicular to the width axis W. Specifically, the center of gravity of the battery pack 2 is located in the battery pack housing 201.

In an embodiment, as shown in FIG. 36, the battery pack 2 includes the battery pack housing 201, and the battery pack housing 201 extends along three orthogonal spatial directions (x, y, z) in the directions of the width axis W, the thickness axis T, and the height axis H of the battery pack housing 201. The battery pack housing 201 includes a first housing 211 and a second housing 212 relatively disposed along a direction of the thickness axis, and in the direction of the thickness axis, the trigger member 33 and the lock tongue 31 are both located at one of the first housing 211 and the second housing 212.

In an embodiment, the battery pack 2 and the battery pack mounting portion 101 include a plurality of pairs of matching surfaces located at different sides of the battery pack 2, and the lock tongue 31 and the lock tongue receiving portion 32 are both disposed at one pair of matching surfaces therein. As an example, as shown in the figure, taking the chain saw 100 as an example, in the direction of the thickness axis of the battery pack 2, one side of the battery pack 2 close to the cutting assembly 62 is front, and one side far away from the cutting assembly 62 is rear, and in the direction of the width axis of the battery pack 2, in a state where a user faces forward, a left-hand side is left, and a right-hand side is right. Between the battery pack 2 and the battery pack mounting portion 101 includes five pairs of matching surfaces located at the front side, the rear side, a left side, a right side and a bottom side of the battery pack 2, and the lock tongue 31 and the lock tongue receiving portion 32 are both disposed at one pair of matching surfaces among the front side, the rear side, the left side, and the right side. Specifically, the lock tongue 31 and the lock tongue receiving portion 32 are both disposed at the matching surface of the front side.

Further, the battery pack 2 further includes a battery pack terminal block, the battery pack terminal block includes a plurality of terminals electrically connected to the power tool, and the battery pack terminal block is disposed close to the first outer contour surface 71, and is disposed far away from a second outer contour surface.

As an example, as shown in FIG. 3, the locking assembly 3 includes two lock tongues 31, one lock tongue receiving portion 32 matched with the two lock tongues 31, and two trigger members 33. The two lock tongues 31 are respectively the first lock tongue 3111 and the second lock tongue 3112, the lock tongue 31 and the trigger member 33 are movably disposed at the housing 1, and the lock tongue receiving portion 32 is disposed at the battery pack 2. In an embodiment, the first outer contour surface 71 and the second outer contour surface 72 are relatively disposed in the thickness direction of the battery pack 2, the lock tongue receiving portion 32 and the battery pack terminal block are both disposed at the first outer contour surface 71, and all trigger members 33 are located at the one side of the second outer contour surface 72.

It needs to be explained that, in the foregoing embodiments, each embodiment without conflict may be freely combined to form a new embodiment, therefore, the foregoing mentioned embodiments are not repeatedly described herein again.

In order to solve the technical problem that the battery pack 2 of the power tool is easily unlocked caused by the false touch, and then the battery pack 2 is caused to detach from the power tool abnormally, the present disclose further provides a power tool, including the housing 1 and the locking assembly 3. The housing 1 is provided with the battery pack mounting portion 101, the battery pack mounting portion 101 can be provided for the battery pack 2 to be inserted and connected, and the battery pack 2 is configured to provide electric energy to the power tool. The locking assembly 3 includes the lock tongue 31, the lock tongue receiving portion 32 and the trigger member 33.

The lock tongue 31 and the trigger member 33 are movably disposed at one of the housing 1 and the battery pack 2, and the lock tongue receiving portion 32 is disposed at another of the housing 1 and the battery pack 2. The lock tongue 31 and the lock tongue receiving portion 32 are engaged with each other to make the battery pack 2 locked relative to the housing 1; the lock tongue 31 and the lock tongue receiving portion 32 are detached from each other to make the battery pack 2 unlocked relative to the housing 1.

The trigger member 33 is merely provided with one, the power tool is configured to be applied with the external force on the trigger member 33, and at least two different actions generated by the trigger member 33 directly or indirectly drive the lock tongue 31 to move relative to the lock tongue receiving portion 32, to realize the battery pack 2 unlocked relative to the housing 1.

It can be understood that, the power tool is merely provided with one trigger member 33, and the at least two different actions generated by the trigger member 33 are at least two different actions generated by the trigger member 33 under the external force applied on the same trigger member 33, for example, the operator applies the force on the trigger member 33 to make the trigger member 33 generate the actions. The trigger member 33 is an object applied with the external force, and certainly an object applying the force includes but is not limited to the operator, and may also be other force applying objects. A manner of applying the force includes a direct contact operation, an indirect operation transmitting the acting force to the trigger member 33, etc., and is not limited thereto.

At least two different actions of the trigger member 33 can realize the battery pack 2 unlocked relative to the housing 1, that is to say, a single action is insufficient to make the battery pack 2 unlocked relative to the housing 1, and the external force causing the false touch usually can merely make the trigger member 33 generate the single action, therefore, through at least two different actions of the trigger member 33 realizing the battery pack 2 unlocked relative to the housing 1, the risk of the battery pack 2 being unlocked caused by the false touch can be effectively reduced.

It can be understood that, operating the same trigger member 33 can unlock the battery pack 2 relative to the housing 1, and while realizing avoiding the battery pack 2 being unlocked caused by the false touch, it is also more convenient for the user to perform the unlocking operation of the battery pack 2.

As an example, as shown in FIG. 3 to FIG. 8, the locking assembly 3 includes one lock tongue 31, one lock tongue receiving portion 32, and merely one trigger member 33. In an embodiment, the external force is applied to the trigger member 33, and one action generated by the trigger member 33 realizes the trigger member 33 to move, the lock tongue 31 does not move, and the battery pack 2 is not unlocked relative to the housing 1; the external force is applied to the trigger member 33, and another action generated by the trigger member 33 realizes the trigger member 33 to move to drive the lock tongue 31 to move to detach from the lock tongue receiving portion 32, to make the battery pack 2 unlocked relative to the housing 1.

As an example, as shown in FIG. 39, the locking assembly 3 includes two lock tongues 31, two lock tongue receiving portions 32, and merely one trigger member 33, the two lock tongues 31 are respectively the first lock tongue 3111 and the second lock tongue 3112, and the two lock tongue receiving portions 32 are respectively a first lock tongue receiving portion 32 matched with the first lock tongue 3111 and a second lock tongue receiving portion 32 matched with the second lock tongue 3112. In an embodiment, the external force is applied to the trigger member 33, and one action generated by the trigger member 33 realizes the trigger member 33 to move, and drives the first lock tongue 3111 to move to detach from the first lock tongue receiving portion 32, and the battery pack 2 is not unlocked relative to the housing 1; the external force is applied to the trigger member 33, and another action generated by the trigger member 33 realizes the trigger member 33 to move, and drives the second lock tongue 3112 to move to detach from the second lock tongue receiving portion 32, to make the battery pack 2 unlocked relative to the housing 1.

Further, the battery pack 2 includes the battery pack housing 201, the battery pack housing 201 includes the first outer contour surface 71 and the second outer contour surface 72, and the first outer contour surface 71 and the second outer contour surface 72 are relatively disposed in the direction perpendicular to the insertion direction of the battery pack 2. The first lock tongue 3111 and the second lock tongue 3112, or the first lock tongue receiving portion 32 and the second lock tongue receiving portion 32 are respectively disposed at the first outer contour surface 71 and the second outer contour surface 72. In a specific example, the lock tongue 31 and the trigger member 33 are movably disposed at the housing 1, the lock tongue receiving portion 32 is disposed at the battery pack 2, and the first lock tongue receiving portion 32 and the second lock tongue receiving portion 32 are respectively disposed at the first outer contour surface 71 and the second outer contour surface 72.

It needs to be explained that, in the foregoing embodiments, each embodiment without conflict may be freely combined to form a new embodiment, therefore, the foregoing mentioned embodiments are not repeatedly described herein again.

To solve a technical problem that a battery pack 2 of a power tool is easily unlocked due to accidental triggering, thereby causing the battery pack 2 to abnormally separate from the power tool, the present disclose also provides an unlocking method for a battery pack 2 configured with a power tool. Referring to Figures 1 to 3, the power tool comprises a housing 1 and a locking assembly 3 provided on the housing 1, the housing 1 is provided with a battery pack mounting portion 101, the battery pack mounting portion 101 for the battery pack 2 to be inserted and connected, the battery pack 2 is configured to provide electrical energy to the power tool; the locking assembly 3 comprises a locking tongue 31, a locking tongue receiving portion 32 and a trigger member 33, the locking tongue 31 and the trigger member 33 are movably disposed at one of the housing 1 and the battery pack 2, and the locking tongue receiving portion 32 is disposed at the other of the housing 1 and the battery pack 2. The unlocking method comprises at least following steps:
a first step, an external force is applied to the trigger member 33, the trigger member 33 moves along a first stroke trajectory, to achieve the battery pack 2 not unlocking relative to the housing 1;
a second step, the external force continues to be applied to the trigger member 33, the trigger member 33 moves along a second stroke trajectory, to achieve the trigger member 33 moving and driving the locking tongue 31 to move;
the second stroke trajectory is different from the first stroke trajectory; the number of the trigger member 33 is one and only one, the trigger member 33 in the first step and the second step being a same trigger member 33.

It may be understood that an external force is applied to the trigger member 33, to cause the trigger member 33 to move along the first stroke trajectory and the second stroke trajectory, to achieve unlocking of the battery pack 2 relative to the housing 1. For example, an operator applies a force to the trigger member 33 to cause the trigger member 33 to move along the first stroke trajectory and the second stroke trajectory. The trigger member 33 is an object to which the external force is applied. Of course, a force-applying object includes but is not limited to the operator, and may also be another force-applying object. A method of applying the force includes a direct contact operation, an indirect operation to transmit an acting force to the trigger member 33, etc., but is not limited thereto.

Further, the first stroke trajectory and the second stroke trajectory are not on a same straight line. It should be noted that the first stroke trajectory and the second stroke trajectory not being on a same straight line may mean that the first stroke trajectory and the second stroke trajectory are non-linear; may mean that the first stroke trajectory and the second stroke trajectory are both straight lines, and a direction of the first stroke trajectory and a direction of the second stroke trajectory are different; and may also mean that the first stroke trajectory and the second stroke trajectory are both straight lines, the first stroke trajectory and the second stroke trajectory are parallel and do not overlap, or may be in another form, not limited thereto.

It may be understood that the first stroke trajectory and the second stroke trajectory not being on a same straight line means that applying an acting force in a single direction to the trigger member 33 cannot cause the battery pack 2 to unlock relative to the housing 1, and an external force causing accidental triggering can usually only apply an acting force in a single direction. Therefore, a risk of the battery pack 2 being unlocked due to the accidental triggering may be effectively reduced.

Further, in the second step, the trigger member 33 drives the locking tongue 31 to move, and the battery pack 2 unlocks relative to the housing 1.

Further, the number of the trigger member 33 is one and only one.

As an example, as shown in Figures 3 to 8, the locking assembly 3 comprises one locking tongue 31, one locking tongue receiving portion 32, and only one trigger member 33. The unlocking method comprises at least following steps:
a first step, an external force is applied to the trigger member 33, the trigger member 33 moves along a first stroke trajectory, to achieve the locking tongue 31 not moving, and the battery pack 2 not unlocking relative to the housing 1;
a second step, the external force continues to be applied to the trigger member 33, the trigger member 33 moves along a second stroke trajectory, to achieve the trigger member 33 moving and driving the locking tongue 31 to move and disengage from the locking tongue receiving portion 32, to cause the battery pack 2 to unlock relative to the housing 1.

The locking assembly 3 further comprises a locking tongue linkage member 34, the locking tongue linkage member 34 being configured to: move under a drive of the trigger member 33, to thereby drive the locking tongue 31 to move. In the present embodiment, when a user needs to remove the battery pack 2, the user first needs to unlock the battery pack 2, and the unlocking method specifically comprises following steps:
a first step, an external force is applied to the trigger member 33, the trigger member 33 moves along a first stroke trajectory, to achieve the trigger member 33 reaching a position abutting against the locking tongue linkage member 34, and the battery pack 2 not unlocking relative to the housing 1;
a second step, the external force continues to be applied to the trigger member 33, the trigger member 33 moves along a second stroke trajectory, to achieve the trigger member 33 moving and driving the locking tongue linkage member 34 to move, to thereby drive the locking tongue 31 to disengage from the locking tongue receiving portion 32, to cause the battery pack 2 to unlock relative to the housing 1.

Specifically, in the second step, the trigger member 33 drives the locking tongue 31 to move, and the battery pack 2 unlocks relative to the housing 1.

Specifically, the trigger member 33 is movably disposed relative to the locking tongue linkage member 34, and can abut against the locking tongue linkage member 34. The locking tongue linkage member 34 is movably disposed relative to the locking tongue 31, and can abut against the locking tongue 31; or, the locking tongue linkage member 34 and the locking tongue 31 are connected in a relatively fixed manner. The locking tongue linkage member 34 pivots about a fixed pivot axis.

As another example, as shown in Figure 39, the locking assembly 3 comprises two locking tongues 31, two locking tongue receiving portions 32, and only one trigger member 33. The two locking tongues 31 are respectively a first locking tongue 3111 and a second locking tongue 3112. The two locking tongue receiving portions 32 are respectively a first locking tongue 3111 receiving portion 32 cooperating with the first locking tongue 3111 and a second locking tongue 3112 receiving portion 32 cooperating with the second locking tongue 3112. The unlocking method specifically comprises following steps:
a first step, an external force is applied to the trigger member 33, the trigger member 33 moves along a first stroke trajectory, to achieve the first locking tongue 3111 moving and disengaging from the first locking tongue 3111 receiving portion 32, and the battery pack 2 not unlocking relative to the housing 1;
a second step, the external force continues to be applied to the trigger member 33, the trigger member 33 moves along a second stroke trajectory, to achieve the trigger member 33 moving, and driving the second locking tongue 3112 to move and disengage from the second locking tongue 3112 receiving portion 32, to cause the battery pack 2 to unlock relative to the housing 1.

In one embodiment, referring to Figure 1, the power tool is a chainsaw 100, the chainsaw 100 comprising a cutting assembly 62 and a top handle 63. The cutting assembly 62 is mounted to the housing 1, the cutting assembly 62 comprises a guide bar 641 and a saw chain 621 disposed around the guide bar 641, the guide bar 641 provides support for and guides the saw chain 621. The top handle 63 is for a user to hold. The cutting assembly 62 is disposed at a front side of the housing 1 in a longitudinal direction of the chainsaw 100; the battery pack mounting portion 101 is disposed at a rear side of the housing 1 in the longitudinal direction of the chainsaw 100; the top handle 63 is disposed above the housing 1 in a height direction of the chainsaw 100.

It should be noted that, as shown in Figure 1, a longitudinal direction L1 of the chainsaw 100 is a longitudinal direction of the guide bar 641, a height direction H1 of the chainsaw 100 is a height direction of the guide bar 641, and a width direction W1 of the chainsaw 100 is a thickness direction of the guide bar 641.

The top handle 63 comprises a top handle housing 631, and at least a portion of the trigger member 33 and the locking tongue 31 is provided within the top handle housing 631. It may be understood that by movably disposing the locking tongue 31 and the trigger member 33 on the housing 1, and disposing the locking tongue receiving portion 32 on the battery pack 2, the trigger member 33 can be disposed at the top handle housing 631, facilitating a user to hold with one hand while simultaneously operating to unlock the battery pack 2.

It should be noted that in the foregoing embodiments, various embodiments without conflict may be freely combined to form new embodiments. Therefore, the foregoing embodiments that have been described will not be repeated here.

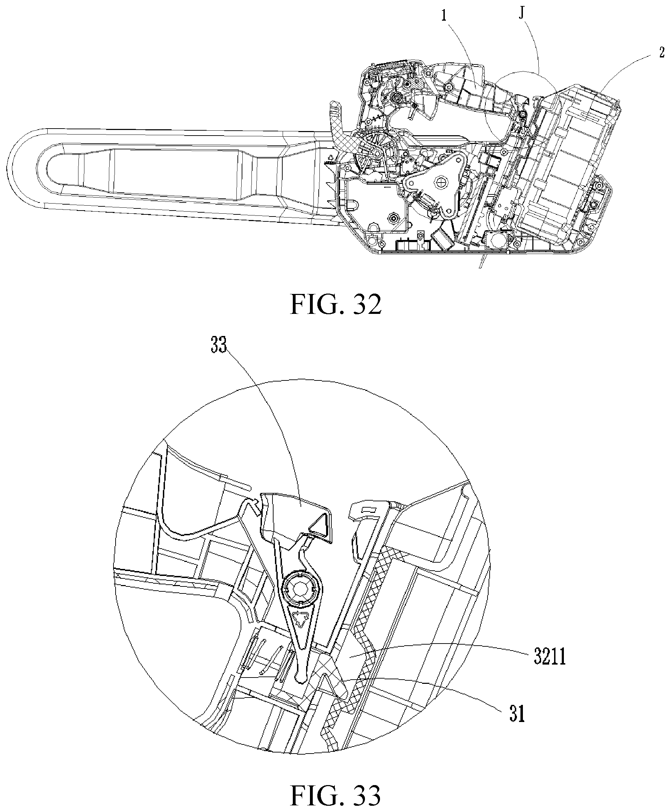

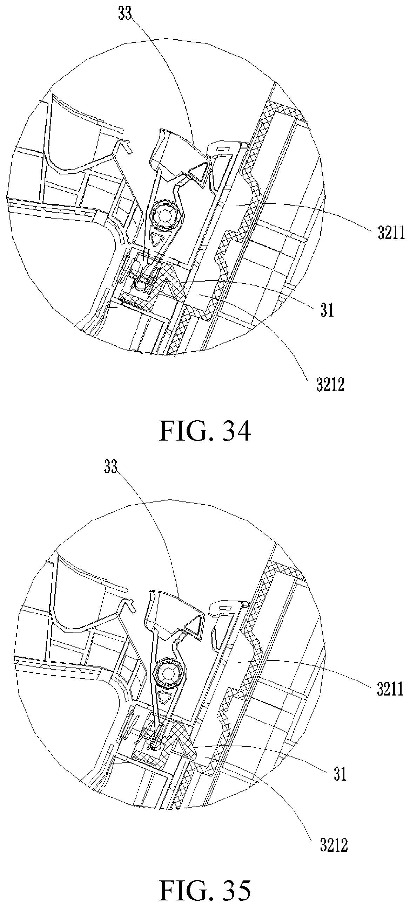

To solve a technical problem that a battery pack 2 of a power tool is easily unlocked due to accidental triggering, thereby causing the battery pack 2 to abnormally separate from the power tool, the present disclose also provides a power tool, as shown in Figures 32 to 36, comprising a housing 1 and a locking assembly 3. The housing 1 is provided with a battery pack mounting portion 101, the battery pack mounting portion 101 for a battery pack 2 to be inserted and connected, the battery pack 2 is configured to provide electrical energy to the power tool. The locking assembly 3 comprises a locking tongue 31, a locking tongue receiving portion 32 and a trigger member 33, the trigger member 33 being capable of driving the locking tongue 31 to move relative to the locking tongue receiving portion 32.

The locking tongue receiving portion 32 comprises a first receiving portion 3211 and a second receiving portion 3212 disposed front and rear in an insertion direction; the locking tongue 31 engages with at least one of the first receiving portion 3211 and the second receiving portion 3212 to lock the battery pack 2 relative to the housing 1; the locking tongue 31 disengages from the first receiving portion 3211 and the second receiving portion 3212 to unlock the battery pack 2 relative to the housing 1.

The locking tongue 31 and the trigger member 33 are movably disposed at one of the housing 1 and the battery pack 2, and the locking tongue receiving portion 32 is disposed at the other of the housing 1 and the battery pack 2.

It may be understood that by providing two locking tongue receiving portions 32 disposed front and rear in an insertion direction of the battery pack 2, when the trigger member 33 is accidentally triggered, causing the locking tongue 31 to disengage from one of the first receiving portion 3211 and the second receiving portion 3212, a user can immediately perceive and promptly reset an unlocking assembly, which may effectively reduce a risk of the battery pack 2 being unlocked due to accidental triggering and then abnormally separating from the power tool, improving safety in use.

Referring to Figure 1, the battery pack 2 comprises a battery pack housing 201, the battery pack housing 201 extends in directions of a width axis W, a thickness axis T, and a height axis H of the battery pack housing 201 along three orthogonal spatial directions (x, y, z). The battery pack housing 201 comprises a width extending on the width axis W, a thickness extending on the thickness axis T, and a height extending on the height axis H. The trigger member 33 and the locking tongue 31 are both located at one side of a plane P1 perpendicular to the thickness axis and passing through a midpoint of the thickness; or, the trigger member 33 and the locking tongue 31 are both located at one side of a plane P2 perpendicular to the width axis and passing through a midpoint of the width.

In one embodiment, all trigger members 33 and all locking tongues 31 are located at one side of the plane P1 perpendicular to the thickness axis and passing through the midpoint of the thickness; or, all trigger members 33 and all locking tongues 31 are located at one side of the plane P2 perpendicular to the width axis and passing through the midpoint of the width.

It may be understood that all trigger members 33 and all locking tongues 31 being located at one side of the plane P1 perpendicular to the thickness axis and passing through the midpoint of the thickness, or all trigger members 33 and all locking tongues 31 being located at one side of the plane P2 perpendicular to the width axis and passing through the midpoint of the width, facilitates an operator to operate the trigger member 33 with one hand to control unlocking of the battery pack 2 relative to the housing 1. In addition, all trigger members 33 and all locking tongues 31 being located at one side of the plane P1 or the plane P2 makes a structural design of the locking assembly 3 simpler and more compact, which is beneficial for reducing a volume of the power tool and for a lightweight design of the power tool.

Referring to Figure 3, the battery pack 2 comprises a battery pack housing 201, the battery pack housing 201 comprises a first outer contour surface 71 and a second outer contour surface 72, the first outer contour surface 71 and the second outer contour surface 72 are oppositely disposed in a direction perpendicular to an insertion direction of the battery pack 2, at least a portion of the locking tongue 31 or the locking tongue receiving portion 32 is disposed at the first outer contour surface 71, and the trigger member 33 and the locking tongue 31 are both located at one side of the second outer contour surface 72. In one embodiment, all trigger members 33 and all locking tongues 31 are located at one side of a second contour surface.

It may be understood that all trigger members 33 and all locking tongues 31 being located at one side of the second contour surface facilitates an operator to operate the trigger member 33 with one hand to control unlocking of the battery pack 2 relative to the housing 1. In addition, all trigger members 33 and all locking tongues 31 being located at one side of the second contour surface makes a structural design of the locking assembly 3 simpler and more compact, which is beneficial for reducing a volume of the power tool and for a lightweight design of the power tool.

The power tool is configured to: based on an external force applied to the trigger member 33, drive the locking tongue 31 to move a first moving stroke and a second moving stroke. The locking tongue 31 moves the first moving stroke, to cause the locking tongue 31 to disengage from the first receiving portion 3211, and the battery pack 2 does not unlock relative to the housing 1; the locking tongue 31 moves the second moving stroke, to cause the locking tongue 31 to disengage from the second receiving portion 3212, thereby causing the battery pack 2 to unlock relative to the housing 1. Further, the power tool is configured to: based on an external force applied to the trigger member 33, drive the locking tongue 31 to sequentially move the first moving stroke and the second moving stroke.

In one embodiment, the locking tongue 31 and the trigger member 33 are movably disposed at the housing 1, and the first receiving portion 3211 and the second receiving portion 3212 are provided on the battery pack 2.

In another embodiment, the locking tongue 31 and the trigger member 33 are movably disposed at the battery pack 2, and the first receiving portion 3211 and the second receiving portion 3212 are disposed at the housing 1.

In one embodiment, referring to Figures 32 to 36, the locking assembly 3 comprises only one locking tongue 31. The locking tongue 31 engages with the first receiving portion 3211 to lock the battery pack 2 relative to the housing 1 in a first position; the locking tongue 31 engages with the second receiving portion 3212 to lock the battery pack 2 relative to the housing 1 in a second position. Further, only when the locking tongue 31 engages with the first receiving portion 3211, the battery pack 2 and the power tool form an electrical connection.

In one embodiment, the number of the trigger member 33 is only one, and one trigger member 33 drives the locking tongue 31 to move a first moving stroke or move a second moving stroke.

In one embodiment, the first receiving portion 3211 and the second receiving portion 3212 have different depths, and a step is disposed between the first receiving portion 3211 and the second receiving portion 3212, so that the battery pack 2 can slide to a position where the locking tongue 31 engages with the second receiving portion 3212 after the locking tongue 31 disengages from the first receiving portion 3211.

It may be understood that an unlocking assembly comprises only one trigger member 33, the trigger member 33 drives the locking tongue 31 to move a first moving stroke, the locking tongue 31 disengages from the first receiving portion 3211, or, the trigger member 33 drives the locking tongue 31 to move a second moving stroke, the locking tongue 31 disengages from the first receiving portion 3211 and the second receiving portion 3212, to achieve unlocking of the battery pack 2 relative to the housing 1.

As a specific example, referring to Figures 32 to 36, the locking assembly 3 comprises one locking tongue 31, one trigger member 33, and a first receiving portion 3211 and a second receiving portion 3212. The locking tongue 31 engages with the first receiving portion 3211 to lock the battery pack 2 relative to the housing 1 in a first position; the locking tongue 31 engages with the second receiving portion 3212 to lock the battery pack 2 relative to the housing 1 in a second position. The trigger member 33 drives the locking tongue 31 to move a first moving stroke, the locking tongue 31 disengages from the first receiving portion 3211, the battery pack 2 slides from the first position to the second position relative to the housing 1, to cause the locking tongue 31 to engage with the second receiving portion 3212; the trigger member 33 continues to drive the locking tongue 31 to move a second moving stroke, the locking tongue 31 disengages from the second receiving portion 3212, to achieve unlocking of the battery pack 2 relative to the housing 1. The locking tongue 31 and the trigger member 33 are movably disposed at the housing 1, and the first receiving portion 3211 and the second receiving portion 3212 are disposed at the battery pack 2. All trigger members 33 and all locking tongues 31 are located at one side of a plane P1 perpendicular to a thickness axis and passing through a midpoint of a thickness. A first outer contour surface 71 and a second outer contour surface 72 are oppositely disposed in a thickness direction of the battery pack 2, the first receiving portion 3211 and the second receiving portion 3212 are provided on the first outer contour surface 71, and all trigger members 33 and all locking tongues 31 are located at one side of the second outer contour surface 72. Further, all trigger members 33, all locking tongues 31, and all locking tongue receiving portions 32 are located at one side of the second outer contour surface 72.

As another specific example (not shown), the locking assembly 3 comprises two locking tongues 31, one trigger member 33, and a first receiving portion 3211 and a second receiving portion 3212. The two locking tongues 31 are respectively a first locking tongue 3111 and a second locking tongue 3112. The first locking tongue 3111 engages with the first receiving portion 3211, and the second locking tongue 3112 engages with the second receiving portion 3212. The trigger member 33 first drives the first locking tongue 3111 to move a first moving stroke, to achieve the first locking tongue 3111 disengaging from the first receiving portion 3211, and the trigger member 33 then drives the second locking tongue 3112 to move a second moving stroke, to achieve the second locking tongue 3112 disengaging from the second receiving portion 3212, to thereby achieve unlocking of the battery pack 2 relative to the housing 1. The first locking tongue 3111, the second locking tongue 3112, and the trigger member 33 are movably disposed at the housing 1, and the first receiving portion 3211 and the second receiving portion 3212 are disposed at the battery pack 2. All trigger members 33 and all locking tongues 31 are located at one side of a plane P1 perpendicular to a thickness axis and passing through a midpoint of a thickness. A first outer contour surface 71 and a second outer contour surface 72 are oppositely disposed in a thickness direction of the battery pack 2, the first receiving portion 3211 and the second receiving portion 3212 are disposed at the first outer contour surface 71, and all trigger members 33 and all locking tongues 31 are located at one side of the second outer contour surface 72. Further, all trigger members 33, all locking tongues 31, and all locking tongue receiving portions 32 are located at one side of the second outer contour surface 72.

In one embodiment, referring to Figure 1, the power tool is a chainsaw 100, the chainsaw 100 comprising a cutting assembly 62 and a top handle 63. The cutting assembly 62 is mounted to the housing 1, the cutting assembly 62 comprises a guide bar 641 and a saw chain 621 disposed around the guide bar 641, the guide bar 641 provides support for and guides the saw chain 621. The top handle 63 is for a user to hold. The cutting assembly 62 is disposed at a front side of the housing 1 in a longitudinal direction of the chainsaw 100; the battery pack mounting portion 101 is provided on a rear side of the housing 1 in the longitudinal direction of the chainsaw 100; the top handle 63 is provided on an upper side of the housing 1 in a height direction of the chainsaw 100.

It should be noted that, as shown in Figure 1, a longitudinal direction L1 of the chainsaw 100 is a longitudinal direction of the guide bar 641, a height direction H1 of the chainsaw 100 is a height direction of the guide bar 641, and a width direction W1 of the chainsaw 100 is a thickness direction of the guide bar 641.

The top handle 63 comprises a top handle housing 631, and at least a portion of the trigger member 33 and the locking tongue 31 is disposed within the top handle housing 631. It may be understood that by movably disposing the locking tongue 31 and the trigger member 33 on the housing 1 and providing the locking tongue receiving portion 32 on the battery pack 2, the trigger member 33 can be disposed at the top handle housing 631, facilitating a user to hold with one hand while simultaneously operating to unlock the battery pack 2.

It should be noted that in the foregoing embodiments, various embodiments without conflict may be freely combined to form new embodiments. Therefore, the foregoing embodiments that have been described will not be repeated here.

In a specific embodiment, referring to Figures 1 to 3, the power tool comprises a housing 1 and a locking assembly 3. The housing 1 is provided with a battery pack mounting portion 101, the battery pack mounting portion 101 for a battery pack 2 to be inserted and connected, the battery pack 2 is configured to provide electrical energy to the power tool. The locking assembly 3 comprises a locking tongue 31, a locking tongue receiving portion 32 and a trigger member 33.

The locking tongue 31 and the trigger member 33 are movably disposed at one of the housing 1 or the battery pack 2, and the locking tongue receiving portion 32 is provided on the other of the housing 1 or the battery pack 2. The locking tongue 31 engages with the locking tongue receiving portion 32 to lock the battery pack 2 relative to the housing 1; the locking tongue 31 disengages from the locking tongue receiving portion 32 to unlock the battery pack 2 relative to the housing 1.

The power tool is configured such that an external force is applied to the trigger member 33, and at least two different actions generated by the trigger member 33 directly or indirectly drive the locking tongue 31 to move relative to the locking tongue receiving portion 32, to achieve unlocking of the battery pack 2 relative to the housing 1.

It may be understood that the at least two different actions generated by the trigger member 33 are actions generated by the trigger member 33 when an external force is applied to the trigger member 33, for example, actions generated by the trigger member 33 when an operator applies a force to the trigger member 33. The trigger member 33 is an object to which the external force is applied. Of course, a force-applying object includes but is not limited to the operator, and may also be another force-applying object. A method of applying the force includes a direct contact operation, an indirect operation to transmit an acting force to the trigger member 33, etc., but is not limited thereto.

At least two different actions of the trigger member 33 are required to achieve unlocking of the battery pack 2 relative to the housing 1, that is, a single action is not sufficient to cause the battery pack 2 to unlock relative to the housing 1, and an external force causing an accidental triggering usually can only cause the trigger member 33 to generate a single action. Therefore, achieving unlocking of the battery pack 2 relative to the housing 1 through at least two different actions of the trigger member 33 may effectively reduce a risk of the battery pack 2 being unlocked due to the accidental trigger.

Referring to Figure 1, the battery pack 2 comprises a battery pack housing 201, the battery pack housing 201 extends in directions of a width axis W, a thickness axis T, and a height axis H of the battery pack housing 201 along three orthogonal spatial directions (x, y, z). The battery pack housing 201 comprises a width extending on the width axis W, a thickness extending on the thickness axis T, and a height extending on the height axis H. The trigger member 33 is located at one side of a plane P1 perpendicular to the thickness axis and passing through a midpoint of the thickness; or, the trigger member 33 is located at one side of a plane P2 perpendicular to the width axis and passing through a midpoint of the width.

Optionally, all trigger members 33 and all locking tongues 31 are located at one side of the plane P1 perpendicular to the thickness axis and passing through the midpoint of the thickness; or, all trigger members 33 and all locking tongues 31 are located at one side of the plane P2 perpendicular to the width axis and passing through the midpoint of the width. Further optionally, all trigger members 33, all locking tongues 31, and all locking tongue receiving portions 32 are located at one side of the plane P1 perpendicular to the thickness axis and passing through the midpoint of the thickness; or, all trigger members 33, all locking tongues 31, and all locking tongue receiving portions 32 are located at one side of the plane P2 perpendicular to the width axis and passing through the midpoint of the width.

It should be noted that the battery pack housing 201 extends in the directions of the width axis W, the thickness axis T, and the height axis H, wherein the battery pack housing 201 is not limited to a standard rectangular parallelepiped, and may be another irregular shape, such as with an edge chamfer, a partially recessed or protruding surface, etc. The width axis W direction, the thickness axis T direction, and the height axis H direction are only used to illustrate general extending directions of the battery pack housing 201. Wherein, a width of the battery pack housing 201 is a line segment between perpendicular feet on a same width axis W of two outermost points on two opposite surfaces of the battery pack 2 in the width axis W direction; a midpoint of the width is a midpoint of the line segment. A thickness of the battery pack housing 201 is a line segment between perpendicular feet on a same thickness axis T of two outermost points on two opposite surfaces of the battery pack 2 in the thickness axis T direction; a midpoint of the thickness is a midpoint of the line segment. A height of the battery pack housing 201 is a line segment between perpendicular feet on a same height axis H of two outermost points on two opposite surfaces of the battery pack 2 in the height axis H direction.

It may be understood that all trigger members 33 being located at one side of the plane P1 or the plane P2 facilitates an operator to operate the trigger member 33 with one hand to control unlocking of the battery pack 2 relative to the housing 1. Among all trigger members 33, all locking tongues 31, and all locking tongue receiving portions 32, more components being located at a same side of the plane P1 perpendicular to the thickness axis and passing through the midpoint of the thickness will make a structural design of the locking assembly 3 simpler and more compact, which is beneficial for reducing a volume of the power tool and for a lightweight design of the power tool.

Referring to Figure 3, the battery pack 2 comprises a battery pack housing 201, the battery pack housing 201 comprises a first outer contour surface 71 and a second outer contour surface 72, the first outer contour surface 71 and the second outer contour surface 72 are oppositely disposed in a direction perpendicular to an insertion direction of the battery pack 2, at least a portion of the locking tongue 31 or the locking tongue receiving portion 32 is disposed at the first outer contour surface 71, and all trigger members 33 are located at one side of the second outer contour surface 72. When the power tool is configured as a chainsaw 100, the chainsaw 100 comprises: a cutting assembly 62, mounted to the housing 1, the cutting assembly 62 comprises a guide bar 641 and a saw chain 621 disposed around the guide bar 641, the guide bar 641 providing support for and guiding the saw chain 621. The battery pack 2 is inserted and mounted to the battery pack mounting portion 101 in a manner that the first outer contour surface 71 and the second outer contour surface 72 of the battery pack 2 are spaced apart and oppositely disposed in a first direction perpendicular to a plane where the guide bar 641 is located, at least a portion of the locking tongue 31 or the locking tongue receiving portion 32 is disposed at the first outer contour surface 71, and one said trigger member 33 or multiple said trigger members 33 are all located at one side of the second outer contour surface 72, or
the battery pack 2 is inserted and mounted to the battery pack mounting portion 101 in a manner that the first outer contour surface 71 and the second outer contour surface 72 of the battery pack 2 are spaced apart and oppositely disposed in a second direction parallel to a plane where the guide bar 641 is located, at least a portion of the locking tongue 31 or the locking tongue receiving portion 32 is disposed at the first outer contour surface 71, and one said trigger member 33 or multiple said trigger members 33 are all located at one side of the second outer contour surface 72.

Further, the chainsaw 100 is configured as a top-handle chainsaw 100. The chainsaw 100 further comprises a top handle 63, for a user to hold; the cutting assembly 62 is disposed at a front side of the housing 1 in a longitudinal direction of the chainsaw 100; the battery pack mounting portion 101 is disposed at a rear side of the housing 1 in the longitudinal direction of the chainsaw 100; the top handle 63 is disposed above the housing 1 in a height direction of the chainsaw 100.

The number of the locking tongue 31 may be one or multiple, and the number of the locking tongue receiving portion 32 cooperating with one or multiple said locking tongues 31 may also be one or multiple; correspondingly, the number of the trigger member 33 may also be one or multiple.

In the present embodiment, the locking assembly 3 comprises one locking tongue 31, one locking tongue receiving portion 32, and one trigger member 33. The locking tongue 31 and the trigger member 33 are movably disposed at the housing 1, and the locking tongue receiving portion 32 is disposed at the battery pack 2. All trigger members 33, all locking tongues 31, and all locking tongue receiving portions 32 are located at one side of a plane P1 perpendicular to a thickness axis and passing through a midpoint of a thickness. A first outer contour surface 71 and a second outer contour surface 72 are oppositely disposed in a thickness direction of the battery pack 2, the locking tongue receiving portion 32 is disposed at the first outer contour surface 71, and all trigger members 33, all locking tongues 31, and all locking tongue receiving portions 32 are located at one side of the second outer contour surface 72.

Based on an external force applied to the trigger member 33, at least two different actions generated by the trigger member 33 comprise: one action generated by the trigger member 33, to achieve movement of the trigger member 33, and the battery pack 2 does not unlock relative to the housing 1; and another action generated by the trigger member 33, to achieve movement of the trigger member 33 and driving the locking tongue 31 to move, so that the battery pack 2 unlocks relative to the housing 1. For convenience of explanation, the one action is referred to as a first action, and the another action is referred to as a second action.

It should be noted that the first action and the second action are only used to represent two different actions, wherein "first" and "second" do not limit a sequence of the two actions, nor do they limit continuity of the two actions, for example, there may be another action between the two actions.

It may be understood that with the first action of the trigger member 33, the battery pack 2 does not unlock relative to the housing 1, and with the second action of the trigger member 33, the battery pack 2 unlocks relative to the housing 1. That is, at least based on the first action and the second action of the trigger member 33, the battery pack 2 can unlock relative to the housing 1.

Based on an external force applied to the trigger member 33, at least two different actions generated by the trigger member 33 comprise: one action generated by the trigger member 33, namely the first action, to achieve movement of the trigger member 33 and the locking tongue 31 does not move; and another action generated by the trigger member 33, namely the second action, to achieve movement of the trigger member 33 and driving the locking tongue 31 to move.

The locking assembly 3 further comprises a locking tongue linkage member 34. One action generated by the trigger member 33, namely the first action, achieves the trigger member 33 being in a position allowing driving of the locking tongue 31 to move; another action generated by the trigger member 33, namely the second action, achieves movement of the locking tongue linkage member 34 and drives the locking tongue 31 to move relative to the locking tongue receiving portion 32.

It should be noted that the trigger member 33 being in a position allowing driving of the locking tongue 31 to move should be understood as: a user can directly apply a force to the trigger member 33 to cause the trigger member 33 to move without another action, and the movement of the trigger member 33 can drive the locking tongue 31 to move.

The locking tongue linkage member 34 is configured to: move under a drive of the trigger member 33, to thereby drive the locking tongue 31 to move. The trigger member 33 is movably disposed relative to the locking tongue linkage member 34, and can abut against the locking tongue linkage member 34. The locking tongue linkage member 34 is movably disposed relative to the locking tongue 31, and can abut against the locking tongue 31; or, the locking tongue linkage member 34 and the locking tongue 31 are connected in a relatively fixed manner. The locking tongue linkage member 34 pivots about a fixed pivot axis.

Referring to Figures 3 to 8, the locking assembly 3 further comprises a locking tongue linkage member 34. The trigger member 33 pivots about a pivot axis. A first action of the trigger member 33 achieves movement of the trigger member 33 to a position abutting against the locking tongue linkage member 34. A second action of the trigger member 33 achieves the trigger member 33 driving the locking tongue linkage member 34 to move, to thereby drive the locking tongue 31 to move and disengage from the locking tongue receiving portion 32. In the present embodiment, the first action of the trigger member 33 achieves movement of the trigger member 33, and the locking tongue 31 does not move.

The locking tongue linkage member 34 is pivotally disposed about a first pivot axis 335 on the housing 1 or a battery pack housing 201; the locking tongue linkage member 34 comprises a locking tongue abutting portion 341 and a trigger member abutting portion 342; the trigger member 33 is movably disposed at the housing 1 or the battery pack housing 201, and can move to abut against the trigger member abutting portion 342 and drive the locking tongue linkage member 34 to pivot about the first pivot axis 335; the locking tongue abutting portion 341 is configured to abut against the locking tongue 31, and drive the locking tongue 31 to move in a direction away from the locking tongue receiving portion 32.

The trigger member 33 is pivotally connected to the housing 1 or the battery pack housing 201 about a second pivot axis 336, or, the trigger member 33 is pivotally connected to the locking tongue linkage member 34 about a second pivot axis 336; a first action generated by the trigger member 33 achieves the trigger member 33 pivoting about the second pivot axis 336 to abut against the locking tongue linkage member 34; a second action generated by the trigger member 33 achieves the trigger member 33 moving and driving the locking tongue linkage member 34 to pivot about the first pivot axis 335, and the locking tongue linkage member 34 drives the locking tongue 31 to move and disengage from the locking tongue receiving portion 32. In the present embodiment, the trigger member 33 is pivotally connected to the locking tongue linkage member 34 about the second pivot axis 336.

The number of the trigger member 33 is only one. One action generated by one trigger member 33, namely a first action, achieves movement of the trigger member 33, and the battery pack 2 does not unlock relative to the housing 1; another action generated by one trigger member 33, namely a second action, achieves movement of the trigger member 33 and drives the locking tongue 31 to move, so that the battery pack 2 unlocks relative to the housing 1.

Only one trigger member 33 is provided, and at least two different actions are generated sequentially on one trigger member 33.

It should be noted that "sequentially" in "at least two different actions are generated sequentially on the trigger member 33" is only used to define that the two actions occur sequentially, with progressiveness, and a subsequent unlocking action can only be applied after a preceding unlocking action is completed. The term does not limit continuity of the two actions, and there may be another action between the two actions.

In the present embodiment, a first action of the trigger member 33 achieves movement of the trigger member 33, the locking tongue 31 does not move, and the battery pack 2 does not unlock relative to the housing 1; a second action of the trigger member 33 achieves movement of the trigger member 33 driving the locking tongue 31 to move and disengage from the locking tongue receiving portion 32, to cause the battery pack 2 to unlock relative to the housing 1. The first action and the second action are generated sequentially on one trigger member 33.

In one embodiment, one action generated by the trigger member 33 achieves the trigger member 33 moving along a first stroke trajectory; another action generated by the trigger member 33 achieves the trigger member 33 moving along a second stroke trajectory different from the first stroke trajectory. The power tool is configured such that: at least based on the first stroke trajectory and the second stroke trajectory, the battery pack 2 unlocks relative to the housing 1. The first stroke trajectory and the second stroke trajectory of the trigger member 33 are not on a same straight line.

It should be noted that a stroke trajectory may be a movement trajectory of any point on the trigger member 33. The first stroke trajectory and the second stroke trajectory not being on a same straight line may mean that the first stroke trajectory and the second stroke trajectory are non-linear; may mean that the first stroke trajectory and the second stroke trajectory are both straight lines, and a direction of the first stroke trajectory and a direction of the second stroke trajectory are different; and may also mean that the first stroke trajectory and the second stroke trajectory are both straight lines, the first stroke trajectory and the second stroke trajectory are parallel and do not overlap, or may be in another form, not limited thereto.

It may be understood that the first stroke trajectory and the second stroke trajectory not being on a same straight line means that applying an acting force in a single direction to the trigger member 33 cannot cause the battery pack 2 to unlock relative to the housing 1, and an external force causing an accidental triggering usually can only apply an acting force in a single direction. Therefore, a risk of the battery pack 2 being unlocked due to the accidental triggering may be effectively reduced.

The number of the trigger member 33 is only one, the first stroke trajectory and the second stroke trajectory being generated by a same trigger member 33 moving sequentially; or the number of the trigger member 33 is configured to be at least two, the first stroke trajectory and the second stroke trajectory being generated by movements of different trigger members 33. The first stroke trajectory and the second stroke trajectory have different directions or are parallel.

In the present embodiment, as shown in the figures, the locking assembly 3 comprises only one trigger member 33, and the first stroke trajectory and the second stroke trajectory are generated by one trigger member 33 moving sequentially. Specifically, the trigger member 33 pivots about a pivot axis, the trigger member 33 moves along the first stroke trajectory to reach a position capable of driving the locking tongue 31 to move, and the trigger member 33 continues to move along the second stroke trajectory, driving the locking tongue 31 to move and disengage from the locking tongue receiving portion 32. In the present embodiment, since the trigger member 33 makes a pivoting movement, both the first stroke trajectory and the second stroke trajectory are arcs, and the two do not overlap.

In related technologies, to solve a technical problem that a battery pack 2 of a power tool is easily unlocked due to accidental triggering, thereby causing the battery pack 2 to abnormally separate from the power tool, two pairs of interlocking mechanisms were provided between the battery pack 2 and a housing 1 of the power tool, that is, the power tool was provided with two locking tongues 31, two locking tongue receiving portions 32 respectively cooperating with the two locking tongues 31, and two trigger members 33 respectively used to control movement of the two locking tongues 31. However, a conventional battery pack 2 is usually provided with only one locking tongue receiving portion 32, which results in the power tool being unable to be compatible with an existing battery pack 2 platform and achieve a function of preventing accidental unlocking of the battery pack 2.

In one embodiment, the locking tongue 31 and the trigger member 33 are both movably disposed at the housing 1, the locking tongue receiving portion 32 is disposed at the battery pack 2, the number of the locking tongue receiving portion 32 is only one, and the locking tongue receiving portion 32 is configured to engage with at least one locking tongue 31.

In the present embodiment, the locking assembly 3 comprises one locking tongue 31, one locking tongue receiving portion 32, and one trigger member 33. Based on an external force applied to the trigger member 33, a first action generated by the trigger member 33 achieves movement of the trigger member 33, the locking tongue 31 does not move, and the battery pack 2 does not unlock relative to the housing 1; based on an external force applied to the trigger member 33, a second action generated by the trigger member 33 achieves movement of the trigger member 33 driving the locking tongue 31 to move and disengage from the locking tongue receiving portion 32, to cause the battery pack 2 to unlock relative to the housing 1.

The present embodiment is provided with only one locking tongue receiving portion 32. By applying a force to the trigger member 33 to cause the trigger member 33 to generate at least two different actions, the battery pack 2 can unlock relative to the housing 1. This can effectively reduce a risk of the battery pack 2 being unlocked due to an accidental triggering and can be compatible with an existing battery pack 2 having only one locking tongue receiving portion 32.

A chainsaw 100 for a tree operation is usually for a user to use when working on a tree. A working environment is relatively complex. A user usually hangs the chainsaw 100 on a body of the user when climbing a tree, and the chainsaw 100 will sway during a process of climbing the tree. Therefore, during the process of the user climbing the tree and when performing a tree operation, an unlocking button of a battery pack 2 may touch a branch or come into contacting with a body of the user, which may cause the battery pack 2 to be unlocked due to an accidental triggering, causing the battery pack 2 to abnormally separate from the chainsaw 100, injuring surrounding people or animals, or damaging an object, creating a significant safety hazard.

In the present embodiment, the power tool is a chainsaw 100, the chainsaw 100 comprising a cutting assembly 62 and a top handle 63. The cutting assembly 62 is mounted to the housing 1, the cutting assembly 62 comprises a guide bar 641 and a saw chain 621 disposed around the guide bar 641, the guide bar 641 provides support for and guides the saw chain 621. The top handle 63 is for a user to hold. The cutting assembly 62 is disposed at a front side of the housing 1 in a longitudinal direction of the chainsaw 100; a battery pack mounting portion 101 is disposed at a rear side of the housing 1 in the longitudinal direction of the chainsaw 100; the top handle 63 is disposed above the housing 1 in a height direction of the chainsaw 100.

It should be noted that, as shown in Figure 1, a longitudinal direction L1 of the chainsaw 100 is a longitudinal direction of the guide bar 641, a height direction H1 of the chainsaw 100 is a height direction of the guide bar 641, and a width direction W1 of the chainsaw 100 is a thickness direction of the guide bar 641.

The top handle 63 comprises a top handle housing 631, and at least a portion of the trigger member 33 and the locking tongue 31 is provided within the top handle housing 631. It may be understood that by movably disposing the locking tongue 31 and the trigger member 33 on the housing 1 and disposing the locking tongue receiving portion 32 on the battery pack 2, the trigger member 33 can be disposed at the top handle housing 631, facilitating a user to hold with one hand while simultaneously operating to unlock the battery pack 2.

For the power tool of the present embodiment, when a user needs to remove a battery pack 2, the user first needs to unlock the battery pack 2. Unlocking the battery pack 2 specifically comprises following steps:

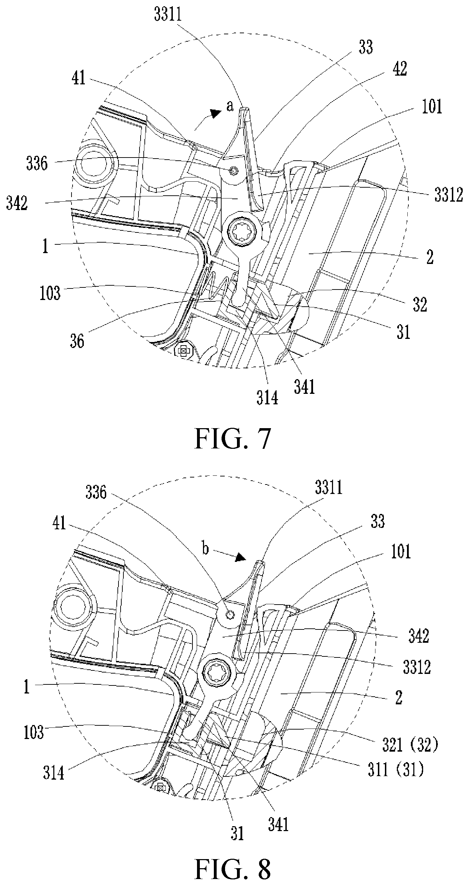

Step 1, a trigger member 33 is in an initial position under no external force, namely a state shown in Figure 6. The user applies an upward flipping acting force to an operating end 3311 of the trigger member 33, to cause the trigger member 33 to pivot about a second pivot axis 336 to abut against a trigger member abutting portion 342 of a locking tongue linkage member 34, namely a state shown in Figure 7;

Step 2, further push the operating end 3311 of the trigger member 33, the trigger member 33 moves and drives the locking tongue linkage member 34 to pivot about a first pivot axis 335, and then a locking tongue abutting portion 341 of the locking tongue linkage member 34 pushes a locking tongue 31 abutting against the locking tongue abutting portion 341 to move, until a protrusion 311 of the locking tongue 31 disengages from a recess 321 of a locking slot, namely a state shown in Figure 8. At this time, the battery pack 2 unlocks relative to a housing 1, and the battery pack 2 can be separated from the power tool;

Step 3, after the battery pack 2 is separated from the power tool, the user releases the trigger member 33, for example, by releasing a finger, and not applying any acting force to the trigger member 33. At this time, the locking tongue 31 will be reset under an acting force of a locking tongue elastic reset member 36, and the trigger member 33 will be reset under an acting force of a reset member of the trigger member 33, causing a locking assembly 33 to return to an initial state.

It should be noted that in the foregoing embodiments, various embodiments without conflict may be freely combined to form new embodiments. Therefore, the foregoing embodiments that have been described will not be repeated here.

The following is a detailed introduction to a specific structure in an embodiment where there is only one trigger member 33:
Referring to Figures 4 and 5, a locking assembly 33 comprises a locking tongue 31, a locking tongue receiving portion 32 and a trigger member 33. The locking tongue 31 and the trigger member 33 (which may be referred to as a trigger mechanism) are movably disposed at one of a housing 1 and a battery pack housing 201, and the locking tongue receiving portion 32 is disposed at the other of the housing 1 and the battery pack housing 201. The locking tongue 31 can engage with the locking tongue receiving portion 32 to lock a battery pack 2 relative to the housing 1. The trigger member 33 can act on the locking tongue 31 and link the locking tongue 31 to move, and the trigger member 33 is configured to: based on at least two unlocking actions applied to the trigger member 33, control the locking tongue 31 to disengage from the locking tongue receiving portion 32 to unlock the battery pack 2 relative to the housing 1.

The unlocking action is configured to: apply an acting force to the trigger member 33 and enable the trigger member 33 to generate a moving stroke. The at least two unlocking actions applied to the trigger member 33 comprise at least two unlocking actions with different directions of acting forces applied to the trigger member 33 corresponding to at least a portion of the moving stroke, or two unlocking actions with a same direction of acting force and intermittently applied.

It should be noted that two unlocking actions intermittently applied to the trigger member 33 should be understood as: the two unlocking actions cannot be continuously and uniformly applied to the trigger member 33, and require an intermittent operation. As an example, the two unlocking actions have progressiveness, and a subsequent unlocking action can only be applied after a preceding unlocking action is completed.

The locking tongue receiving portion 32 comprises at least one stopping space capable of engaging with the locking tongue 31 and providing stopping for the locking tongue 31; applying at least two unlocking actions to the trigger member 33 can drive the locking tongue 31 to generate a moving stroke and disengage from a stopping of the stopping space of the locking tongue receiving portion 32, to cause the battery pack 2 to unlock relative to the housing 1.

It may be understood that the locking tongue 31 disengaging from the locking tongue receiving portion 32 may mean that the locking tongue 31 disengages from a stopping of all stopping spaces of the locking tongue receiving portion 32.

The battery pack 2 and a battery pack mounting portion 101 comprise multiple sets of cooperating surfaces located at different sides of the battery pack 2, and the locking assembly 33 is disposed at one set of the cooperating surfaces.

A user can cause the battery pack 2 to unlock relative to the housing 1 only by applying at least two unlocking actions to the trigger member 33. Therefore, a risk of the battery pack 2 being unlocked due to an accidental triggering may be effectively reduced, reducing injury to people or objects around a working environment, and effectively reducing a safety hazard.

Further, the locking assembly 33 further comprises a locking tongue elastic reset member 36, the locking tongue elastic reset member 36 acting on the locking tongue 31 to apply an acting force that causes the locking tongue 31 to move toward the locking tongue receiving portion 32. As an example, the locking tongue elastic reset member 36 may be a spring.

The locking assembly 33 further comprises a locking tongue linkage member 34. The trigger member 33 and the locking tongue linkage member 34 are both movably disposed, and the locking tongue linkage member 34 can drive the locking tongue 31 to move. The at least two unlocking actions applied to the trigger member 33 comprise a first unlocking action and a second unlocking action, and the first unlocking action and the second unlocking action respectively cause the trigger member 33 to generate a first stroke and a second stroke. The first stroke is configured to cause the trigger member 33 to move to a position where the locking tongue linkage member 34 can be triggered; the second stroke is configured to achieve movement of the locking tongue linkage member 34 driving the locking tongue 31 to move through movement of the trigger member 33, until the locking tongue 31 disengages from the locking tongue receiving portion 32, to cause the battery pack 2 to unlock relative to the housing 1. The first stroke and the second stroke have different directions of acting forces applied to the trigger member 33 corresponding to at least a portion of a moving stroke.

Further, the trigger member 33 further comprises a trigger member elastic reset member 334, the trigger member 33 comprises an initial position in a state where an unlocking action is not applied, the trigger member elastic reset member 334 acting on the trigger member 33 to apply an acting force that causes the trigger member 33 to move toward the initial position.

In one embodiment, the locking tongue linkage member 34 is pivotally disposed about a first pivot axis 335 on the housing 1 or the battery pack housing 201, the locking tongue linkage member 34 comprises a locking tongue abutting portion 341 and a trigger member abutting portion 342, and the trigger member abutting portion 342 and the locking tongue abutting portion 341 synchronously pivot about the first pivot axis 335, the trigger member 33 is movably disposed at the housing 1 or the battery pack housing 201, and can move to abut against the trigger member abutting portion 342 and drive the trigger member abutting portion 342 to pivot about the first pivot axis 335, the locking tongue abutting portion 341 is used to abut against the locking tongue 31 and pivot about the first pivot axis 335 with the trigger member abutting portion 342 to drive the locking tongue 31 to move in a direction away from the locking tongue receiving portion 32. Specifically, the locking tongue linkage member 34 has a through axial hole 343 for the first pivot axis 335 to pass through, and the locking tongue linkage member 34 is pivotally disposed at the first pivot axis 335 through the through axial hole 343.

It may be understood that the locking tongue linkage member 34 may be an integral structure, on which the locking tongue abutting portion 341 and the trigger member abutting portion 342 are formed in different directions. The locking tongue linkage member 34 may also comprise two separate components, on which the locking tongue abutting portion 341 and the trigger member abutting portion 342 are respectively formed, and the two separate components achieve synchronous linkage by an abutting cooperation.

Further, the locking tongue abutting portion 341 and the trigger member abutting portion 342 are located at two sides of a plane passing through a pivot axis of the first pivot axis 335 and parallel to a movement direction of the locking tongue 31. Preferably, an angle between an extending direction of the locking tongue abutting portion 341 and an extending direction of the trigger member abutting portion 342 is 90° to 180°.

In one embodiment, the trigger member 33 is configured such that: both a first unlocking action and a second unlocking action are applied to the trigger member 33. A first stroke is configured to cause the trigger member 33 to move to abut against the locking tongue linkage member 34; a second stroke is configured to cause the trigger member 33 to move further and drive the locking tongue linkage member 34 to move, the locking tongue linkage member 34 driving the locking tongue 31 to move until the locking tongue 31 disengages from the locking tongue receiving portion 32, to cause the battery pack 2 to unlock relative to the housing 1.

In one embodiment, the locking tongue linkage member 34 is movably disposed relative to the locking tongue 31 and can abut against the locking tongue 31. It may be understood that the locking tongue linkage member 34 and the locking tongue 31 are two independent components.

In one embodiment, the locking tongue 31 is provided with a blocking wall 312 for abutting against the locking tongue linkage member 34. The locking tongue 31 is further provided with a reset member mounting portion 313, one end of the locking tongue elastic reset member 36 is attached to the reset member mounting portion 313, and another end abuts against the housing 1 or the battery pack housing 201.

Further, the locking tongue 31 is provided with an embedded groove 314 for the locking tongue abutting portion 341 of the locking tongue linkage member 34 to extend into to limit the locking tongue abutting portion 341 in a pivoting direction of the locking tongue abutting portion 341. The reset member mounting portion 313 is at least partially provided in the embedded groove 314, a middle portion of a side wall of the embedded groove 314 away from a protrusion 311 has an opening for the locking tongue elastic reset member 36 to extend out, and both sides of the side wall form the aforementioned blocking wall 312 for abutting against the locking tongue linkage member 34. As an example, the locking tongue elastic reset member 36 is a spring, and the reset member mounting portion 313 is a column fixed in the embedded groove 314 with a gradually narrowing head, so that the spring can be sleeved and clamped at a front end of the column. By providing the reset member mounting portion 313 in the embedded groove 314, a structure of the locking tongue 31 becomes more compact, and a volume becomes smaller.

In one embodiment, the locking tongue 31 and the trigger member 33 are disposed at the housing 1, and the locking tongue receiving portion 32 is provided on the battery pack 2; the housing 1 is provided with a through hole for the locking tongue 31 to extend into the battery pack mounting portion 101.

In another embodiment, the locking tongue 31 and the trigger member 33 are disposed at the battery pack housing 201, and the locking tongue receiving portion 32 is disposed at the housing 1; the battery pack housing 201 is provided with a through hole for the locking tongue 31 to extend into the battery pack mounting portion 101.

The locking tongue receiving portion 32 is a locking slot or a locking hole provided in the housing 1 or the battery pack housing 201. It may be understood that the locking slot or the slot hole constitutes a stopping space of the locking tongue receiving portion 32 capable of stopping the locking tongue 31.

The locking tongue 31 comprises at least one protrusion 311, the locking tongue receiving portion 32 comprises at least one recess 321, the protrusion 311 of the locking tongue 31 engages with the recess 321 of the locking tongue receiving portion 32, to enable the battery pack 2 to be locked relative to the housing 1; the protrusion 311 of the locking tongue 31 disengages from the recess 321 of the locking tongue receiving portion 32, to enable the battery pack 2 to be unlocked relative to the housing 1.

It should be noted that in the present embodiment, a trigger member 33 should be understood as one trigger member 33, not a group of trigger members 33, and at least two unlocking actions both act on a same trigger member 33. Specifically, the two unlocking actions act on the trigger member 33 sequentially.

As an example, the locking tongue receiving portion 32 comprises a locking slot provided in the housing 1 or the battery pack housing 201. The locking tongue 31 comprises one protrusion 311, the locking slot comprises one recess 321 cooperating with the one protrusion 311, and the one protrusion 311 of the locking tongue 31 engages with the one recess 321 of the locking slot, to enable the battery pack 2 to be locked relative to the housing 1. That is, the one protrusion 311 extends into the one recess 321, so that the battery pack 2 and the housing 1 are relatively locked and cannot move. The locking tongue 31 disengages from the locking tongue receiving portion 32, that is, the protrusion 311 of the locking tongue 31 disengages from the recess 321 of the locking slot, so that the battery pack 2 can move relative to the housing 1.

As another example, the locking tongue receiving portion 32 comprises a locking slot provided in the housing 1 or the battery pack housing 201. The locking tongue 31 comprises multiple protrusions 311, and the locking slot comprises multiple recesses 321 corresponding to the multiple protrusions 311 in one-to-one cooperation. It may be understood that the locking tongue 31 may be an integral structure, such as extending to form the multiple protrusions 311 on one main body, and the multiple protrusions 311 all move synchronously with the main body; the locking tongue 31 may also comprise multiple separate structures, each separate structure respectively forming one protrusion 311, and the multiple separate structures all synchronously link with movement of the trigger member 33, that is, the protrusions 311 of the multiple separate structures synchronously engage with the multiple recesses 321 of the locking slot to achieve locking of the battery pack 2, or synchronously disengage from the multiple recesses 321 of the locking slot to achieve unlocking of the battery pack 2.

As yet another example, the locking tongue receiving portion 32 comprises a locking slot provided in the housing 1 or the battery pack housing 201. The locking tongue 31 comprises one or multiple protrusions 311, the locking slot comprises one or multiple recesses 321 cooperating with the one or multiple protrusions 311, and the protrusions 311 and the recesses 321 are not in one-to-one correspondence cooperation. For example, a structure may be that the locking tongue 31 comprises multiple pawls and the locking slot comprises one ratchet slot cooperating with the multiple pawls; a structure may also be that one protrusion 311 sequentially engages with multiple locking slots, etc., which are not enumerated one by one here.

Further, for the locking tongue 31 having one protrusion 311, a manner in which the trigger member 33 controls unlocking of the battery pack 2 may be that a first unlocking action acting on the trigger member 33 does not drive the protrusion 311 to move, and a second unlocking action acting on the trigger member 33 drives the protrusion 311 to disengage from the recess 321; a manner may also be that a first unlocking action acting on the trigger member 33 first controls the protrusion 311 to partially disengage from the recess 321, and a second unlocking action acting on the trigger member 33 then controls the protrusion 311 to completely disengage from the recess 321. For the locking tongue 31 having multiple protrusions 311, a manner in which the trigger member 33 controls unlocking of the battery pack 2 may be controlling the multiple protrusions 311 of the locking tongue 31 to synchronously link and disengage from the recesses 321, or controlling the multiple protrusions 311 of the locking tongue 31 to act sequentially and disengage from the recesses 321 in sequence. A manner may also be another manner, which is not enumerated one by one here.

It should be noted that a trigger member 33 should be understood as being capable of linking all protrusions 311 of the locking tongue 31 to disengage from all recesses 321 of the locking tongue receiving portion 32, to achieve unlocking of the battery pack 2. A cooperative structure of the locking tongue 31 and the locking tongue receiving portion 32 of the present disclose is not limited thereto, and may be any structure that can be controlled to unlock by linkage of a same trigger member 33, which is not limited here.

In one embodiment, the trigger member 33 is pivotally connected to the housing 1 or the battery pack housing 201 about a second pivot axis 336; or the trigger member 33 is pivotally connected to a locking tongue linkage member 34 about a second pivot axis 336. A first unlocking action is configured to flip the trigger member 33 to cause the trigger member 33 to pivot about the second pivot axis 336 to abut against the locking tongue linkage member 34; a second unlocking action is configured to further push the trigger member 33 to cause the trigger member 33 to move and drive the locking tongue linkage member 34 to pivot about a first pivot axis 335, the locking tongue linkage member 34 driving the locking tongue 31 to move until the locking tongue 31 disengages from the locking tongue receiving portion 32, to cause the battery pack 2 to unlock relative to the housing 1.

As an example, the trigger member 33 is pivotally connected to a trigger member abutting portion 342 of the locking tongue linkage member 34 about the second pivot axis 336.

Further, a trigger member elastic reset member 334 is a torsion spring clamped between the trigger member 33 and the housing 1 or the battery pack housing 201.

The housing 1 or the battery pack housing 201 is provided with a trigger member 33 mounting slot 4, the trigger member 33 is mounted to the trigger member 33 mounting slot 4 and does not protrude from the housing 1 or the battery pack housing 201. Such a structure makes the trigger member 33 less likely to be accidentally triggered. Further, the trigger member 33 mounting slot 4 is provided with a limiting slot wall 41 for limiting a movement range of the trigger member 33 and a slot hole 42 for the trigger member 33 to extend into the housing 1 or the battery pack housing 201, and an operating gap 43 is left between one end of the trigger member 33 for applying an unlocking action and the trigger member 33 mounting slot.

Referring to Figures 12 and 15, in one embodiment, a sliding guide mechanism 5 is provided between the battery pack 2 and a battery pack mounting portion 101, the sliding guide mechanism 5 comprises a sliding groove 52 and a sliding rail 51 that cooperates with the sliding groove 52 for guidance. One of the battery pack 2 and the battery pack mounting portion 101 is provided with the sliding groove 52, the other is provided with the sliding rail 51 that cooperates with the sliding groove 52 for guidance, the battery pack 2 is connected to the battery pack mounting portion 101 through guided movement cooperation between the sliding groove 52 and the sliding rail 51.

It may be understood that a power tool of the present disclose may be a chainsaw 100, a grass trimmer, a blower, a pruning saw, or another power tool powered by a battery pack 2. As an example, the power tool may be a chainsaw 100, and further, the power tool may be a top-handle chainsaw 100.

A top-handle chainsaw 100 is a chainsaw 100 used for working on a tree. A working environment is relatively complex. A user hangs the chainsaw 100 on a body of the user when climbing a tree, and the chainsaw 100 will sway during a process of climbing the tree. Therefore, during the process of the user climbing the tree and when performing a tree operation, an unlocking button of a battery pack 2 may touch a branch or come into contacting with a body of the user, which may cause the battery pack 2 to be unlocked due to an accidental triggering, causing the battery pack 2 to abnormally separate from the chainsaw 100, injuring surrounding people or animals, or damaging an object, creating a significant safety hazard.

Referring to Figures 1 to 3, in the present embodiment, taking the power tool being a top-handle chainsaw 100 as an example. The power tool comprises the housing 1, the battery pack 2 and a locking assembly 33. The housing 1 is provided with the battery pack mounting portion 101, the battery pack 2 is detachably attached to the battery pack mounting portion 101, the battery pack 2 is used to provide electrical energy to the power tool, and the battery pack 2 comprises the battery pack housing 201.

Referring to Figures 4 and 5, the locking assembly 33 comprises a locking tongue 31, a locking tongue receiving portion 32, a trigger member 33 and a locking tongue elastic reset member 36. The locking tongue receiving portion 32 is configured as a locking slot. The locking tongue 31 comprises a protrusion 311, the locking slot comprises a recess 321, and the protrusion 311 of the locking tongue 31 can engage with the recess 321 of the locking slot, to cause the battery pack 2 to be locked relative to the housing 1. As an example, the locking tongue 31 and the trigger member 33 are movably disposed at the housing 1, and the locking slot is disposed at the battery pack housing 201. Specifically, the housing 1 is provided with the accommodating cavity 102 capable of accommodating the locking tongue 31 and the trigger member 33, and the accommodating cavity 102 has the through hole 1021 for the locking tongue 31 to extend into the battery pack mounting portion 101. The locking tongue elastic reset member 36 acts on the locking tongue 31 to apply an acting force toward a direction of the locking slot to the locking tongue 31.

Multiple sets of cooperating surfaces located at different sides of the battery pack 2 are included between the battery pack 2 and the battery pack mounting portion 101, and the locking assembly 33 is provided on one set of the cooperating surfaces. As an example, the battery pack mounting portion 101 is the battery pack 2 accommodating chamber with an upper opening. The power tool comprises the working head, taking a side of the battery pack 2 close to the working head of the power tool as a front side, and a side of the battery pack 2 away from the working head of the power tool as a rear side. Taking the top-handle chainsaw 100 as an example, the working head of the top-handle chainsaw 100 is its cutting assembly 62. Specifically, the battery pack mounting portion 101 mounts the battery pack 2 in a half-wrapped manner, the battery pack mounting portion 101 has an upper opening, five sets of cooperating surfaces located at the front side, the rear side, a left side, a right side and a bottom side of the battery pack 2 are included between the battery pack 2 and the battery pack mounting portion 101, and the locking assembly 33 is provided on one set of the cooperating surfaces located at the front side of the battery pack 2.

Referring to Figures 6 to 8, the trigger member 33 can act on the locking tongue 31 and link the locking tongue 31 to move. The trigger member 33 comprises the trigger member 33, a locking tongue linkage member 34 and a trigger member elastic reset member 334, the trigger member 33 and the locking tongue linkage member 34 are both movably disposed, and the locking tongue linkage member 34 can drive the locking tongue 31 to move. Specifically, the locking tongue linkage member 34 is pivotally disposed at the housing 1 about a first pivot axis 335, the locking tongue linkage member 34 comprises a locking tongue abutting portion 341 and a trigger member abutting portion 342, and the trigger member abutting portion 342 and the locking tongue abutting portion 341 synchronously pivot about the first pivot axis 335. The trigger member 33 is pivotally connected to the trigger member abutting portion 342 of the locking tongue linkage member 34 about a second pivot axis 336, and can move to abut against the trigger member abutting portion 342 and drive the trigger member abutting portion 342 to pivot about the first pivot axis 335, the locking tongue abutting portion 341 is used to abut against the locking tongue 31 and pivot about the first pivot axis 335 with the trigger member abutting portion 342 to thereby drive the locking tongue 31 to move in a direction away from the locking slot. The trigger member 33 comprises an initial position in a state where no unlocking action is applied, the trigger member elastic reset member 334 acts on the trigger member 33 to apply an acting force that causes it to move toward the initial position. As an example, the first pivot axis 335 is fixedly provided on the housing 1, and the trigger member elastic reset member 334 is a torsion spring clamped between the trigger member 33 and the housing 1.

The locking tongue abutting portion 341 and the trigger member abutting portion 342 are located at two sides of a plane passing through a pivot axis of the first pivot axis 335 and parallel to a movement direction of the locking tongue 31. Preferably, an angle between an extending direction of the locking tongue abutting portion 341 and an extending direction of the trigger member abutting portion 342 is 90°~180°. More preferably, the angle between the extending direction of the locking tongue abutting portion 341 and the extending direction of the trigger member abutting portion 342 is 150°~180°.

Referring to Figure 9, the locking tongue abutting portion 341 comprises an extending portion 341a disposed substantially along an extending direction and an abutting portion 341b connected to an outer end of the extending portion 341a, the abutting portion 341b has an outer contour with a smooth transition in a pivot direction of the locking tongue abutting portion 341. As an example, the locking tongue abutting portion 341 may comprise two abutting portions 341b symmetrically disposed, and the two abutting portions 341b are connected as a whole through the extending portion 341a.

In the present embodiment, the locking tongue linkage member 34 comprises two discrete elements, which are respectively an upper linkage member 342a and a lower linkage member 342b, the trigger member abutting portion 342 is formed on the upper linkage member 342a, the locking tongue abutting portion 341 is formed on the lower linkage member 342b, and the upper linkage member 342a and the lower linkage member 342b achieve a synchronous linkage by means of abutting cooperation. Specifically, the upper linkage member 342a and the lower linkage member 342b are respectively pivotally connected to the first pivot axis 335, an upper boss 342a1 is formed on an outer edge of the upper linkage member 342a, a lower boss 342b1 is formed on an outer edge of the lower linkage member 342b, and the upper boss 342a1 and the lower boss 342b1 abut against each other through an abutting surface disposed radially along the first pivot axis 335, to achieve the synchronous linkage of the upper linkage member 342a and the lower linkage member 342b.

The trigger member 33 is configured to: based on two unlocking actions applied to the trigger member 33, control the protrusion 311 of the locking tongue 31 to disengage from the recess 321 of the locking slot, to cause the battery pack 2 to unlock relative to the housing 1. The two unlocking actions comprise a first unlocking action and a second unlocking action, and the first unlocking action and the second unlocking action both act on the trigger member 33. The first unlocking action is configured to flip the trigger member 33 to cause it to pivot about the second pivot axis 336 to abut against the locking tongue linkage member 34; the second unlocking action is configured to further push the trigger member 33, to cause the trigger member 33 to move and drive the locking tongue linkage member 34 to pivot about the first pivot axis 335, the locking tongue linkage member 34 drives the locking tongue 31 to move until the protrusion 311 of the locking tongue 31 disengages from the recess 321 of the locking slot. Directions of acting forces applied to the trigger member 33 corresponding to the first unlocking action and the second unlocking action are different at least within a part of a moving stroke. In the present embodiment, the direction of the acting force applied to the trigger member 33 corresponding to the first unlocking action is substantially a direction shown by an arrow a in Figure 7, and the direction of the acting force applied to the trigger member 33 corresponding to the second unlocking action is substantially a direction shown by an arrow b in Figure 8.

Referring to Figures 6 to 8, the housing 1 is provided with a trigger member 33 mounting slot 4, the trigger member 33 mounting slot 4 is provided with a limiting slot wall 41 for limiting a movement range of the trigger member 33 and a slot hole 42 for the trigger member 33 to extend into the housing 1 so that the trigger member 33 abuts against the locking tongue linkage member 34, and an operating gap 43 is left between an end of the trigger member 33 used for applying the unlocking action and the trigger member 33 mounting slot 4. For ease of understanding, the end of the trigger member 33 used for applying the unlocking action is defined as an operating end 3311 of the trigger member 33, and an end of the trigger member 33 abutting against the locking tongue linkage member 34 is defined as a trigger end 3312 of the trigger member 33. Specifically, the trigger member 33 mounting slot 4 communicates with an inside of the housing 1, that is, communicates with the accommodating cavity 102. In a state where no unlocking action is applied to the trigger member 33, under an action of the torsion spring, the operating end 3311 of the trigger member 33 abuts above the limiting slot wall 41, and an upper surface of the trigger member 33 is substantially flush with a surface of the housing 1; when the unlocking action is applied to the trigger member 33, the trigger member 33 may pivot about the second pivot axis 336, and the trigger end 3312 of the trigger member 33 extends from the slot hole 42 into the housing 1 to abut against the locking tongue linkage member 34; an operating gap for an operator's finger to reach in so as to apply a flipping unlocking action to the trigger member 33 is left between the operating end 3311 of the trigger member 33 and the trigger member 33 mounting slot 4, the limiting slot wall 41 is recessed downwards relative to an upper end face of the trigger member 33 mounting slot 4, and the operating gap 43 into which the operator's finger can reach is formed among the operating end 3311 of the trigger member 33, the limiting slot wall 41 and the trigger member 33 mounting slot 4. The operator's finger may reach from the operating gap 43 on a front side of the operating end 3311 of the trigger member 33 into below the trigger member 33, making it easier to flip up the trigger member 33.

Referring to Figure 10, the locking tongue 31 is provided with an embedding slot 314 for the locking tongue abutting portion 341 of the locking tongue linkage member 34 to extend into to limit it in a pivot direction of the locking tongue abutting portion 341, and is further provided with a reset member mounting portion 313, one end of the locking tongue elastic reset member 36 is attached to the reset member mounting portion 313, and another end abuts against the housing 1. The locking tongue abutting portion 341 of the locking tongue linkage member 34 comprises two abutting portions 341b. The reset member mounting portion 313 is at least partially provided in the embedding slot 314, a middle part of a side wall of the embedding slot 314 away from the protrusion 311 is open for the locking tongue elastic reset member 36 to extend out, and two blocking walls 312 for respectively abutting against the two abutting portions 341b of the locking tongue linkage member 34 are formed on two sides of the side wall. Specifically, the locking tongue elastic reset member 36 is a spring, the reset member mounting portion 313 is a cylinder fixed in the embedding slot 314 with an increasingly narrow head, so that one end of the spring can be sleeved and clamped on a front end of the cylinder, and a cross section of the cylinder is cross-shaped. A spring limiting slot 103 is provided at a corresponding position on the housing 1 for limiting another end of the spring.

As an example, a longitudinal section of the recess 321 of the locking slot is a horn shape that gradually narrows from an outside to an inside, an outer part of a longitudinal section of the protrusion 311 of the locking tongue 31 gradually narrows along a direction approaching the locking slot, such structure is beneficial to an alignment of the locking tongue 31 with the locking slot, and a precision requirement for the locking tongue 31 in a movement direction is low. A limiting surface that cooperates and abuts with an outer end surface of the recess 321 of the locking slot is provided around the protrusion 311 of the locking tongue 31, so that the locking tongue 31 and the locking slot can be stably engaged, which can reduce a relative movement between the battery pack 2 and the housing 1.

A sliding guide mechanism 5 is provided between the battery pack 2 and the battery pack mounting portion 101, and the sliding guide mechanism 5 comprises a sliding groove 52 and a sliding rail 51 that cooperates with the sliding groove 52 for guidance. The sliding groove 52 is disposed at the battery pack mounting portion 101, the sliding rail 51 that cooperates with the sliding groove 52 for guidance is disposed at the battery pack 2, the battery pack 2 is movingly connected to the battery pack mounting portion 101 for guidance through a cooperation between the sliding rail 51 and the sliding groove 52, to achieve a mutual guided limitation between the battery pack 2 and the battery pack mounting portion 101. As an example, the battery pack mounting portion 101 has the upper opening, and the battery pack 2 is inserted into the battery pack mounting portion 101 from top to bottom along a longitudinal direction.

Specifically, as mentioned above, the power tool comprises the working head, taking the side of the battery pack 2 close to the working head of the power tool as the front side, and the side of the battery pack 2 away from the working head of the power tool as the rear side. The battery pack mounting portion 101 has the upper opening, the five sets of cooperating surfaces located at the front side, the rear side, the left side, the right side and the bottom side of the battery pack 2 are included between the battery pack 2 and the battery pack mounting portion 101, and the sliding groove 52 and the sliding rail 51 are disposed at one set of the cooperating surfaces located at the front side of the battery pack 2. Further, the locking assembly 33 is disposed at a cooperating surface between the sliding rail 51 and the sliding groove 52.

For the power tool of the present embodiment, when a user installs the battery pack 2, the user aligns the sliding rail 51 with the sliding groove 52, inserts the battery pack 2 into the battery pack mounting portion 101, and when the battery pack 2 is inserted into place, the locking tongue 31 can engage with the locking slot on the battery pack 2 under an action of the locking tongue elastic reset member 36, that is, the protrusion 311 of the locking tongue 31 extends into the recess 321 of the locking slot, to cause the battery pack 2 to lock relative to the housing 1.

When the user needs to detach the battery pack 2, the user first needs to unlock the battery pack 2, which specifically comprises following steps:
Step 1.1, that is, the first unlocking action, the trigger member 33 is in the initial position without an external force acting on it, that is, a state shown in Figure 6, the user applies an upward flipping acting force to the operating end 3311 of the trigger member 33, to cause the trigger member 33 to pivot about the second pivot axis 336 until the trigger end 3312 of the trigger member 33 abuts against the trigger member abutting portion 342 of the locking tongue linkage member 34, that is, a state shown in Figure 7;
Step 1.2, that is, the second unlocking action, further pushing the operating end 3311 of the trigger member 33, the trigger end 3312 of the trigger member 33 moving synchronously with the operating end 3311 of the trigger member 33 will drive the trigger member abutting portion 342 of the locking tongue linkage member 34 to pivot about the first pivot axis 335, and then drive the locking tongue abutting portion 341 of the locking tongue linkage member 34 to pivot synchronously about the first pivot axis 335, pushing the locking tongue 31 abutting against it to move until the protrusion 311 of the locking tongue 31 disengages from the recess 321 of the locking slot, that is, a state shown in Figure 8, at this time the battery pack 2 unlocks relative to the housing 1, and the battery pack 2 can be separated from the power tool.
Step 1.3, after the battery pack 2 separates from the power tool, the user releases the trigger member 33, such as letting go of a finger, and does not apply any acting force to the trigger member 33, at this time the locking tongue 31 will reset under the acting force of the locking tongue elastic reset member 36, the trigger member 33 will reset under an acting force of the torsion spring, to restore the locking assembly 33 to an initial state.

It may be understood that in the second unlocking action, a pushing action applied to the trigger member 33 may also be a flipping action or another action that can achieve an equivalent effect with it, which will not be repeated here.

In the power tool of the present embodiment, the user can unlock the battery pack 2 only by applying two unlocking actions of flipping and pushing to the trigger member 33, and a general tree branch touch cannot unlock the battery pack 2, which can effectively reduce a risk of the battery pack 2 being unlocked due to an accidental triggering, avoid injuring people or objects around a working environment, and effectively reduce a safety hazard.

In another embodiment, referring to Figures 11 to 16, the trigger member 33 is arranged to perform a guided movement along a first direction through a guide structure 337. The first unlocking action is configured to press the trigger member 33 to cause it to move along the first direction to abut against the locking tongue linkage member 34; the second unlocking action is configured to push the trigger member 33 along a second direction, to cause the trigger member 33 to move and drive the locking tongue linkage member 34 to pivot about the first pivot axis 335, the locking tongue linkage member 34 drives the locking tongue 31 to move until the locking tongue 31 disengages from the locking tongue receiving portion 32, to cause the battery pack 2 to unlock relative to the housing 1.

Further, referring to Figures 20 to 22, the guide structure 337 comprises a guide block 3371 pivotally disposed about the first pivot axis 335 and a guide groove 3372 provided on the trigger member 33 and cooperating with the guide block 3371. At this time, the first unlocking action is configured to press the trigger member 33 to cause it to move along the first direction to abut against the locking tongue linkage member 34; the second unlocking action is configured to push the trigger member 33 along the second direction, to cause the trigger member 33 to pivot about the first pivot axis 335 with the guide block 3371, and drive the locking tongue linkage member 34 to pivot about the first pivot axis 335, the locking tongue linkage member 34 drives the locking tongue 31 to move until the locking tongue 31 disengages from the locking tongue receiving portion 32, to cause the battery pack 2 to unlock relative to the housing 1.

The trigger member elastic reset member 334 is a spring provided between the guide block 3371 and the guide groove 3372.

Referring to Figures 17 to 19, the housing 1 or the battery pack housing 201 is provided with the trigger member 33 mounting slot 4, a limiting wall 44 is disposed at the trigger member 33 mounting slot 4, the trigger member 33 is provided with a blocking surface 3313 cooperating with the limiting wall 44, and the limiting wall 44 is used to block the blocking surface 3313, so that the trigger member 33 moves along the first direction and cannot move along the second direction before disengaging from a blocking of the limiting wall 44.

A guide wall 45 is also disposed at the housing 1 or the battery pack housing 201, and the guide wall 45 is used to guide the trigger member 33 to move along the second direction. As an example, the guide wall 45 extends substantially along the second direction. The guide wall 45 can play a certain guiding role for the trigger member 33, making it easier for the user to find an angle of force disclose that matches the second direction, making an unlocking action of the battery pack 2 easier to operate.

Referring to Figure 23, the trigger member 33 comprises a pressing surface 3314 provided substantially perpendicular to the first direction and a pushing surface 3315 provided substantially perpendicular to the second direction.

Referring to Figures 11 to 14, in the present embodiment, taking the power tool being the top-handle chainsaw 100 as an example. The power tool comprises the housing 1, the battery pack 2 and the locking assembly 33. The housing 1 is provided with the battery pack mounting portion 101, the battery pack 2 is detachably attached to the battery pack mounting portion 101, the battery pack 2 is used to provide electrical energy to the power tool, and the battery pack 2 comprises the battery pack housing 201.

Referring to Figures 15 and 16, the locking assembly 33 comprises the locking tongue 31, the locking tongue receiving portion 32, the trigger member 33 and the locking tongue elastic reset member 36. The locking tongue receiving portion 32 is configured as a locking slot. The locking tongue 31 comprises the protrusion 311, the locking slot comprises the recess 321, and the protrusion 311 of the locking tongue 31 can engage with the recess 321 of the locking slot, to cause the battery pack 2 to lock relative to the housing 1. As an example, the locking tongue 31 and the trigger member 33 are movably disposed at the housing 1, and the locking slot is provided on a battery pack housing 2012. Specifically, the housing 1 is provided with the accommodating cavity 102 capable of accommodating the locking tongue 31 and the trigger member 33, and the accommodating cavity 102 has the through hole 1021 for the locking tongue 31 to extend into the battery pack mounting portion 101. The locking tongue elastic reset member 36 acts on the locking tongue 31 to apply an acting force toward a direction of the locking slot to a locking tongue 313.

The battery pack 2 and the battery pack mounting portion 101 comprise multiple sets of cooperating surfaces located at different sides of the battery pack 2, and the locking assembly 33 is disposed at one set of the cooperating surfaces. As an example, the battery pack mounting portion 101 is the battery pack 2 accommodating chamber with an upper opening. The power tool comprises the working head, the working head of the top-handle chainsaw 100 is its cutting assembly 62, taking the side of the battery pack 2 close to the working head of the power tool as the front side, and the side of the battery pack 2 away from the working head of the power tool as the rear side. The battery pack mounting portion 101 mounts the battery pack 2 in a half-wrapped manner, specifically, the battery pack mounting portion 101 has the upper opening, the battery pack 2 and the battery pack mounting portion 101 comprise five sets of cooperating surfaces located at the front side, the rear side, the left side, the right side and the bottom side of the battery pack 2, and the locking assembly 33 is disposed at one set of cooperating surfaces located at the front side of the battery pack 2.

Referring to Figures 17 to 19, the trigger member 33 can act on the locking tongue 31 and link the locking tongue 31 to move. The trigger member 33 comprises the trigger member 33, the locking tongue linkage member 34 and the trigger member elastic reset member 334, the trigger member 33 and the locking tongue linkage member 34 are both movably disposed, and the locking tongue linkage member 34 can drive the locking tongue 31 to move. Further, the locking tongue linkage member 34 is pivotally disposed at the housing 1 about the first pivot axis 335, the locking tongue linkage member 34 comprises the locking tongue abutting portion 341 and the trigger member abutting portion 342, and the trigger member abutting portion 342 and the locking tongue abutting portion 341 synchronously pivot about the first pivot axis 335. Specifically, the locking tongue linkage member 34 has a through shaft hole 343 for the first pivot axis 335 to pass through, and the locking tongue linkage member 34 is pivotally disposed at the first pivot axis 335 through the through shaft hole 343.

Referring to Figures 20 to 22, the trigger member 33 is arranged to move guided along the first direction through the guide structure 337, and can move to abut against the trigger member abutting portion 342 and drive the trigger member abutting portion 342 to pivot about the first pivot axis 335, the locking tongue abutting portion 341 is used to abut against the locking tongue 31 and pivot about the first pivot axis 335 with the trigger member abutting portion 342 to thereby drive the locking tongue 31 to move in a direction away from the locking slot. The trigger member 33 comprises an initial position in a state where no unlocking action is applied, the trigger member elastic reset member 334 acts on the trigger member 33 to apply an acting force that causes it to move toward the initial position. As an example, the first pivot axis 335 is fixedly disposed at the housing 1, the guide structure 337 comprises the guide block 3371 pivotally disposed about the first pivot axis 335 and the guide groove 3372 provided on the trigger member 33 and cooperating with the guide block 3371. The trigger member elastic reset member 334 is a spring provided between the guide block 3371 and the guide groove 3372.

Specifically, the guide structure 337 is a linear guide structure 337, the guide block 3371 comprises multiple guide portions 3371a, and a space for accommodating the trigger member elastic reset member 334 is formed in a middle of the multiple guide portions 3371a. A lower end of the trigger member 33 is formed with the guide groove 3372 cooperating with the multiple guide portions 3371a of the guide block 3371, a space capable of accommodating the trigger member elastic reset member 334 is formed in a middle of the guide groove 3372, and a spring mounting seat 3372a for mounting the trigger member elastic reset member 334 is provided. The guide block 3371 is also provided with a guide boss 3371b for abutting against a lower end surface of the trigger member 33, used for limiting a guided movement stroke of the trigger member 33.

The locking tongue abutting portion 341 and the trigger member abutting portion 342 are located at two sides of a plane passing through a pivot axis of the first pivot axis 335 and parallel to a movement direction of the locking tongue 31. Preferably, an angle between an extending direction of the locking tongue abutting portion 341 and an extending direction of the trigger member abutting portion 342 is 90°~180°. More preferably, the angle between the extending direction of the locking tongue abutting portion 341 and the extending direction of the trigger member abutting portion 342 is 150°~180°.

The locking tongue abutting portion 341 comprises an extending portion 341a disposed substantially along an extending direction and an abutting portion 341b connected to an outer end of the extending portion 341a, the abutting portion 341b has an outer contour with a smooth transition in a pivot direction of the locking tongue abutting portion 341. As an example, the locking tongue abutting portion 341 may comprise two abutting portions 341b symmetrically disposed, and the two abutting portions 341b are connected as a whole through the extending portion 341a.

In the present embodiment, the locking tongue linkage member 34 is an integral structure, and the locking tongue abutting portion 341 and the trigger member abutting portion 342 are formed on the integral structure along different directions.

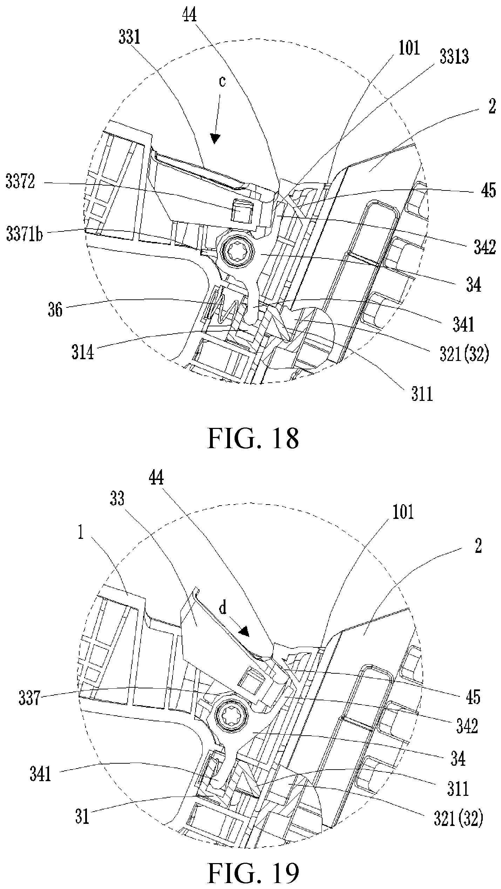

The trigger member 33 is configured to: based on two unlocking actions applied to the trigger member 33, control the protrusion 311 of the locking tongue 31 to disengage from the recess 321 of the locking slot, to cause the battery pack 2 to unlock relative to the housing 1. The two unlocking actions comprise a first unlocking action and a second unlocking action, and the first unlocking action and the second unlocking action both act on the trigger member 33. The first unlocking action is configured to press the trigger member 33 to cause it to move along the first direction to abut against the locking tongue linkage member 34; the second unlocking action is configured to push the trigger member 33 along the second direction, to cause the trigger member 33 to pivot about the first pivot axis 335, and drive the locking tongue linkage member 34 to pivot about the first pivot axis 335 until the protrusion 311 of the locking tongue 31 disengages from the recess 321 of the locking slot, to cause the battery pack 2 to unlock relative to the housing 1. In the present embodiment, the first direction is a direction shown by an arrow c in Figure 18, and the second direction is a direction shown by an arrow d in Figure 19.

The housing 1 is provided with the trigger member 33 mounting slot 4, the trigger member 33 is mounted to the trigger member 33 mounting slot 4, a limiting wall 41 is provided at the trigger member 33 mounting slot 4, the trigger member 33 is provided with the blocking surface 3313 cooperating with the limiting wall 41, and a limiting wall 44 is used to block the blocking surface 3313, so that the trigger member 33 can only move along the first direction and cannot move along the second direction before disengaging from a blocking of the limiting wall 44. Specifically, the trigger member 33 mounting slot 4 communicates with an inside of the housing 1, that is, communicates with the accommodating cavity 102, a guide wall 44 is formed by a slot wall of the trigger member 33 mounting slot 4, and the guide wall 44 extends substantially along the first direction to play a guiding and limiting role for the trigger member 33. The housing 1 is further provided with a guide wall 44 extending substantially along the second direction, and the guide wall 44 is used to guide the trigger member 33 to move along the second direction. An upper edge of the guide wall 44 connects with a lower edge of the limiting wall 44.

Referring to Figure 23, the trigger member 33 comprises the pressing surface 3314 provided substantially perpendicular to the first direction and the pushing surface 3315 provided substantially perpendicular to the second direction. An anti-slip pattern 3316 is disposed at the pushing surface 3315. Specifically, an upper surface of the trigger member 33 is provided with a groove, a bottom wall of the groove forms the pressing surface 3314, and one side wall of the groove forms the pushing surface 3315. The pressing surface 3314 is provided substantially perpendicular to the first direction, which is beneficial for the user to apply an acting force to the trigger member 33 to cause it to move along the first direction, the pushing surface 3315 is provided substantially perpendicular to the second direction, which is beneficial for the user to apply an acting force to the trigger member 33 to cause it to move along the second direction, and it is easier for the user to find an angle of force disclose that matches the first unlocking action and the second unlocking action, making the unlocking action of the battery pack 2 easier to operate.

For specific structures of the locking tongue 31 and the locking slot, and a guided cooperating structure and an electrical connection structure between the battery pack 2 and the battery pack mounting portion 101, reference may be made to the foregoing embodiments, which will not be repeated here.

For the power tool of the present embodiment, when a user installs the battery pack 2, the user aligns the sliding rail 51 with the sliding groove 52, inserts the battery pack 2 into the battery pack mounting portion 101, and when the battery pack 2 is inserted into place, the locking tongue 31 can engage with the locking slot on the battery pack 2 under an action of the locking tongue elastic reset member 36, that is, the protrusion 311 of the locking tongue 31 extends into the recess 321 of the locking slot, to cause the battery pack 2 to lock relative to the housing 1.

When the user needs to detach the battery pack 2, the user first needs to unlock the battery pack 2, which specifically comprises following steps:
Step 2.1, that is, the first unlocking action, the trigger member 33 is in the initial position without an external force acting on it, that is, a state shown in Figure 17, the user presses the pressing surface 3314 of the trigger member 33 substantially along the first direction to cause the trigger member 33 to move along the first direction to abut against the guide boss 3371b of the guide block 3371. At this time, a trigger member 3371 disengages from a blocking of the limiting wall 44, and abuts against the trigger member abutting portion 342 of the locking tongue linkage member 34, that is, a state shown in Figure 18;
Step 2.2, that is, the second unlocking action, the user pushes the pushing surface 3315 of the trigger member 33 substantially along the second direction to cause the trigger member 33 to pivot about the first pivot axis 335, driving the locking tongue linkage member 34 to pivot about the first pivot axis 335 to make a pivoting motion, until the protrusion 311 of the locking tongue 31 disengages from the recess 321 of the locking slot, that is, a state shown in Figure 19. At this time, the battery pack 2 unlocks relative to the housing 1, and the battery pack 2 can be separated from the power tool.
Step 2.3, after the battery pack 2 separates from the power tool, the user releases the trigger member 33, such as letting go of a finger, and does not apply any acting force to the trigger member 33. At this time, the locking tongue 31 will reset under the acting force of the locking tongue elastic reset member 36, and the trigger member 33 will reset under an acting force of the trigger member elastic reset member 334, to restore the locking assembly 33 to an initial state.

The user can unlock the battery pack 2 only by applying two unlocking actions of pressing and pushing to the trigger member 33, and a general tree branch touch cannot unlock the battery pack 2, which can effectively reduce a risk of the battery pack 2 being unlocked due to an accidental triggering, avoid injuring people or objects around a working environment, and effectively reduce a safety hazard.

Referring to Figures 1 and 12, the top-handle chainsaw 100 in the foregoing embodiment comprises a body 61, the cutting assembly 62, the top handle 63 (also referred to as a main handle) and the battery pack mounting portion 101, the cutting assembly 62 is disposed at a front side of the body 61, the battery pack mounting portion 101 is disposed at a rear side of the body 61, the top handle 63 is disposed at an upper side of the body 61 and located at a front side of the battery pack mounting portion 101. The top handle 63 comprises the top handle housing 631, the top handle housing 631 is a part of the housing 1, and the locking assembly 33 is at least partially disposed in the top handle housing 631. As an example, a driving motor (not shown) is provided in the body 61, the driving motor is powered by the battery pack 2, and drives the cutting assembly 62 to operate through a transmission assembly 64. The transmission assembly 64 comprises the guide bar 641 and a sprocket (not shown), the cutting assembly 62 comprises the saw chain 621 disposed around the guide bar 641 and the sprocket, the driving motor directly or indirectly drives the sprocket to rotate, and drives the saw chain 621 to reciprocate along the guide bar 641 to achieve a cutting function. The housing 1 at least comprises a housing of a part of the body 61, a housing of a part of the top handle 63 and the battery pack mounting portion 101. The trigger member 33 of the locking assembly 33 is disposed at an upper side of the top handle housing 631.

The top-handle chainsaw 100 further comprises a trigger 66 for controlling an operation of the driving motor. The trigger 66 is disposed at an upper side or a lower side of the top handle housing 631. The trigger member 33 and the trigger 66 are respectively disposed at a same side or opposite sides of the top handle housing 631, facilitating a user operation.

The top-handle chainsaw 100 further comprises an auxiliary handle 65, one end of the auxiliary handle 65 is connected to the body 61, and another end is connected to the top handle 63, and is located at a side of the body 61. Preferably, the auxiliary handle 65 is located at a left side of the body 61.

The top handle 63 of the top-handle chainsaw 100 is disposed at a front side of the battery pack 2, which makes a volume of a chainsaw 100 smaller and a structure more compact, and uses in cooperation with the auxiliary handle 65 disposed at the side of the body 61, which is convenient for an operator's arm to operate in a narrow space, and is particularly suitable for use in a complex operating environment such as a tree operation.

It may be understood that, in other embodiments, the locking assembly 33 may also be configured as: the locking tongue linkage member 34 and the locking tongue 31 are connected in a relatively fixed manner. As an example, the trigger member 33 is configured not to abut against the locking tongue linkage member 34 in an initial state. The first unlocking action is configured to apply an acting force along a third direction to the trigger member 33 to control the trigger member 33 to move to abut against the locking tongue linkage member 34, and the second unlocking action is configured to apply an acting force along a fourth direction to the trigger member 33, to cause the trigger member 33 to drive the locking tongue linkage member 34 to move, and then drive the locking tongue 31 to disengage from the locking tongue receiving portion 32. Wherein, the third direction and the fourth direction are different directions. For a specific implementation manner of a locking assembly 3 in this embodiment, it will not be repeated here.

Various technical features of the above embodiments can be combined arbitrarily. In order to make the description concise, not all possible combinations of the various technical features in the above embodiments are described. However, as long as there is no contradiction in a combination of these technical features, it should be considered as a scope recorded in this specification.

The above embodiments only express several implementations of the present disclose, and descriptions thereof are relatively specific and detailed, but they cannot therefore be understood as limiting a scope of the present disclose patent. It should be pointed out that, for a person of ordinary skill in the art, without departing from a concept of the present disclose, several modifications and improvements can also be made, which all belong to a protection scope of the present disclose. Therefore, the protection scope of the patent of the present disclose shall be subject to the appended claims.

In a description of the present disclose, it needs to be understood that an orientation or positional relationship indicated by terms such as "center", "longitudinal", "transverse", "length", "width", "thickness", "up", "down", "front", "rear", "left", "right", "vertical", "horizontal", "top", "bottom", "inner", "outer", "clockwise", "counterclockwise", "axial", "radial", "circumferential", etc. is based on an orientation or positional relationship shown in the drawings, and is only for facilitating the description of the present disclose and simplifying the description, rather than indicating or implying that a referred device or element must have a specific orientation, be constructed and operated in a specific orientation, and therefore cannot be understood as a limitation to the present disclose.

In addition, terms "first" and "second" are only used for descriptive purposes, and cannot be understood as indicating or implying relative importance or implicitly indicating a number of indicated technical features. Thus, a feature defined by "first" and "second" may explicitly or implicitly comprise at least one such feature. In the description of the present disclose, a meaning of "multiple" is at least two, such as two, three, etc., unless there are explicit and specific limitations otherwise.

In the present disclose, unless otherwise expressly specified and limited, terms such as "mount", "interconnect", "connect", and "fix" should be understood in a broad sense. For example, it may be a fixed connection, a detachable connection, or an integral connection; it may be a mechanical connection or an electrical connection; it may be a direct connection or an indirect connection through an intermediate medium, and it may be a communication between an inside of two elements or an interaction relationship between two elements, unless otherwise expressly limited. For a person of ordinary skill in the art, a specific meaning of the above terms in the present disclose can be understood according to specific situations.

In the present disclose, unless otherwise expressly specified and limited, a first feature being "above" or "under" a second feature may mean that the first feature and the second feature are in direct contact, or the first feature and the second feature are in indirect contact through an intermediate medium. Moreover, the first feature being "on top of", "above", and "over" the second feature may mean that the first feature is directly above or obliquely above the second feature, or simply means that a horizontal height of the first feature is higher than that of the second feature. The first feature being "under", "below", and "beneath" the second feature may mean that the first feature is directly below or obliquely below the second feature, or simply means that a horizontal height of the first feature is less than that of the second feature.

It should be noted that when an element is referred to as being "fixed to" or "disposed at" another element, it can be directly on the other element or there can be a centered element. When an element is considered to be "connected" to another element, it can be directly connected to the other element or there may be a centered element at a same time. Terms "vertical", "horizontal", "up", "down", "left", "right" and similar expressions used herein are merely for descriptive purposes and do not represent a unique implementation.

## Claims

1. A power tool, comprising:
a housing, provided with a battery pack mounting portion, the battery pack mounting portion being detachably connected to a battery pack, the battery pack being configured to provide electrical energy to the power tool;
a locking assembly, including a locking tongue, a locking tongue receiving portion and at least one trigger member;
wherein the locking tongue and the at least one trigger member are movably disposed at one of the housing and the battery pack, and the locking tongue receiving portion is disposed at the other of the housing and the battery pack;
the locking tongue is engaged with the locking tongue receiving portion to cause the battery pack to be locked relative to the housing; the locking tongue is disengaged from the locking tongue receiving portion to cause the battery pack to be unlocked relative to the housing;
the power tool is configured for an external force to be applied on the at least one trigger member, and at least two different actions generated by the at least one trigger member directly or indirectly drive the locking tongue to move relative to the locking tongue receiving portion, and the number of the at least one trigger member is one or more;
the battery pack comprises a battery pack housing, the battery pack housing extends along three orthogonal spatial directions (x, y, z) in directions of a width axis W, a thickness axis T, and a height axis H of the battery pack housing, the battery pack housing comprises a width extending on the width axis W, a thickness extending on the thickness axis T, and a height extending on the height axis H;
one of the at least one trigger member or a plurality of the at least one trigger member are all located at one side of a plane perpendicular to the thickness axis and passing through a midpoint of the thickness; or
one of the at least one trigger member or a plurality of the at least one trigger member are all located at one side of a plane perpendicular to the width axis and passing through a midpoint of the width.

2. A power tool, comprising:
a housing, provided with a battery pack mounting portion, the battery pack mounting portion being detachably connected to a battery pack, the battery pack being configured to provide electrical energy to the power tool;
a locking assembly, including a locking tongue, a locking tongue receiving portion and a trigger member;
wherein the locking tongue and the trigger member are movably disposed at one of the housing and the battery pack, and the locking tongue receiving portion is disposed at the other of the housing and the battery pack;
the locking tongue is engaged with the locking tongue receiving portion to cause the battery pack to be locked relative to the housing; the locking tongue is disengaged from the locking tongue receiving portion to cause the battery pack to be unlocked relative to the housing;
the power tool is configured for an external force to be applied on the trigger member, and at least two different actions generated by the trigger member directly or indirectly drive the locking tongue to move relative to the locking tongue receiving portion;
the battery pack comprises a battery pack housing, the battery pack housing extends along three orthogonal spatial directions (x, y, z) in directions of a width axis W, a thickness axis T, and a height axis H of the battery pack housing, the battery pack housing comprises a width extending on the width axis W, a thickness extending on the thickness axis T, and a height extending on the height axis H;
all of the trigger member are located at one side of a plane perpendicular to the thickness axis and passing through a midpoint of the thickness; or
all of the trigger member are located at one side of a plane perpendicular to the width axis and passing through a midpoint of the width.

3. A power tool, comprising:
a housing, provided with a battery pack mounting portion, the battery pack mounting portion being capable of allowing a battery pack to be inserted and connected, the battery pack being configured to provide electrical energy to the power tool;
a locking assembly, including a locking tongue, a locking tongue receiving portion and a trigger member;
wherein the locking tongue and the trigger member are movably disposed at one of the housing and the battery pack, and the locking tongue receiving portion is disposed at the other of the housing and the battery pack;
the locking tongue is engaged with the locking tongue receiving portion to cause the battery pack to be locked relative to the housing; the locking tongue is disengaged from the locking tongue receiving portion to cause the battery pack to be unlocked relative to the housing;
the power tool is configured for an external force to be applied on the trigger member, and at least two different actions generated by the trigger member directly or indirectly drive the locking tongue to move relative to the locking tongue receiving portion, and the number of the trigger member is one or more;
the battery pack comprises a battery pack housing, the battery pack housing comprises a first outer contour surface 71 and a second outer contour surface 72, the first outer contour surface 71 and the second outer contour surface 72 are oppositely disposed in a direction perpendicular to an insertion direction of the battery pack, at least a portion of the locking tongue or the locking tongue receiving portion is disposed at the first outer contour surface 71, and one of the trigger member or a plurality of the trigger member are all located at one side of the second outer contour surface 72.

4. A power tool, comprising:
a housing, provided with a battery pack mounting portion, the battery pack mounting portion being capable of allowing a battery pack to be inserted and connected, the battery pack being configured to provide electrical energy to the power tool;
a locking assembly, including a locking tongue, a locking tongue receiving portion and a trigger member;
wherein the locking tongue and the trigger member are movably disposed at one of the housing and the battery pack, and the locking tongue receiving portion is disposed at the other of the housing and the battery pack;
the locking tongue is engaged with the locking tongue receiving portion to cause the battery pack to be locked relative to the housing; the locking tongue is disengaged from the locking tongue receiving portion to cause the battery pack to be unlocked relative to the housing;
the power tool is configured for an external force to be applied on the trigger member, and at least two different actions generated by the trigger member directly or indirectly drive the locking tongue to move relative to the locking tongue receiving portion;
the battery pack comprises a battery pack housing, the battery pack housing comprises a first outer contour surface 71 and a second outer contour surface 72, the first outer contour surface 71 and the second outer contour surface 72 are oppositely disposed in a direction perpendicular to an insertion direction of the battery pack, at least a portion of the locking tongue or the locking tongue receiving portion is disposed on the first outer contour surface 71, and all of the trigger member are located at one side of the second outer contour surface 72.

5. A power tool, comprising:
a housing, provided with a battery pack mounting portion, the battery pack mounting portion being capable of allowing a battery pack to be inserted and connected, the battery pack being configured to provide electrical energy to the power tool;
a locking assembly, including a locking tongue, a locking tongue receiving portion and a trigger member;
wherein the locking tongue and the trigger member are movably disposed at one of the housing and the battery pack, and the locking tongue receiving portion is disposed at the other of the housing and the battery pack;
the locking tongue is engaged with the locking tongue receiving portion to cause the battery pack to be locked relative to the housing; the locking tongue is disengaged from the locking tongue receiving portion to cause the battery pack to be unlocked relative to the housing;
the number of the trigger member is only one, and the power tool is configured for an external force to be applied on the trigger member, and at least two different actions generated by the trigger member directly or indirectly drive the locking tongue to move relative to the locking tongue receiving portion.

6. The power tool according to any one of claims 1 to 5, wherein the at least two different actions comprise one action generated by the trigger member, which realizes a movement of the trigger member and the battery pack is not unlocked relative to the housing; and another action generated by the trigger member, which realizes a movement of the trigger member and drives the locking tongue to move, so as to unlock the battery pack relative to the housing.

7. The power tool according to any one of claims 1 to 6, wherein one action generated by the trigger member realizes a movement of the trigger member along a first stroke trajectory; another action generated by the trigger member realizes a movement of the trigger member along a second stroke trajectory different from the first stroke trajectory;
the first stroke trajectory of the trigger member and the second stroke trajectory of the trigger member are not on a straight line, or a direction of movement of the first stroke trajectory of the trigger member and a direction of movement of the second stroke trajectory of the trigger member are different.

8. The power tool according to claim 7, wherein one action generated by the trigger member realizes a movement of the trigger member along a first stroke trajectory; another action generated by the trigger member realizes a movement of the trigger member along a second stroke trajectory different from the first stroke trajectory;
the power tool is configured to, at least based on the first stroke trajectory and the second stroke trajectory, unlock the battery pack relative to the housing.

9. The power tool according to any one of claims 7 to 8, wherein the number of the trigger member is only one, and the first stroke trajectory and the second stroke trajectory are generated by a sequential movement of same the trigger member; or
the number of the trigger member is at least two, and the first stroke trajectory and the second stroke trajectory are generated by a movement of different the trigger member.

10. The power tool according to any one of claims 1 to 9, wherein the at least two different actions comprise one action generated by the trigger member, which realizes a movement of the trigger member and the locking tongue does not move; and another action generated by the trigger member, which realizes a movement of the trigger member and drives the locking tongue to move to disengage from the locking tongue receiving portion.

11. The power tool according to any one of claims 1 to 10, wherein the number of the trigger member is only one, one action generated by the trigger member realizes a movement of the trigger member and the battery pack is not unlocked relative to the housing; and another action generated by the trigger member realizes a movement of the trigger member and drives the locking tongue to move to disengage from the locking tongue receiving portion.

12. The power tool according to any one of claims 1 to 10, wherein the number of the trigger member is only one, and the at least two different actions are sequentially generated on same the trigger member.

13. The power tool according to any one of claims 1 to 12, wherein the locking assembly further comprises a locking tongue linkage member, one action generated by the trigger member realizes that the locking tongue is at a position allowed to move; another action generated by the trigger member realizes a movement of the locking tongue linkage member and drives the locking tongue to move relative to the locking tongue receiving portion.

14. The power tool according to any one of claims 1, 2 and 4 to 10 and 13, wherein the trigger member further comprises a first trigger member, and a restraining member for locking the first trigger member, the restraining member comprises a first position and a second position that generates a movement relative to the housing;
at the first position, the restraining member does not allow the first trigger member to drive the locking tongue to move;
at the second position, the first trigger member is configured to drive the locking tongue to move.

15. The power tool according to claim 14, wherein one action generated by the trigger member is configured as a movement trajectory generated by the restraining member, and another action generated by the trigger member is configured as a movement trajectory generated by the first trigger member;
the movement trajectory generated by the restraining member realizes a movement of the restraining member from the first position to the second position, so as to allow the first trigger member to be able to drive the locking tongue to move; the movement trajectory generated by the first trigger member realizes that the first trigger member drives the locking tongue to disengage from the locking tongue receiving portion.

16. The power tool according to any one of claims 1, 2, 4 to 10, 13, wherein the trigger member comprises a first trigger member and a second trigger member, the locking tongue comprises a first locking tongue and a second locking tongue that are independently movable, the first trigger member is configured to drive the first locking tongue to move, and the second trigger member is configured to drive the second locking tongue to move.

17. The power tool according to claim 16, wherein one action generated by the first trigger member is configured as a movement trajectory generated by the first trigger member, which realizes that the first trigger member drives the first locking tongue to disengage from the locking tongue receiving portion, and another action generated by the second trigger member is configured as a movement trajectory generated by the second trigger member, which realizes that the second trigger member drives the second locking tongue to disengage from the locking tongue receiving portion.

18. The power tool according to any one of claims 1, 2, 4 to 7, 9, wherein the trigger member comprises a first trigger member and a second trigger member, the number of the locking tongue is only one, the locking assembly further comprises a first moving member and a second moving member that are independently movable, the first moving member and the second moving member each comprise a locking position and an unlocking position, the first trigger member is configured to drive the first moving member to move between the locking position and the unlocking position, the second trigger member is configured to drive the second moving member to move between the locking position and the unlocking position, when at least one of the first moving member or the second moving member is at the locking position, the locking tongue is engaged with the locking tongue receiving portion; when both the first moving member and the second moving member are at the unlocking position, the locking tongue is disengaged from the locking tongue receiving portion.

19. The power tool according to claim 18, wherein one action generated by the first trigger member is configured as a movement of the first trigger member, so as to realize driving the first moving member to move to the unlocking position; another action generated by the second trigger member is configured as a movement of the second trigger member, so as to realize driving the second moving member to move to the unlocking position.

20. The power tool according to any one of claims 1 to 19, wherein all of the trigger member and all of the locking tongue are located at one side of a plane perpendicular to the thickness axis and passing through a midpoint of the thickness; or
all of the trigger member and all of the locking tongue are located at one side of a plane perpendicular to the width axis and passing through a midpoint of the width.

21. The power tool according to any one of claims 1 to 19, wherein all of the trigger member, all of the locking tongue, and all of the locking tongue receiving portion are located at one side of a plane perpendicular to the thickness axis and passing through a midpoint of the thickness; or
all of the trigger member, all of the locking tongue, and all of the locking tongue receiving portion are located at one side of a plane perpendicular to the width axis and passing through a midpoint of the width.

22. The power tool according to any one of claims 1 to 19, wherein
all of the trigger member and all of the locking tongue are located at one side of the second outer contour surface 72.

23. The power tool according to any one of claims 1 to 19, wherein all of the trigger member, all of the locking tongue, and all of the locking tongue receiving portion are located at one side of the second outer contour surface 72.

24. The power tool according to any one of claims 1 to 20, wherein the locking tongue and the trigger member are movably disposed at the housing, the locking tongue receiving portion is disposed at the battery pack, the number of the locking tongue receiving portion is only one, and the locking tongue receiving portion is configured to be engaged with at least one of the locking tongue.

25. The power tool according to any one of claims 3, 4, 6 to 19, 22, 23, wherein the battery pack further comprises a battery pack terminal base, the battery pack terminal base comprises a plurality of terminals electrically connected to the power tool, in a direction perpendicular to an insertion direction of the battery pack, the battery pack terminal base is disposed close to the first outer contour surface 71, and is disposed away from the second outer contour surface 72.

26. The power tool according to any one of claims 1 to 25, wherein the power tool is a chainsaw, the chainsaw comprising:
a cutting assembly, mounted to the housing, the cutting assembly comprising a guide bar and a saw chain surrounding the guide bar, the guide bar providing support and guiding for the saw chain; and
a top handle, for a user to hold;
the cutting assembly is disposed at a front side of the housing in a longitudinal direction of the chainsaw; the battery pack mounting portion is disposed at a rear side of the housing in the longitudinal direction of the chainsaw; the top handle is disposed above the housing in a height direction of the chainsaw.

27. The power tool according to any one of claims 1 to 26, wherein the battery pack is inserted and mounted to the battery pack mounting portion in a manner that the first outer contour surface 71 and the second outer contour surface 72 of the battery pack are spaced apart and oppositely disposed in a first direction perpendicular to a plane where the guide bar is located, at least a portion of the locking tongue or the locking tongue receiving portion is disposed at the first outer contour surface 71, and one of the trigger member or a plurality of the trigger member are all located at one side of the second outer contour surface 72, or
the battery pack is inserted and mounted to the battery pack mounting portion in a manner that the first outer contour surface 71 and the second outer contour surface 72 of the battery pack are spaced apart and oppositely disposed in a second direction parallel to the plane where the guide bar is located, at least a portion of the locking tongue or the locking tongue receiving portion is disposed at the first outer contour surface 71, and one of the trigger member or a plurality of the trigger member are all located at one side of the second outer contour surface 72.

28. A power tool, comprising:
a housing, provided with a battery pack mounting portion, the battery pack mounting portion being detachably connected to a battery pack, the battery pack being configured to provide electrical energy to the power tool;
a locking assembly, including a locking tongue, a locking tongue receiving portion and a trigger member, the trigger member acts on the locking tongue and drives the locking tongue to move;
wherein the locking tongue and the trigger member are movably disposed at one of the housing and the battery pack, and the locking tongue receiving portion is disposed at the other of the housing and the battery pack;
the locking tongue is engaged with the locking tongue receiving portion to cause the battery pack to be locked relative to the housing; the locking tongue is disengaged from the locking tongue receiving portion to cause the battery pack to be unlocked relative to the housing;
the power tool is configured for an external force to be applied on the trigger member, and at least two different actions generated by the trigger member directly or indirectly drive the locking tongue to move relative to the locking tongue receiving portion, the trigger member comprises a first trigger member and a second trigger member;
the battery pack comprises a battery pack housing, the battery pack housing extends along three orthogonal spatial directions (x, y, z) in directions of a width axis W, a thickness axis T, and a height axis H of the battery pack housing, the battery pack housing comprises a width extending on the width axis W, a thickness extending on the thickness axis T, and a height extending on the height axis H;
the first trigger member and the second trigger member are both located at one side of a plane perpendicular to the thickness axis and passing through a midpoint of the thickness; or
the first trigger member and the second trigger member are both located at one side of a plane perpendicular to the width axis and passing through a midpoint of the width.

29. A power tool, comprising:
a housing, provided with a battery pack mounting portion, the battery pack mounting portion being capable of allowing a battery pack to be inserted and connected, the battery pack being configured to provide electrical energy to the power tool;
a locking assembly, including a locking tongue, a locking tongue receiving portion and a trigger member;
wherein the locking tongue and the trigger member are movably disposed at one of the housing and the battery pack, and the locking tongue receiving portion is disposed at the other of the housing and the battery pack;
the locking tongue is engaged with the locking tongue receiving portion to cause the battery pack to be locked relative to the housing; the locking tongue is disengaged from the locking tongue receiving portion to cause the battery pack to be unlocked relative to the housing;
the power tool is configured for an external force to be applied on the trigger member, and at least two different actions generated by the trigger member directly or indirectly drive the locking tongue to move relative to the locking tongue receiving portion, the trigger member comprises a first trigger member and a second trigger member;
the battery pack comprises a battery pack housing, the battery pack housing comprises a first outer contour surface 71 and a second outer contour surface 72, the first outer contour surface 71 and the second outer contour surface 72 are oppositely disposed in a direction perpendicular to an insertion direction of the battery pack, at least a portion of the locking tongue or the locking tongue receiving portion is disposed at the first outer contour surface 71, and the first trigger member and the second trigger member are both located at one side of the second outer contour surface 72.

30. A power tool, comprising:
a housing, provided with a battery pack mounting portion, the battery pack mounting portion being detachably connected to a battery pack, the battery pack being configured to provide electrical energy to the power tool;
a locking assembly, including a locking tongue, a locking tongue receiving portion and a trigger member, the trigger member acts on the locking tongue and drives the locking tongue to move;
wherein the locking tongue and the trigger member are movably disposed at one of the housing and the battery pack, and the locking tongue receiving portion is disposed at the other of the housing and the battery pack;
the locking tongue is engaged with the locking tongue receiving portion to cause the battery pack to be locked relative to the housing; the locking tongue is disengaged from the locking tongue receiving portion to cause the battery pack to be unlocked relative to the housing;
the power tool is configured for an external force to be applied on the trigger member, and at least two different actions generated by the trigger member directly or indirectly drive the locking tongue to move relative to the locking tongue receiving portion, the trigger member comprises a first trigger member and a second trigger member;
in a direction perpendicular to an insertion direction, the first trigger member and the second trigger member are both located at one side of the battery pack.

31. The power tool according to any one of claims 28 to 30, wherein the at least two different actions comprise one action generated by the first trigger member, which realizes a movement of the first trigger member, and the battery pack is not unlocked relative to the housing; and another action generated by the second trigger member, which realizes a movement of the second trigger member and drives the locking tongue to move, so as to unlock the battery pack relative to the housing.

32. The power tool according to claim 31, wherein the one action generated by the first trigger member realizes a movement of the first trigger member along a first stroke trajectory; the other action generated by the second trigger member realizes a movement of the second trigger member along a second stroke trajectory different from the first stroke trajectory;
the first stroke trajectory and the second stroke trajectory are not on a straight line, or a direction of movement of the first stroke trajectory and a direction of movement of the second stroke trajectory are different.

33. The power tool according to claim 31, wherein one action generated by the first trigger member realizes a movement of the first trigger member along a first stroke trajectory; another action generated by the second trigger member realizes a movement of the second trigger member along a second stroke trajectory different from the first stroke trajectory;
the power tool is configured to, at least based on the first stroke trajectory and the second stroke trajectory, unlock the battery pack relative to the housing.

34. The power tool according to any one of claims 28 to 30, wherein the locking tongue comprises a first locking tongue and a second locking tongue that are independently movable from each other, the first trigger member is configured to drive the first locking tongue to move, and the second trigger member is configured to drive the second locking tongue to move.

35. The power tool according to claim 34, wherein one action generated by the first trigger member is configured as a movement trajectory generated by the first trigger member, which realizes that the first trigger member drives the first locking tongue to disengage from the locking tongue receiving portion, and another action generated by the second trigger member is configured as a movement trajectory generated by the second trigger member, which realizes that the second trigger member drives the second locking tongue to disengage from the locking tongue receiving portion.

36. The power tool according to any one of claims 28 to 30, wherein the trigger member comprises a first trigger member and a second trigger member, the number of the trigger member is only one, the locking assembly further comprises a first moving member and a second moving member that are independently movable, the first moving member and the second moving member each comprise a locking position and an unlocking position, the first trigger member is configured to drive the first moving member to move between the locking position and the unlocking position, the second trigger member is configured to drive the second moving member to move between the locking position and the unlocking position, when at least one of the first moving member and the second moving member is at the locking position, the locking tongue is engaged with the locking tongue receiving portion; when both the first moving member and the second moving member are at the unlocking position, the locking tongue is disengaged from the locking tongue receiving portion.

37. The power tool according to claim 36, wherein one action generated by the trigger member is configured as a movement of the first trigger member, so as to drive the first moving member to move to the unlocking position; another action generated by the trigger member is configured as a movement of the second trigger member, so as to drive the second moving member to move to the unlocking position.

38. The power tool according to any one of claims 28 to 30, wherein the trigger member further comprises a first trigger member, and a second trigger member for locking the first trigger member, the second trigger member comprises a first position and a second position that generates a movement relative to the housing;
at the first position, the second trigger member does not allow the first trigger member to drive the locking tongue to move;
at the second position, the first trigger member is able to drive the locking tongue to move.

39. The power tool according to claim 38, wherein one action generated by the trigger member is configured as a movement trajectory generated by the second trigger member, and another action generated by the trigger member is configured as a movement trajectory generated by the first trigger member;
the movement trajectory generated by the second trigger member realizes a movement of the second trigger member from the first position to the second position, so as to allow the first trigger member to be able to drive the locking tongue to move; the movement trajectory generated by the first trigger member realizes that the first trigger member drives the locking tongue to disengage from the locking tongue receiving portion.

40. An unlocking method for a battery pack configured with a power tool, the power tool comprising: a housing and a locking assembly provided on the housing, the housing being provided with a battery pack mounting portion, the battery pack mounting portion for a battery pack to be inserted and connected, the battery pack being configured to provide electrical energy to the power tool; the locking assembly comprising a locking tongue, a locking tongue receiving portion and a trigger member, the locking tongue and the trigger member being movably disposed at one of the housing and the battery pack, the locking tongue receiving portion being provided on the other of the housing and the battery pack,
wherein the unlocking method comprises at least following steps:
a first step: an external force is applied to the trigger member, the trigger member moves along a first stroke trajectory, to achieve the battery pack not unlocking relative to the housing;
a second step: the external force continues to be applied to the trigger member, the trigger member moves along a second stroke trajectory, to achieve the trigger member moving and driving the locking tongue to move, the second stroke trajectory being different from the first stroke trajectory;
the number of the trigger member is only one, the trigger member in the first step and the second step being the same.

41. The unlocking method according to claim 40, wherein in the second step, the trigger member drives the locking tongue to move, and the battery pack unlocks relative to the housing.

42. The unlocking method according to any one of claims 40-41, wherein a direction of movement of the first stroke trajectory of the trigger member and a direction of movement of the second stroke trajectory of the trigger member are different, or
the first stroke trajectory and the second stroke trajectory are not on a same straight line.

43. The unlocking method according to any one of claims 40-42, wherein the first stroke trajectory and the second stroke trajectory are generated by a sequential movement of the trigger member.

44. The unlocking method according to any one of claims 40-43, wherein the locking tongue and the trigger member are both movably disposed at the housing, the locking tongue receiving portion is disposed at the battery pack, the number of the locking tongue receiving portion is only one, the locking tongue receiving portion being configured to engage with the locking tongue.

45. The unlocking method according to any one of claims 40 to 44, wherein the power tool is a chainsaw, the chainsaw comprising:
a cutting assembly, mounted to the housing, the cutting assembly comprising a guide bar and a saw chain disposed around the guide bar, the guide bar providing support for and guiding the saw chain; and
a top handle, for a user to hold;
the cutting assembly is disposed at a front side of the housing in a longitudinal direction of the chainsaw; the battery pack mounting portion is disposed at a rear side of the housing in the longitudinal direction of the chainsaw; the top handle is disposed above the housing in a height direction of the chainsaw.

46. A power tool, comprising:
a housing, the housing being provided with a battery pack mounting portion, the battery pack mounting portion for a battery pack to be inserted and connected, the battery pack being configured to provide electrical energy to the power tool;
a locking assembly, comprising a locking tongue, a locking tongue receiving portion and a trigger member, the trigger member being capable of driving the locking tongue to move relative to the locking tongue receiving portion;
wherein the locking tongue receiving portion comprises a first receiving portion and a second receiving portion disposed front and rear in an insertion direction;
the locking tongue is engaged with at least one of the first receiving portion or the second receiving portion, to cause the battery pack to be locked relative to the housing; the locking tongue disengages from the first receiving portion and the second receiving portion, to cause the battery pack to be unlocked relative to the housing;
the locking tongue and the trigger member are movably disposed at one of the housing and the battery pack, the locking tongue receiving portion being disposed at the other of the housing and the battery pack.

47. The power tool according to claim 46, wherein the battery pack comprises a battery pack housing, the battery pack housing along three orthogonal spatial directions (x, y, z) extends in directions of a width axis W, a thickness axis T, and a height axis H of the battery pack housing, the battery pack housing comprising a width extending on the width axis W, a thickness extending on the thickness axis T, and a height extending on the height axis H, the trigger member and the locking tongue are both located on one side of a plane perpendicular to the thickness axis and passing through a midpoint of the thickness; or, the trigger member and the locking tongue are both located on one side of a plane perpendicular to the width axis and passing through a midpoint of the width.

48. The power tool according to claim 46, wherein the battery pack comprises a battery pack housing, the battery pack housing comprising a first outer contour surface 71 and a second outer contour surface 72 disposed at intervals, the first outer contour surface 71 and the second outer contour surface 72 are oppositely disposed in a direction perpendicular to an insertion direction of the battery pack, at least a portion of the locking tongue or the locking tongue receiving portion is disposed at the first outer contour surface 71, the trigger member and the locking tongue are both located at one side of the second outer contour surface 72.

49. The power tool according to any one of claims 46-48, wherein the power tool is configured to, based on an external force applied to the trigger member, drive the locking tongue to move a first stroke and a second stroke;
the locking tongue moves the first stroke, to cause the locking tongue to disengage from the first receiving portion, and the battery pack does not unlock relative to the housing;
the locking tongue moves the second stroke, to cause the locking tongue to disengage from the second receiving portion, thereby causing the battery pack to unlock relative to the housing.

50. The power tool according to claim 49, wherein based on an external force applied to the trigger member, the locking tongue is driven to sequentially move the first stroke and the second stroke.

51. The power tool according to any one of claims 46 to 50, wherein the locking assembly comprises only one the locking tongue;
the locking tongue engages with the first receiving portion, to cause the battery pack to be locked in a first position relative to the housing; the locking tongue engages with the second receiving portion, to cause the battery pack to be locked in a second position relative to the housing.

52. The power tool according to claim 51, wherein only when the locking tongue engages with the first receiving portion, the battery pack and the power tool form an electrical connection.

53. The power tool according to any one of claims 46-52, wherein the number of the trigger member is only one, and the trigger member drives the locking tongue to move the first stroke or move the second stroke.

54. The power tool according to any one of claims 46 to 53, wherein the locking tongue and the trigger member are movably disposed at the housing, and the first receiving portion and the second receiving portion are disposed at the battery pack.

55. The power tool according to any one of claims 46 to 54, wherein the power tool is a chainsaw, the chainsaw further comprising:
a cutting assembly, mounted to the housing, the cutting assembly comprising a guide bar and a saw chain disposed around the guide bar, the guide bar providing support for and guiding the saw chain; and
a top handle, for a user to hold;
the cutting assembly is disposed at a front side of the housing in a longitudinal direction of the chainsaw; the battery pack mounting portion is disposed at a rear side of the housing in the longitudinal direction of the chainsaw; the top handle is disposed above the housing in a height direction of the chainsaw.
